# EUROPEAN PATENT SPECIFICATION

(11) **EP 3 335 955 B1**
(45) Date of publication and mention of the grant of the patent: **08.07.2020**
(21) Application number: 16837121.9
(22) Date of filing: 17.08.2016
(51) Int. Cl.: B62J 99/00, B60W 30/12, B60W 30/02, B60W 30/16, B60W 30/045, B60T 8/17, B60W 30/10, B60T 8/1755, B60W 30/14

(54) **LEANING VEHICLE**
NEIGEFAHRZEUG
VÉHICULE À INCLINAISON

(30) Priority: 17.08.2015 JP 2015160461; 17.08.2015 JP 2015160460; 17.08.2015 JP 2015160459
(43) Date of publication of application: 20.06.2018
(73) Proprietor: Yamaha Hatsudoki Kabushiki Kaisha, Iwata-shi, Shizuoka 438-8501 (JP)
(72) Inventor: KANEHARA, Masatomo, Iwata-shi Shizuoka 438-8501 (JP); NAKAMURA, Ikuo, Iwata-shi Shizuoka 438-8501 (JP); HARAZONO, Yasunobu, Iwata-shi Shizuoka 438-8501 (JP); FUJITO, Manabu, Iwata-shi Shizuoka 438-8501 (JP); FUJII, Shigeru, Iwata-shi 438-8501 (JP)
(74) Representative: Stöckeler, Ferdinand
(86) International application number: PCT/JP2016/073950
(87) International publication number: WO 2017/030132

(56) References cited:
- DE-A1-102007 053 274
- JP-A- 2001 171 389
- JP-A- 2006 088 771
- JP-A- 2006 088 771
- JP-A- 2006 089 035
- JP-A- 2006 089 035
- JP-A- 2012 224 316
- JP-A- 2014 034 379
- JP-A- 2015 063 246
- JP-A- 2015 120 363
- US-A1- 2010 042 282
- US-A1- 2015 175 160

## Description

### [Technical Field]

The present invention relates to a leaning vehicle, and particularly relates to a leaning vehicle including an active driving assist device which is configured to actively assist a driver.

### [Background Art]

Passenger vehicles are provided with various active driving assist devices which actively assist the drivers. For example, there is an active driving assist device which performs control so that the inter-vehicle distance between a preceding vehicle and the host vehicle is maintained. PTL 1, for example, proposes to apply an active driving assist device mounted on such a passenger vehicle to a leaning vehicle. The leaning vehicle is a vehicle which includes a vehicle body frame structured to lean rightward of the vehicle when turning right and lean leftward of the vehicle when turning left. In this specification, passenger vehicles are vehicles used for transporting passengers and not including leaning vehicles.

The active driving assist device described above detects the inter-vehicle distance between the host vehicle on which the device is mounted and the preceding vehicle and controls acceleration so that the inter-vehicle distance between the vehicles is maintained to be a predetermined distance. When the preceding vehicle deaccelerates, the active driving assist device deaccelerates the host vehicle to maintain the inter-vehicle distance. When the preceding vehicle accelerates, the active driving assist device accelerates the host vehicle within a running speed range to maintain the inter-vehicle distance.

DE 10 2007 053274 A1 discloses a rider support system for motorcycles. The rider support system has a sensor device for detecting a traveling direction or an obstacle present substantially in the traveling direction. The sensor device calculates a flat safe zone ahead of the two-wheeler and/or a three-dimensional safe zone in dependence upon at least one traveling parameter, a rider parameter, a two-wheeler parameter and/or an environment parameter. The system outputs a signal when the two-wheeler is present within the safe zone (13).

US 2015/175160 A1 discloses an inter-vehicle control apparatus. A controller performs acceleration control of an own vehicle, based on an actual inter-vehicle physical quantity and a target inter-vehicle physical quantity. A limiter sets a limit value for a target jerk during the acceleration control. A detector detects an occurrence of an event in which the inter-vehicle distance becomes discontinuously shorter or an event in which a target inter-vehicle distance corresponding to the target inter-vehicle physical quantity becomes discontinuously longer. A determiner determines a risk of collision with the preceding vehicle, based on an operation state of the preceding vehicle in relation to the own vehicle. When at least one of the events is detected, the limiter sets the limit value to a value based on the risk of collision such that change in deceleration of the own vehicle is kept lower as the risk of collision decreases.

JP 2006 088771 A discloses a travel controller. When a two-wheeled vehicle as a preceding vehicle is apt to pass and the two-wheeled vehicle is decelerating, the travel controller previously increases a target inter-vehicle distance and provides a zippy following characteristic. When the two-wheeled vehicle as the preceding vehicle is apt to pass and the two-wheel vehicle is accelerating, the travel controller previously increases the target inter-vehicle distance and provides a moderate following characteristic.

US 2010/042282 A1 teaches a travel control plan generating system, in which a peripheral vehicle existing on the periphery of a home vehicle is recognized and peripheral vehicle information such as the relative distance, angle and speed to the home vehicle is calculated. On the basis of a detection value from a home vehicle sensor, a state estimated value of the home vehicle, such as the home vehicle position, yaw rate, lateral position within a lane, lateral velocity, yaw angle relative to road shape, and so on, at the corresponding point in time is calculated.

JP 2006 089035 A discloses an inter-vehicle distance control device, in which the inter-vehicle distance to a preceding vehicle is detected by an inter-vehicle distance detection part and controlled by an inter-vehicle distance control part. A lane width is detected by a lane width detection part, and when the detected width by the inter-vehicle distance detection part relative to the following inter-vehicle distance is smaller than a lane width detected value, a sensing possibility determination part determines that sensing is impossible, and a control force mitigation releasing part releases the inter-vehicle distance control gradually corresponding to the vehicle speed.

JP 2001 171389 A teaches a travel control system, in which image information on a preceding vehicle in an adjacent traffic lane as an output of an image processor is used in recognizing the adjacent preceding vehicle.

### [Citation List]

### [Patent Literatures]

[PTL 1] Publication of Japanese Translation of PCT international application No. 2007-531654 (Tokuhyo 2007-531654)

### [Summary of Invention]

### [Technical Problem]

Control by such an active driving assist device is required to conform to the driver's feeling as much as possible. The control by the active driving assist device taught by PTL 1, however, may not conform to the driver's feeling in some running situations of the leaning vehicle.

An object of the present invention is to provide a leaning vehicle including an active driving assist device which is capable of actively assisting a driver of the leaning vehicle in conformity with the driver's feeling.

### [Solution to Problem and Advantageous Effects of Invention]

The inventors of the present invention reconsidered the characteristics of leaning vehicles.
A leaning vehicle is narrow in width. The width of the leaning vehicle is equal to or shorter than the half of the width of a lane. In one lane, therefore, two leaning vehicles can stop side by side. Furthermore, because of the narrow width, the leaning vehicle is, for example, able to selectively run on a right part, a left part, or a central part of a single lane. In other words, the leaning vehicle is able to run on a selected position in the left-right direction in a single lane. In this connection, the vehicle body frame of the leaning vehicle leans when turning left or right. When the vehicle body frame of the leaning vehicle leans, the width of the leaning vehicle increases in the left-right direction of the lane. The inventors of the present invention noticed that, even though the vehicle width is narrow when the leaning vehicle is upright, the width preferable for running must be sufficiently long in the left-right direction of the lane in some running situations.
Furthermore, when the active driving assist device rapidly changes the acceleration, the behavior of the leaning vehicle is changed. It has been proved that the driver feels strange when the behavior of the vehicle is changed. The inventors of the subject application noticed that this type of strangeness is related to jerk. The inventors of the subject application further noticed that, when the jerk was restricted, the strange feeling for the driver could be restrained even if the absolute value of the acceleration was high.
The inventors have found that control conforms to the driver's feeling of the leaning vehicle when the control actively assists the driver by using these findings.
The invention is specified by the independent claim. Embodiments are specified by the dependent claims.
[1] A leaning vehicle of the present invention includes: a vehicle body frame which leans rightward in a vehicle left-right direction when turning right and leans leftward in the vehicle left-right direction when turning left; a seat supported by the vehicle body frame; a front wheel unit, which includes at least one front wheel, is supported by the vehicle body frame, and is provided at least partially forward of the seat in a vehicle front-rear direction; a rear wheel unit, which includes at least one rear wheel, is supported by the vehicle body frame, and is provided at least partially rearward of the seat in the vehicle front-rear direction; and an active driving assist device configured to actively assist a driver.
   The active driving assist device includes: an acceleration controller configured to control acceleration in a traveling direction by controlling rotation of at least one of the front wheel unit or the rear wheel unit; an oblique inter-vehicle distance detection unit which is configured to detect an oblique inter-vehicle distance which is the distance between the leaning vehicle and an obliquely-neighboring vehicle which (a) runs in a lane in which the leaning vehicle runs, (b) is remote from the leaning vehicle in the vehicle left-right direction of the leaning vehicle, and (c) is arranged so that, in the vehicle front-rear direction of the leaning vehicle, either a front end of the obliquely-neighboring vehicle is forward of a front end of the leaning vehicle and a trailing end of the obliquely-neighboring vehicle is forward of a trailing end of the leaning vehicle or the front end of the obliquely-neighboring vehicle is rearward of the front end of the leaning vehicle and the trailing end of the obliquely-neighboring vehicle is rearward of the trailing end of the leaning vehicle; and an active driving assist control unit configured to actively assist the driver by controlling the acceleration controller in accordance with the oblique inter-vehicle distance detected by the oblique inter-vehicle distance detection unit while arranging jerk in a traveling direction to be smaller than a maximum value of jerk generatable by the acceleration controller and to be larger than a minimum value of the jerk generatable by the acceleration controller, the active driving assist control unit being configured to actively assist the driver by controlling the acceleration controller in such a way that, when the acceleration controller is controlled so that speed in the traveling direction is changed in accordance with the oblique inter-vehicle distance detected by the oblique inter-vehicle distance detection unit, relationship between speed and elapsed time is non-linear at an early stage of speed change.
   According to the arrangement above, the leaning vehicle includes a vehicle body frame, a seat, a front wheel unit, a rear wheel unit, and an active driving assist device. The seat, the front wheel unit, and the rear wheel unit are supported by the vehicle body frame. The front wheel unit includes at least one front wheel and is provided at least partially forward of the seat in the vehicle front-rear direction. The rear wheel unit includes at least one rear wheel and is provided at least partially rearward of the seat in the vehicle front-rear direction. The active driving assist device is configured to actively assist the driver. The active driving assist device includes the acceleration controller, the oblique inter-vehicle distance detection unit, and the active driving assist control unit. The acceleration controller is configured to control acceleration in the traveling direction by controlling rotation of at least one of the front wheel unit or the rear wheel unit. In this specification, "at least one of a plurality of options" encompasses any possible combinations of the options. "At least one of a plurality of options" may be one of the options, or all of the options. Such a leaning vehicle is narrower in width than a passenger vehicle. On this account, an obliquely-neighboring vehicle running obliquely forward or obliquely rearward of the leaning vehicle may exist in the lane in which the leaning vehicle runs. The obliquely-neighboring vehicle is remote from the leaning vehicle in the vehicle left-right direction of the leaning vehicle. In the vehicle front-rear direction of the leaning vehicle, either the front end of the obliquely-neighboring vehicle is forward of the front end of the leaning vehicle and the trailing end of the obliquely-neighboring vehicle is forward of the trailing end of the leaning vehicle or the front end of the obliquely-neighboring vehicle is rearward of the front end of the leaning vehicle and the trailing end of the obliquely-neighboring vehicle is rearward of the trailing end of the leaning vehicle. The oblique inter-vehicle distance detection unit configured to detect an oblique inter-vehicle distance which is the distance between an obliquely-neighboring vehicle and the leaning vehicle. The oblique inter-vehicle distance is a distance in a direction inclined with respect to both the vehicle front-rear direction and the vehicle left-right direction. The vehicle body frame of the leaning vehicle leans rightward in the vehicle left-right direction when turning right and leans leftward in the vehicle left-right direction when turning left. On this account, even though the leaning vehicle width is narrow when the leaning vehicle is upright, the width preferable for running must be sufficiently long in the vehicle left-right direction in some running situations.
   The active driving assist control unit is configured to actively assist the driver by controlling the acceleration controller in accordance with the detected oblique inter-vehicle distance. In other words, the active driving assist control unit is configured to actively assist the driver by controlling the acceleration controller by utilizing not only the distance between the obliquely-neighboring vehicle and the leaning vehicle in the vehicle front-rear direction but also the distance between the obliquely-neighboring vehicle and the leaning vehicle in the vehicle left-right direction. On this account, driving assist in conformity with the driver's feeling can be realized in situations in which an obliquely-neighboring vehicle is running obliquely forward or rearward of the leaning vehicle. Furthermore, the active driving assist control unit is configured to actively assist the driver by controlling the acceleration controller in accordance with the oblique inter-vehicle distance detected by the oblique inter-vehicle distance detection unit while keeping the jerk in the traveling direction is smaller than the maximum value of the jerk generatable by the acceleration controller and larger than the minimum value of the jerk generatable by the acceleration controller. Furthermore, the active driving assist control unit is configured to actively assist the driver by controlling the acceleration controller in such a way that, when the acceleration controller is controlled to change the speed in the traveling direction in accordance with the oblique inter-vehicle distance detected by the oblique inter-vehicle distance detection unit, the relationship between the speed and the elapsed time is non-linear at an early stage of the speed change.
   The active assistance of the driver by controlling the acceleration controller in accordance with the oblique inter-vehicle distance may specifically indicate, for example, changing the speed of the leaning vehicle in sync with the speed of the obliquely-neighboring vehicle so that the oblique inter-vehicle distance is maintained at a predetermined target distance. To achieve this, it is necessary to perform control corresponding to both changes in the distance in the vehicle front-rear direction and changes in the distance in the vehicle left-right direction. For this reason, careful control is required when compared to typical adaptive cruise control with which control is carried out in consideration only of the inter-vehicle distance in the vehicle front-rear direction. Therefore, a high degree of synchronization with the obliquely-neighboring vehicle is necessary. Increase in the degree of synchronization is achieved by increasing the absolute value of the acceleration of the leaning vehicle when the obliquely-neighboring vehicle accelerates or decelerates. However, when the absolute value of the acceleration is increased by rapidly changing the acceleration, the driver feels strange. In this regard, in the present invention, two restrictions are applied to the jerk when the driving assist control is performed in accordance with the oblique inter-vehicle distance. The first restriction is to arrange the jerk to be smaller than the maximum value of the jerk which is generatable by the acceleration controller and to be larger than the minimum value of that jerk. The second restriction is to arrange the relationship between the speed and the elapsed time to be non-linear at an early stage of the speed change. The second restriction indicates that the acceleration changes at an early stage of the speed change and the change of the acceleration is not rapid. To put it differently, when the acceleration does not change rapidly, the absolute value of the jerk is small. In this way, even when the jerk is restricted, the absolute value of the acceleration can be increased with a sufficient time. Because the absolute value of the jerk is small, the driver is unlikely to feel strange even when the absolute value of the acceleration becomes large.
   For this reason, the active driving assist control unit is able to perform driving assist in conformity with the driver's feeling, because the unit actively assists the driver by controlling the acceleration controller in accordance with the oblique inter-vehicle distance while restricting the jerk.
[2] According to an embodiment of the invention, the leaning vehicle of the present invention preferably has the following arrangement.
   The oblique inter-vehicle distance detection unit is configured to detect an obliquely-forward inter-vehicle distance which is the distance between the leaning vehicle and an obliquely-forward-neighboring vehicle which (a) runs in the lane in which the leaning vehicle runs, (b) is remote from the leaning vehicle in the vehicle left-right direction of the leaning vehicle, and (c-1) is arranged so that, in the vehicle front-rear direction of the leaning vehicle, a front end of the obliquely-forward-neighboring vehicle is forward of the front end of the leaning vehicle and a trailing end of the obliquely-forward-neighboring vehicle is forward of the trailing end of the leaning vehicle.
   The active driving assist control unit is configured to actively assist the driver by controlling the acceleration controller in accordance with the obliquely-forward inter-vehicle distance detected by the oblique inter-vehicle distance detection unit.
   According to these arrangements, the oblique inter-vehicle distance detection unit is configured to detect the obliquely-forward inter-vehicle distance between the leaning vehicle and the obliquely-forward-neighboring vehicle which is obliquely forward of the leaning vehicle. The active driving assist control unit is configured to actively assist the driver by controlling the acceleration controller in accordance with the detected obliquely-forward inter-vehicle distance, while restricting the jerk as described above. To be more specific, the leaning vehicle is arranged to follow the obliquely-forward-neighboring vehicle so that the oblique inter-vehicle distance is maintained at a predetermined target distance. Because the absolute value of the jerk is small, the followability to the obliquely-forward-neighboring vehicle can be improved while restraining the strangeness for the driver. On this account, driving assist in conformity with the driver's feeling can be realized in situations in which an obliquely-forward-neighboring vehicle runs at a position obliquely forward of the leaning vehicle.
[3] According to another embodiment of the invention, the leaning vehicle of the present invention preferably has the following arrangement.
   The active driving assist device includes a forward inter-vehicle distance detection unit which is configured to detect a forward inter-vehicle distance which is the distance between the leaning vehicle and a preceding vehicle which (d) runs in the lane in which the leaning vehicle runs, (e) has a trailing end which is forward of the trailing end of the obliquely-forward-neighboring vehicle in the vehicle front-rear direction of the leaning vehicle, and (f) is at least partially overlapped with the leaning vehicle when viewed in the vehicle front-rear direction of the leaning vehicle. The active driving assist control unit is configured to actively assist the driver by controlling the acceleration controller in accordance with the forward inter-vehicle distance detected by the forward inter-vehicle distance detection unit and the obliquely-forward inter-vehicle distance detected by the oblique inter-vehicle distance detection unit.
   When the leaning vehicle and an obliquely-forward-neighboring vehicle run, another preceding vehicle may run on the same lane. The preceding vehicle is a vehicle which has the trailing end positioned forward of the trailing end of the obliquely-forward-neighboring vehicle and is at least partially overlapped with the leaning vehicle when viewed in the vehicle front-rear direction of the leaning vehicle. The forward inter-vehicle distance detection unit is configured to detect a forward inter-vehicle distance which is the distance between a preceding vehicle and the leaning vehicle. The active driving assist control unit is configured to actively assist the driver by controlling the acceleration controller in accordance with the forward inter-vehicle distance and the obliquely-forward inter-vehicle distance, while restricting the jerk as described above. To be more specific, the acceleration of the leaning vehicle is controlled so that the oblique inter-vehicle distance is maintained at a predetermined target distance and the forward inter-vehicle distance is equal to or longer than a predetermined limit distance. On this account, driving assist in conformity with the driver's feeling can be realized in situations in which the obliquely-forward-neighboring vehicle and the preceding vehicle run.
[4] According to another embodiment of the invention, the leaning vehicle of the present invention preferably has the following arrangement.
   The active driving assist device includes an obliquely-neighboring vehicle information detection unit configured to detect the width of the obliquely-neighboring vehicle in a left-right direction of the lane, the vehicle left-right direction of the leaning vehicle, or the vehicle left-right direction of the obliquely-neighboring vehicle.
   The active driving assist control unit is configured to actively assist the driver by controlling the acceleration controller based on the width of the obliquely-neighboring vehicle in the left-right direction of the lane or the vehicle left-right direction of the leaning vehicle, which is detected by the obliquely-neighboring vehicle information detection unit, and further based on the oblique inter-vehicle distance detected by the oblique inter-vehicle distance detection unit.
   According to this arrangement, the obliquely-neighboring vehicle information detection unit of the active driving assist device is configured to detect the width of the obliquely-neighboring vehicle in the left-right direction of the lane, the vehicle left-right direction of the leaning vehicle, or the vehicle left-right direction of the obliquely-neighboring vehicle. Based on the width of the obliquely-neighboring vehicle, it is possible to determine whether the obliquely-neighboring vehicle is of the leaning vehicle type. The active driving assist control unit is configured to actively assist the driver by controlling the acceleration controller based on the width of the obliquely-neighboring vehicle detected by the obliquely-neighboring vehicle information detection unit and the oblique inter-vehicle distance, while restricting the jerk as described above. It is therefore possible to change the driving assist control based on whether the obliquely-neighboring vehicle is of the leaning vehicle type. For this reason, driving assist further in conformity with the driver's feeling can be realized.
[5] According to another embodiment of the invention, the leaning vehicle of the present invention preferably has the following arrangement.
   The active driving assist device includes a preceding vehicle information detection unit which is configured to detect the width of the preceding vehicle in a left-right direction of the lane or the vehicle left-right direction of the leaning vehicle.
   The active driving assist control unit is configured to actively assist the driver by controlling the acceleration controller based on the width of the preceding vehicle in the left-right direction of the lane or the vehicle left-right direction of the leaning vehicle, which is detected by the preceding vehicle information detection unit, the forward inter-vehicle distance detected by the forward inter-vehicle distance detection unit, and the obliquely-forward inter-vehicle distance detected by the oblique inter-vehicle distance detection unit.
   According to this arrangement, the preceding vehicle information detection unit of the active driving assist device is configured to detect the width of the preceding vehicle in the left-right direction of the lane or the vehicle left-right direction of the leaning vehicle. Based on the width of the preceding vehicle, it is possible to determine whether the preceding vehicle is of the leaning vehicle type. The active driving assist control unit is configured to actively assist the driver by controlling the acceleration controller based on the width of the preceding vehicle detected by the preceding vehicle information detection unit, the forward inter-vehicle distance, and the oblique inter-vehicle distance, while restricting the jerk as described above. It is therefore possible to change the driving assist control based on whether the preceding vehicle is of the leaning vehicle type. For this reason, driving assist further in conformity with the driver's feeling can be realized.
[6] According to another embodiment of the invention, the leaning vehicle of the present invention preferably has the following arrangement.
   The active driving assist device includes a speed-related information detection unit which is configured to detect at least one of sets of information, the sets of information being: speed of the leaning vehicle in the traveling direction; acceleration of the leaning vehicle in the traveling direction; speed of the leaning vehicle in the vehicle front-rear direction; acceleration of the leaning vehicle in the vehicle front-rear direction; speed of the leaning vehicle in the vehicle left-right direction; and acceleration of the leaning vehicle in the vehicle left-right direction.
   The active driving assist control unit is configured to actively assist the driver by controlling the acceleration controller based on at least one of sets of the information detected by the speed-related information detection unit of the leaning vehicle and the oblique inter-vehicle distance detected by the oblique inter-vehicle distance detection unit.
   A preferable value of the oblique inter-vehicle distance may vary in accordance with the speed of the leaning vehicle in the traveling direction. The same applies to the acceleration of the leaning vehicle in the traveling direction, the speed and acceleration of the leaning vehicle in the vehicle front-rear direction, and the speed and acceleration of the leaning vehicle in the vehicle left-right direction. The speed-related information detection unit is configured to detect at least one of these speeds and accelerations of the leaning vehicle. The active driving assist control unit is configured to actively assist the driver based on at least one of sets of information detected by the speed-related information detection unit and the oblique inter-vehicle distance, while restricting the jerk as described above. It is therefore possible to change the target distance of the oblique inter-vehicle distance in accordance with the speed or acceleration of the leaning vehicle. For this reason, driving assist further in conformity with the driver's feeling can be realized.
[7] According to another embodiment of the invention, the leaning vehicle of the present invention preferably has the following arrangement.
   The active driving assist device includes a leaning detection unit which is configured to detect at least one of sets of information, the sets of information being a tilt angle, a tilt angular speed, and a tilt angular acceleration of leaning of the vehicle body frame of the leaning vehicle in the vehicle left-right direction.
   The active driving assist control unit is configured to actively assist the driver by controlling the acceleration controller based on the at least one set of information of the tilt angle, the tilt angular speed, and the tilt angular acceleration of the vehicle body frame of the leaning vehicle detected by the leaning detection unit, and further based on the oblique inter-vehicle distance detected by the oblique inter-vehicle distance detection unit.
   When the leaning vehicle turns, the vehicle body frame of the leaning vehicle leans in the vehicle left-right direction. When the vehicle body frame leans in the vehicle left-right direction, the width of the leaning vehicle changes in the vehicle left-right direction. On this account, a preferable value of the oblique inter-vehicle distance may vary in accordance with the tilt angle of leaning and the tilt angular speed, or the tilt angular speed of the vehicle body frame of the leaning vehicle in the vehicle left-right direction. The leaning detection unit is configured to detect at least one of the tilt angle, the tilt angular speed, or the tilt angular acceleration of leaning of the vehicle body frame of the leaning vehicle in the vehicle left-right direction. The active driving assist control unit is configured to actively assist the driver by controlling the acceleration controller based on at least one of the tilt angle, the tilt angular speed, or the tilt angular acceleration of the leaning vehicle detected by the leaning detection unit and further based on the oblique inter-vehicle distance, while restricting the jerk as described above. It is therefore possible to change the driving assist control in accordance with the state of leaning of the leaning vehicle. For this reason, driving assist further in conformity with the driver's feeling can be realized.
[8] According to another embodiment of the invention, the leaning vehicle of the present invention preferably has the following arrangement.
   The active driving assist device includes an obliquely-neighboring vehicle information detection unit configured to detect at least one of sets of information, the sets of information being: a speed of the obliquely-neighboring vehicle in the vehicle front-rear direction of the leaning vehicle or a traveling direction of the leaning vehicle; a relative speed of the obliquely-neighboring vehicle relative to the leaning vehicle in the vehicle front-rear direction of the leaning vehicle or the traveling direction of the leaning vehicle; an acceleration of the obliquely-neighboring vehicle in the vehicle front-rear direction of the leaning vehicle or a traveling direction of the leaning vehicle; a relative acceleration of the obliquely-neighboring vehicle relative to the leaning vehicle in the vehicle front-rear direction of the leaning vehicle or the traveling direction of the leaning vehicle; a speed of the obliquely-neighboring vehicle in the vehicle left-right direction of the leaning vehicle or a direction orthogonal to the traveling direction of the leaning vehicle; a relative speed of the obliquely-neighboring vehicle relative to the leaning vehicle in the vehicle left-right direction of the leaning vehicle or the direction orthogonal to the traveling direction of the leaning vehicle; an acceleration of the obliquely-neighboring vehicle in the vehicle left-right direction of the leaning vehicle or the direction orthogonal to the traveling direction of the leaning vehicle; a relative acceleration of the obliquely-neighboring vehicle relative to the leaning vehicle in the vehicle left-right direction of the leaning vehicle or the direction orthogonal to the traveling direction of the leaning vehicle; a tilt angle relative to an up-down direction of the obliquely-neighboring vehicle; a tilt angular speed of inclination relative to the up-down direction of the obliquely-neighboring vehicle; and a tilt angular acceleration of inclination relative to the up-down direction of the obliquely-neighboring vehicle.
   The active driving assist control unit is configured to actively assist the driver by controlling the acceleration controller based on the at least one set of information detected by the obliquely-neighboring vehicle information detection unit and the oblique inter-vehicle distance detected by the oblique inter-vehicle distance detection unit.
   A preferable value of the oblique inter-vehicle distance may vary in accordance with the speed of the obliquely-neighboring vehicle in the vehicle front-rear direction of the leaning vehicle or in the traveling direction of the leaning vehicle. The same is applied to the relative speed of the obliquely-neighboring vehicle relative to the leaning vehicle in the vehicle front-rear direction of the leaning vehicle or the traveling direction of the leaning vehicle, the acceleration of the obliquely-neighboring vehicle in the vehicle front-rear direction of the leaning vehicle or the traveling direction of the leaning vehicle, the relative acceleration of the obliquely-neighboring vehicle relative to the leaning vehicle in the vehicle front-rear direction of the leaning vehicle or the traveling direction of the leaning vehicle, the speed of the obliquely-neighboring vehicle in the direction orthogonal to the traveling direction of the leaning vehicle or the vehicle left-right direction of the leaning vehicle, the relative speed of the obliquely-neighboring vehicle relative to the leaning vehicle in the direction orthogonal to the traveling direction of the leaning vehicle or the vehicle left-right direction of the leaning vehicle, the acceleration of the obliquely-neighboring vehicle in the direction orthogonal to the traveling direction of the leaning vehicle or the vehicle left-right direction of the leaning vehicle, and the relative acceleration of the obliquely-neighboring vehicle relative to the leaning vehicle in the direction orthogonal to the leaning vehicle or the vehicle left-right direction of the leaning vehicle. The obliquely-neighboring vehicle information detection unit may detect at least one of these speeds, accelerations, relative speeds, and relative accelerations of the obliquely-neighboring vehicle. The active driving assist control unit is configured to actively assist the driver based on the oblique inter-vehicle distance and at least one of the above-described sets of information detected by the obliquely-neighboring vehicle information detection unit, which are the speeds, the accelerations, the relative speeds, and the relative accelerations, while restricting the jerk as described above. It is therefore possible to change the target distance of the oblique inter-vehicle distance in accordance with a change of the speed of the obliquely-neighboring vehicle. For this reason, driving assist further in conformity with the driver's feeling can be realized.
   The obliquely-neighboring vehicle is remote from the leaning vehicle in the vehicle left-right direction. The obliquely-neighboring vehicle is, therefore, likely to be of the leaning vehicle type. Alternatively, the obliquely-neighboring vehicle is restricted to the leaning vehicle type. When the obliquely-neighboring vehicle is of the leaning vehicle type, the obliquely-neighboring vehicle leans relative to the up-down direction when the obliquely-neighboring vehicle turns. When the obliquely-neighboring vehicle leans, the width of the obliquely-neighboring vehicle changes. On this account, a preferable value of the oblique inter-vehicle distance may vary in accordance with the tilt angle, the tilt angular speed, or the tilt angular speed of the obliquely-neighboring vehicle. The obliquely-neighboring vehicle information detection unit may detect at least one of the tilt angle, the tilt angular speed, or the tilt angular acceleration relative to the up-down direction of the obliquely-neighboring vehicle. The active driving assist control unit is configured to actively assist the driver by controlling the acceleration controller based on at least one of the tilt angle, the tilt angular speed, or the tilt angular acceleration of the obliquely-neighboring vehicle detected by the obliquely-neighboring vehicle information detection unit and further based on the oblique inter-vehicle distance, while restricting the jerk as described above. It is therefore possible to change the driving assist control in accordance with the state of leaning of the obliquely-neighboring vehicle. For this reason, driving assist further in conformity with the driver's feeling can be realized.
[9] According to another embodiment of the invention, the leaning vehicle of the present invention preferably has the following arrangement.
   The active driving assist device includes an in-lane left-right position information acquisition unit configured to obtain information of a position of the leaning vehicle in the lane in the left-right direction of the lane.
   The active driving assist control unit is configured to actively assist the driver by controlling the acceleration controller based on the information of the position of the leaning vehicle in the lane in the left-right direction of the lane, which is obtained by the in-lane left-right position information acquisition unit, and further based on the oblique inter-vehicle distance detected by the oblique inter-vehicle distance detection unit.
   The leaning vehicle is narrow in width. The leaning vehicle is therefore able to run on a selected position in the lane in the left-right direction. The in-lane left-right position information acquisition unit is configured to obtain information of a position of the leaning vehicle in the lane in the left-right direction of the lane. The active driving assist control unit is configured to actively assist the driver by controlling the acceleration controller based on the oblique inter-vehicle distance and the position of the leaning vehicle in the lane obtained by the in-lane left-right position information acquisition unit, while restricting the jerk as described above. It is therefore possible to change the driving assist control based on the position of the leaning vehicle in the lane. For this reason, driving assist further in conformity with the driver's feeling can be realized.
[10] According to another embodiment of the invention, the leaning vehicle of the present invention preferably has the following arrangement.
   The active driving assist device includes an obliquely-neighboring vehicle information detection unit configured to detect a position of the obliquely-neighboring vehicle in the lane in the left-right direction of the lane.
   The active driving assist control unit is configured to actively assist the driver by controlling the acceleration controller based on the position of the obliquely-neighboring vehicle in the lane in which the obliquely-neighboring vehicle runs, in the left-right direction of the lane, the position being detected by the obliquely-neighboring vehicle information detection unit, and further based on the oblique inter-vehicle distance detected by the oblique inter-vehicle distance detection unit.
   The obliquely-neighboring vehicle is remote from the leaning vehicle in the vehicle left-right direction. The obliquely-neighboring vehicle is therefore likely to be of the leaning vehicle type. Alternatively, the obliquely-neighboring vehicle is restricted to the leaning vehicle type. When the obliquely-neighboring vehicle is of the leaning vehicle type, the obliquely-neighboring vehicle is able to run on a selected position in the lane in the left-right direction. The obliquely-neighboring vehicle information detection unit is configured to detect the position of the obliquely-neighboring vehicle in the lane in the left-right direction of the lane. The active driving assist control unit is configured to actively assist the driver by controlling the acceleration controller based on the position of the obliquely-neighboring vehicle in the lane detected by the obliquely-neighboring vehicle information detection unit and the oblique inter-vehicle distance, while restricting the jerk as described above. On this account, the driving assist control is changeable in accordance with the position where the obliquely-neighboring vehicle runs in the lane, even if the obliquely-neighboring vehicle is of the leaning vehicle type. For this reason, driving assist further in conformity with the driver's feeling can be realized.
[11] According to another embodiment of the invention, the leaning vehicle of the present invention preferably has the following arrangement.
   The active driving assist device includes a lane information detection unit configured to detect lane information related to the lane.
   The active driving assist control unit is configured to actively assist the driver by controlling the acceleration controller based on the lane information detected by the lane information detection unit and the oblique inter-vehicle distance detected by the oblique inter-vehicle distance detection unit.
   The lane information detection unit detects the lane information related to the lane in which the leaning vehicle runs. The lane information includes, for example, information regarding curves, corners, intersections, junctions, branches, traffic lights, and crossings. The intersections include T-junctions, Y-junctions, and crossroads. The lane information may include traffic restriction information such as speed limit and traffic jam information. A preferred running situation of the leaning vehicle varies in accordance with the state of the lane. The active driving assist control unit is configured to actively assist the driver by controlling the acceleration controller based on the lane information detected by the lane information detection unit and the oblique inter-vehicle distance, while restricting the jerk as described above. It is therefore possible to change the driving assist control in accordance with the state of the lane. For this reason, driving assist further in conformity with the driver's feeling can be realized.
[12] According to another embodiment of the invention, the leaning vehicle of the present invention preferably has the following arrangement.
   The lane information detection unit detects at least one of sets of information, the sets of information being: width of the lane in the left-right direction of the lane or the vehicle left-right direction of the leaning vehicle; a direction of vehicle flow of a lane which is to the left of the lane in which the leaning vehicle runs; or a direction of vehicle flow of a lane which is to the right of the lane in which the leaning vehicle runs. The active driving assist control unit is configured to actively assist the driver by controlling the acceleration controller based on the at least one set of information detected by the lane information detection unit and the oblique inter-vehicle distance detected by the oblique inter-vehicle distance detection unit.
   To begin with, the following will describe effects when the lane information detection unit is configured to detect the width of the lane in the left-right direction of the lane or the vehicle left-right direction of the leaning vehicle.
   A preferred running position of the leaning vehicle in the lane may vary in accordance with the width of the lane. The active driving assist control unit is configured to actively assist the driver by controlling the acceleration controller based on the width of the lane detected by the lane information detection unit and the oblique inter-vehicle distance, while restricting the jerk as described above. It is therefore possible to change the driving assist control in accordance the width of the lane. For this reason, driving assist further in conformity with the driver's feeling can be realized.
   The following will describe effects when the lane information detection unit is configured to detect the direction of vehicle flow of a lane to the left of the lane in which the leaning vehicle runs and/or the direction of vehicle flow of a lane to the right of the lane in which the leaning vehicle runs.
   A preferred running position of the leaning vehicle in the lane may vary in accordance with the direction of vehicle flow of a lane to the left of the lane in which the leaning vehicle runs or the direction of vehicle flow of a lane to the right of the lane in which the leaning vehicle runs. The active driving assist control unit is configured to actively assist the driver by controlling the acceleration controller based on the direction of vehicle flow of at least one neighboring lane detected by the lane information detection unit and the oblique inter-vehicle distance, while restricting the jerk as described above. It is therefore possible to change the driving assist control in accordance with the direction of vehicle flow of the neighboring lane. For this reason, driving assist further in conformity with the driver's feeling can be realized.
[13] According to another embodiment of the invention, the leaning vehicle of the present invention preferably has the following arrangement.
   The active driving assist device includes a neighboring lane inter-vehicle distance detection unit which is configured to detect a neighboring lane inter-vehicle distance which is the distance between the leaning vehicle and a neighboring lane vehicle which runs in a lane neighboring the lane in which the leaning vehicle runs, and runs at a position forward of the leaning vehicle in the vehicle front-rear direction of the leaning vehicle.
   The active driving assist control unit is configured to actively assist the driver by controlling the acceleration controller in accordance with the neighboring lane inter-vehicle distance detected by the neighboring lane inter-vehicle distance detection unit and the obliquely-forward inter-vehicle distance detected by the oblique inter-vehicle distance detection unit.
   When the leaning vehicle and an obliquely-forward-neighboring vehicle run, another preceding vehicle may run on a neighboring lane. The neighboring lane vehicle is a vehicle which runs at a position forward of the leaning vehicle in the vehicle front-rear direction of the leaning vehicle. The neighboring lane inter-vehicle distance detection unit is configured to detect the neighboring lane inter-vehicle distance which is the distance between the neighboring lane vehicle and the leaning vehicle. The active driving assist control unit is configured to actively assist the driver by controlling the acceleration controller in accordance with the neighboring lane inter-vehicle distance and the obliquely-forward inter-vehicle distance, while restricting the jerk as described above. On this account, when, for example, the neighboring lane vehicle is of the leaning vehicle type and a plurality of leaning vehicles run closely across two lanes, the neighboring lane inter-vehicle distance can be controlled to be equal to or longer than a predetermined distance. On this account, driving assist in conformity with the driver's feeling can be realized in situations in which the neighboring lane vehicle and the obliquely-forward-neighboring vehicle run.
[14] According to another embodiment of the invention, the leaning vehicle of the present invention preferably has the following arrangement.
   The active driving assist control unit is configured to actively assist the driver by controlling the acceleration controller based on the obliquely-forward inter-vehicle distance detected by the oblique inter-vehicle distance detection unit so that the obliquely-forward inter-vehicle distance is maintained at a predetermined target distance.
   According to this arrangement, the active driving assist control unit is configured to actively assist the driver by controlling the acceleration controller based on the obliquely-forward inter-vehicle distance detected by the oblique inter-vehicle distance detection unit so that the obliquely-forward inter-vehicle distance is maintained at a target distance, while restricting the jerk as described above. The obliquely-forward inter-vehicle distance is a distance in a direction inclined with respect to both the vehicle front-rear direction and the vehicle left-right direction. The target distance is the inter-vehicle distance between the leaning vehicle and an obliquely-forward-neighboring vehicle, and this distance is the target of maintenance. The active driving assist control unit controls the inter-vehicle distance with the obliquely-forward-neighboring vehicle to be maintained at a predetermined target distance based not only on the distance between the obliquely-forward-neighboring vehicle and the leaning vehicle in the vehicle front-rear direction but also on the distance between the obliquely-forward-neighboring vehicle and the leaning vehicle in the vehicle left-right direction. For this reason, driving assist in conformity with the driver's feeling can be realized.
[15] According to another embodiment of the invention, the leaning vehicle of the present invention preferably has the following arrangement.
   The active driving assist control unit is configured to actively assist the driver by controlling the acceleration controller based on the obliquely-forward inter-vehicle distance detected by the oblique inter-vehicle distance detection unit and the forward inter-vehicle distance detected by the forward inter-vehicle distance detection unit so that the obliquely-forward inter-vehicle distance is maintained at a predetermined target distance and the forward inter-vehicle distance is equal to or longer than a predetermined limit distance.
   According to this arrangement, the active driving assist control unit is configured to actively assist the driver by controlling the acceleration controller based on the detected obliquely-forward inter-vehicle distance and the detected forward inter-vehicle distance so that the obliquely-forward inter-vehicle distance is maintained at a target distance and the forward inter-vehicle distance is equal to or longer than a predetermined limit distance, while restricting the jerk as described above. On this account, driving assist further in conformity with the driver's feeling can be realized in situations in which the obliquely-forward-neighboring vehicle and the preceding vehicle run. The limit distance is the inter-vehicle distance at which the leaning vehicle is maximally close to the preceding vehicle.
   In the present invention, the vehicle front-rear direction of the leaning vehicle is a front-rear direction for the driver seated on the seat of the leaning vehicle. The vehicle left-right direction of the leaning vehicle is a left-right direction for the driver seated on the seat of the leaning vehicle. The vehicle front-rear direction and the vehicle left-right direction are in parallel to the road surface. The traveling direction of the leaning vehicle is close to the vehicle front-rear direction of the leaning vehicle but these directions may not coincide with each other.
   In the present invention, the acceleration encompasses both positive acceleration and negative acceleration. Furthermore, the jerk encompasses positive jerk and negative jerk.

In the present invention, active assist to a driver indicates that the driving by the driver is assisted even when the driver is operating a vehicle. The active assist to the driver encompasses a case where a brake is activated to assist the driver even when the driver does not operate the brake.

In the present invention, active assist to a driver does not encompass passive assist to a driver. Passive assist to a driver indicates that the driver is assisted in response to an operation by the driver. An example of the passive assist to the driver is a case where braking is assisted when the driver operates a brake.
When a driver performs an operation, the active driving assist device of the present invention may perform assist to the driver irrespective of the operation by the driver. For example, when the driver performs a braking operation, the active driving assist device may assist the driver by activating the brake, irrespective of the braking operation by the driver. In summary, the active assist to the driver may be to assist the driving of the driver irrespective of operations by the driver.
When the driver performs an operation, the active driving assist device of the present invention may not perform assist which is planned to be executed if the driver does not perform the operation. For example, when the driver performs a braking operation at the same time as the active driving assist control unit is about to activate the brake, the driver's operation may be prioritized.

The early stage of speed change in the present invention is an early stage of a period in which speed is changed, when a speed is arranged to be substantially constant, then varied, and then to be substantially constant again. In the present invention, when the relationship between a speed and an elapsed time is non-linear, the chart showing the relationship between the speed and the elapsed time is not a linear line but a curved line.

In the present invention, the control of the acceleration controller so that the relationship between the speed and the elapsed time is non-linear at an early stage of the speed change does not exclude cases where the relationship between the speed and the elapsed time is non-linear when the speed is changed not at the early stage of the speed change. To put it differently, when the speed is changed not at the early stage of the speed change, the relationship between the speed and the elapsed time may be linear or non-linear. For example, after the speed is changed by changing the acceleration, the speed is changed while the acceleration is maintained at a constant value which is not zero. Then the speed is changed by changing the acceleration. This case is not the early stage of the speed change. The control may be performed in this case so that the relationship between the speed and the elapsed time is non-linear.

The active driving assist control unit of the present invention is preferably configured to actively assist the driver by controlling the acceleration controller in such a way that, when the acceleration controller is controlled to change the speed in the traveling direction in accordance with the oblique inter-vehicle distance detected by the oblique inter-vehicle distance detection unit, the relationship between the speed and the elapsed time is non-linear when the acceleration is changed.

The acceleration controller of the present invention is preferably arranged to apply a driving force and a braking force to at least one of the front wheel unit or the rear wheel unit.
The acceleration controller of the present invention preferably includes an engine unit and a brake. The engine unit is configured to apply the driving force to at least one of the front wheel unit or the rear wheel unit. The brake is configured to impart the braking force to at least one of the front wheel unit or the rear wheel unit. The active driving assist control unit controls the acceleration of the leaning vehicle by activating the brake. The active driving assist control unit controls the acceleration of the leaning vehicle by controlling the output of the engine unit. The turning radius of the leaning vehicle can be controlled in such a way that the acceleration controller is controlled while the leaning vehicle is turning. The acceleration controller may include a motor in place of the engine unit. The motor is driven by electric power supplied from a battery of the leaning vehicle.

In the present invention, the detection of the oblique inter-vehicle distance may be the detection of the shortest distance between a predetermined part of the obliquely-neighboring vehicle and a predetermined part of the leaning vehicle. The predetermined part may be different in accordance with the relative position of the obliquely-neighboring vehicle relative to the leaning vehicle. In other words, the detection of the oblique inter-vehicle distance may be detection of the shortest distance between the obliquely-neighboring vehicle and the leaning vehicle.
Alternatively, the detection of the oblique inter-vehicle distance may be detection of the distance between the obliquely-neighboring vehicle and the leaning vehicle in the vehicle front-rear direction of the leaning vehicle and the distance between the obliquely-neighboring vehicle and the leaning vehicle in the vehicle left-right direction of the leaning vehicle.
Alternatively, the detection of the oblique inter-vehicle distance may be the detection of the inter-vehicle time between the obliquely-neighboring vehicle and the leaning vehicle and the detection of the distance between the obliquely-neighboring vehicle and the leaning vehicle in the vehicle left-right direction of the leaning vehicle or the lane left-right direction.
The active driving assist control unit of the present invention may be configured to actively assist the driver by controlling the acceleration controller based on the oblique inter-vehicle distance which is the shortest distance between a predetermined part of the obliquely-neighboring vehicle and a predetermined part of the leaning vehicle and the position of the obliquely-neighboring vehicle relative to the leaning vehicle.
The control of the acceleration controller based on position of the obliquely-neighboring vehicle relative to the leaning vehicle encompasses the control of the acceleration controller based on the position of the leaning vehicle in the lane in the left-right direction of the lane and the position of the obliquely-neighboring vehicle in the lane in the left-right direction of the lane.

In the present invention, the width of the leaning vehicle in the left-right direction of the lane or the vehicle left-right direction may be the width of only the leaning vehicle or the width encompassing the leaning vehicle and the driver. The same applies to the width of each of an obliquely-neighboring vehicle and a preceding vehicle.

When the road surface is horizontal, the up-down direction in the present invention is a direction orthogonal to the road surface, i.e., the direction of gravity. When the road surface is not horizontal, the up-down direction of the present invention may be the direction gravity or a direction orthogonal to the road surface.

In the present invention, the seat indicates a seated part and does not include a backrest part.

In the present invention, the detection of the forward inter-vehicle distance may be detection of the shortest distance between a predetermined part of the preceding vehicle and a predetermined part of the leaning vehicle. The predetermined part may be different in accordance with the relative position of the preceding vehicle relative to the leaning vehicle. The detection of the forward inter-vehicle distance may be detection of the shortest distance between the preceding vehicle and the leaning vehicle.
Alternatively, the detection of the forward inter-vehicle distance may be detection of the distance between the preceding vehicle and the leaning vehicle in the vehicle front-rear direction of the leaning vehicle or the traveling direction of the leaning vehicle.
The detection of the forward inter-vehicle distance may be detection of the inter-vehicle time between the preceding vehicle and the leaning vehicle.

In the present invention, the acquisition of information of the position of the leaning vehicle in the lane in the left-right direction of the lane may be a detection of the position by a sensor or the like or receiving of information of position input to an input unit of the leaning vehicle by the driver. In the latter case, a receiving unit which is configured to receive information input to the input unit is equivalent to the in-lane left-right position information acquisition unit.

In the present invention, the target distance may be a constant distance. The target distance may be changed in accordance with the running situation. To be more specific, for example, the target distance may be changed based on the width of the obliquely-neighboring vehicle in the left-right direction of the lane or the vehicle left-right direction of the leaning vehicle, which is detected by the obliquely-neighboring vehicle information detection unit. The target distance may be changed based on the at least one of sets of information detected by the leaning vehicle speed-related information detection unit. The target distance may be changed based on the at least one of sets of information which are the tilt angle, the tilt angular speed, and the tilt angular acceleration of the vehicle body frame of the leaning vehicle, the information being detected by the leaning detection unit. The target distance may be changed based on the at least one of sets of information detected by the obliquely-neighboring vehicle information detection unit. The target distance may be changed based on information of the position of the leaning vehicle in the lane in the lane left-right direction, which is obtained by the in-lane left-right position information acquisition unit. The target distance may be changed based on the position of the obliquely-neighboring vehicle in the left-right direction of the lane in which the obliquely-neighboring vehicle runs, which is detected by obliquely-neighboring vehicle information detection unit. The target distance may be changed based on the lane information detected by the lane information detection unit. In the present invention, the limit distance may be a constant distance. Being similar to the target distance, the limit distance may be changed in accordance with the running situation.

In the present invention, to maintain the obliquely-forward inter-vehicle distance at a predetermined target distance indicates that the inter-vehicle time between the obliquely-forward-neighboring vehicle and the leaning vehicle is maintained at a predetermined target time and at the same time the distance between the obliquely-forward-neighboring vehicle and the leaning vehicle in the vehicle left-right direction of the leaning vehicle is maintained at a predetermined distance.

In the present invention, the detection of the speed in the vehicle front-rear direction encompasses detection of speed including a speed component in the vehicle front-rear direction. In the present invention, the control of the leaning vehicle based on the speed in the vehicle front-rear direction encompasses control of the leaning vehicle based on speed including a speed component in the vehicle front-rear direction. The same applies to the speed in other directions. The same also applies to relative speeds, accelerations, and relative accelerations in the vehicle front-rear direction and other directions.

In the present invention, one of the front-rear direction of the lane in which the leaning vehicle runs, the vehicle front-rear direction of the leaning vehicle, the traveling direction of the leaning vehicle, the traveling direction of the obliquely-neighboring vehicle, the vehicle front-rear direction of the obliquely-neighboring vehicle, the traveling direction of the preceding vehicle, the vehicle front-rear direction of the preceding vehicle, the traveling direction of the neighboring lane vehicle, and the vehicle front-rear direction of the neighboring lane vehicle may be replaced with one of the remaining directions.

In the present invention, one of the left-right direction of the lane in which the leaning vehicle runs, the vehicle left-right direction of the leaning vehicle, the direction orthogonal to the traveling direction of the leaning vehicle, the direction orthogonal to the traveling direction of the obliquely-neighboring vehicle, the vehicle left-right direction of the obliquely-neighboring vehicle, the direction orthogonal to the traveling direction of the preceding vehicle, the vehicle left-right direction of the preceding vehicle, the direction orthogonal to the traveling direction of the neighboring lane vehicle, and the vehicle left-right direction of the neighboring lane vehicle may be replaced with one of the remaining directions.

In the present invention, an end portion of a member indicates a portion constituted by an end and its surroundings of the member.

In the present invention, an expression "members A and B are lined up in an X direction" indicates the following state. When the members A and B are viewed in a direction orthogonal to the X direction, the members A and B are both provided on a linear line which is parallel to the X direction. In the present invention, an expression "members A and B are lined up in an X direction when viewed in a Y direction" indicates the following state. When the members A and B are viewed in the Y direction, the members A and B are both provided on a linear line which is parallel to the X direction. In this regard, when the members A and B are viewed in a W direction which is different from the Y direction, at least one of the members A and B may not be provided on the linear line which is parallel to the X direction. The members A and B may be in contact with each other. The members A and B may not be in contact with each other. A member C may be provided between the members A and B.

In this specification, an expression "a member A is provided forward of a member B" indicates the following state. The member A is provided in front of a plane which passes the front-most end of the member B and is orthogonal to the front-rear direction. In this connection, the members A and B may or may not be lined up in the front-rear direction. This applies to the directions other than the front-rear direction. (That is to say, this applies to the directions other than "forward of", such as "rearward of', "below", "leftward of", and "rightward of'.)

In this specification, an expression "a member A is provided in front of a member B" indicates the following state. The members A and B are lined up in the front-rear direction and a part of the member A, the part facing the member B, is provided in front of the member B. According to this definition, when a part of the front surface of the member B, the part facing the member A, is the front-most end of the member B, the member A is provided forward of the member B. According to the definition, when a part of the front surface of the member B, the part facing the member A, is not the front-most end of the member B, the member A may or may not be provided forward of the member B. This applies to the directions other than the front-rear direction. (That is to say, this applies to the directions other than "in front of', such as "behind", "straight below", "to the left of', and "to the right of'.) The front surface of the member B is a surface which is viewable when the member B is viewed from the front side. Depending on the shape of the member B, the front surface of the member B may be formed of plural surfaces, instead of a single continuous surface.

In this specification, an expression "a member A is provided in front of a member B when viewed in the left-right direction" indicates the following state. The members A and B are lined up in the front-rear direction when viewed in the left-right direction and a part of the member A, the part facing the member B, is provided in front of the member B when viewed in the left-right direction. According to this definition, the members A and B may not be lined up in the front-rear direction in three dimensions. This applies to the directions other than the front-rear direction. (That is to say, this applies to the directions other than "in front of", such as "behind", "straight below", "to the left of', and "to the right of'.)

It is noted that the terms "preferable" and "good" used herein are non-exclusive. The term "preferable" means "preferable but not limited to". Likewise, the term "good" means "good but not limited to".

In the present invention, terms "including", "comprising", "having", and derivatives thereof are used to encompass not only listed items and equivalents thereof but also additional items. The terms "mounted", "connected", and "coupled" are used in broad sense. To be more specific, the terms encompass not only directly mounting, connection, and coupling but also indirect mounting, connection, and coupling. Furthermore, the terms "connected" and "coupled" do not merely indicate physical or mechanical connection and coupling. These terms encompass direct or indirect electric connection and coupling.

In the present invention, the arrangements of the different aspects described above may be variously combined.
Before an embodiment of the present invention is detailed, it is informed that the present invention is not limited to the configurations and layout of elements described below and/or shown in drawings. The present invention may be implemented as another embodiment, and embodiments may be variously modified. Furthermore, the present invention may be implemented by suitably combining below-described modifications.

### [Brief Description of Drawings]

[FIG. 1] FIG. 1 illustrates a situation when a leaning vehicle is under driving assist control in an embodiment of the present invention.
[FIG. 2] FIG. 2 is a left side view of a motorcycle of a specific example of the embodiment of the present invention.
[FIG. 3] FIG. 3 is a front view which shows a state in which the vehicle body frame of the motorcycle shown in FIG. 2 leans.
[FIG. 4] FIG. 4(a) is a drawing for explaining the width of the motorcycle shown in FIG. 2 when the motorcycle stands up. FIG. 4(b) is a drawing for explaining the width of the motorcycle shown in FIG. 2 when the motorcycle leans.
[FIG. 5] FIG. 5 is a control block diagram of the motorcycle of FIG. 2.
[FIG. 6] FIG. 6 shows the structure of a brake mechanism of the motorcycle of FIG. 2.
[FIG. 7] FIG. 7 is a schematic plan view showing an example of the running situation of the motorcycle of FIG. 2.
[FIG. 8] FIG. 8 is a drawing for explaining the driving assist control in the running situation shown in FIG. 7.
[FIG. 9] FIG. 9 is a schematic plan view showing an example of the running situation of the motorcycle of FIG. 2.
[FIG. 10] FIG. 10 is a schematic plan view showing an example of the running situation of the motorcycle of FIG. 2.
[FIG. 11] FIG. 11 is a schematic plan view showing an example of the running situation of the motorcycle of FIG. 2.
[FIG. 12] FIG. 12 is a schematic plan view showing an example of the running situation of the motorcycle of FIG. 2.
[FIG. 13] FIG. 13 is a schematic plan view showing the process of running of the motorcycle of FIG. 2.
[FIG. 14] FIG. 14 is a flowchart showing an example of a process of control of the motorcycle of FIG. 2.
[FIG. 15] FIG. 15 is a schematic plan view showing an example of the running situation of a motorcycle of a modification.

### [Description of Embodiments]

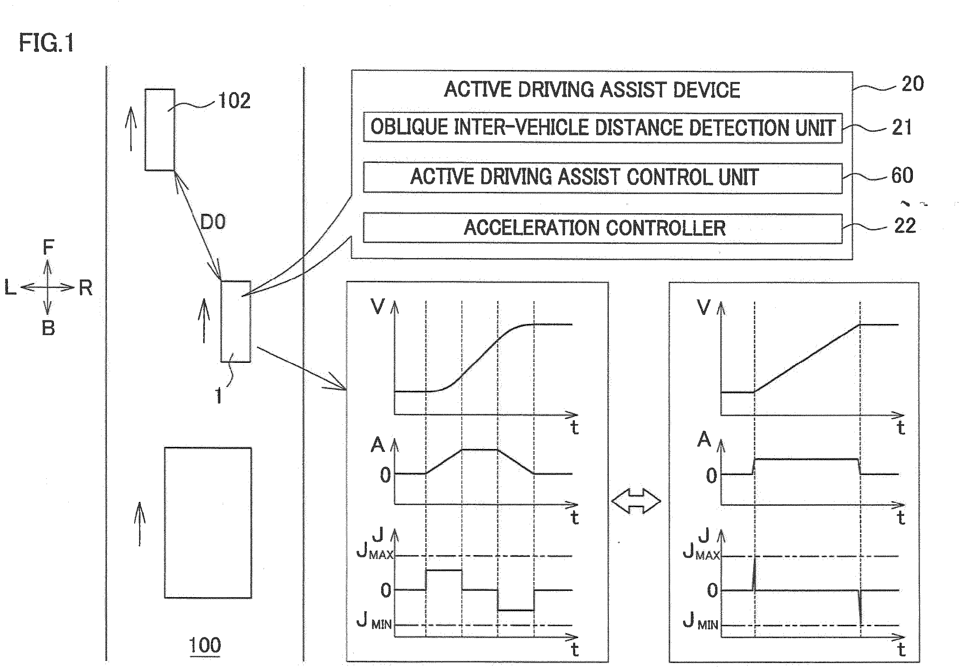

The following will describe a leaning vehicle 1 of an embodiment of the present invention with reference to FIG. 1. Hereinafter, a vehicle front-rear direction may be simply referred to as a front-rear direction. Likewise, a vehicle left-right direction may be simply referred to as a left-right direction. An arrow F and an arrow B in FIG. 1 indicate forward and rearward in the vehicle front-rear direction, respectively, whereas an arrow L and an arrow R indicate leftward and rightward in the vehicle left-right direction, respectively.

The leaning vehicle 1 includes a vehicle body frame, a seat, a front wheel unit, a rear wheel unit, and an active driving assist device 20. The vehicle body frame leans rightward in the vehicle left-right direction when turning right and leans leftward in the vehicle left-right direction when turning left. The seat, the front wheel unit, and the rear wheel unit are supported by the vehicle body frame. The front wheel unit includes at least one front wheel. At least a part of the front wheel unit is provided forward of the seat in the vehicle front-rear direction. The rear wheel unit includes at least one rear wheel. At least a part of the rear wheel unit is provided rearward of the seat in the vehicle front-rear direction. The active driving assist device 20 is configured to actively assist the driver. The active driving assist device 20 includes an acceleration controller 22, an oblique inter-vehicle distance detection unit 21, and an active driving assist control unit 60. The acceleration controller 22 is configured to control the rotation of at least one of the front wheel unit or the rear wheel unit so as to control the acceleration of the leaning vehicle 1 in the traveling direction.

A lane in which the leaning vehicle 1 runs is referred to as lane 100. A vehicle which satisfies the following three conditions (a) to (c) is referred to as an obliquely-neighboring vehicle 102.
(a) The vehicle runs in the lane 100.
(b) The vehicle is remote from the leaning vehicle 1 in the vehicle left-right direction (LR direction) of the leaning vehicle 1.
(c) In the vehicle front-rear direction (FB direction) of the leaning vehicle 1, either the front end of the vehicle is forward of the front end of the leaning vehicle 1 and the trailing end of the vehicle is forward of the trailing end of the leaning vehicle 1 or the front end of the vehicle is rearward of the front end of the leaning vehicle 1 and the trailing end of the vehicle is rearward of the trailing end of the leaning vehicle 1.

The obliquely-neighboring vehicle 102 shown in FIG. 1 is arranged such that, in the vehicle front-rear direction of the leaning vehicle 1, the front end of the obliquely-neighboring vehicle is forward of the front end of the leaning vehicle 1 and the trailing end of the obliquely-neighboring vehicle is forward of the trailing end of the leaning vehicle 1.

The oblique inter-vehicle distance detection unit 21 is configured to detect an inter-vehicle distance DO which is the distance between an obliquely-neighboring vehicle 102 and the leaning vehicle 1. FIG. 1 shows three graphs related to the speed of the leaning vehicle 1. To be more specific, the figure shows a graph indicating the relationship between the speed (V) of the leaning vehicle 1 in the traveling direction and the elapsed time (t), a graph indicating the relationship between the acceleration (A) in the traveling direction and the elapsed time (t), and a graph indicating the relationship between the jerk (J) in the traveling direction and the elapsed time (t). In the graph indicating the relationship between the jerk (J) and the elapsed time (t), lines indicating the maximum value J_{MAX} and the minimum value J_{MIN} of jerk in the traveling direction, which can be generated by the acceleration controller 22, are indicated by two-dot chain lines.

As shown in the graph indicating the relationship between the jerk (J) and the elapsed time (t) in FIG. 1, the active driving assist control unit 60 is configured to actively assist the driver by controlling the acceleration controller 22 in accordance with the detected oblique inter-vehicle distance D0, in such a way that the jerk in the traveling direction of the leaning vehicle 1 is smaller than the maximum value J_{MAX} and larger than the minimum value J_{MIN}.
Furthermore, the active driving assist control unit 60 is configured to actively assist the driver by controlling the acceleration controller 22 in such a way that, when the acceleration controller 22 is controlled to change the speed in the traveling direction of the leaning vehicle 1 in accordance with the detected oblique inter-vehicle distance D0, the relationship between the speed (V) and the elapsed time (t) is non-linear at an early stage of the speed change.

As a comparative example, FIG. 1 shows three graphs related to the speed when control is carried out in such a way that the relationship between the speed (V) and the elapsed time (t) is linear at an early stage of the speed change. In this comparative example, the absolute value of the jerk rapidly increases at the start of the speed change. The acceleration therefore rapidly changes. Thereafter, the speed changes whereas the acceleration is constant. On this account, the relationship between the speed and the elapsed time is substantially linear at an early stage of the speed change.

The leaning vehicle 1 of the embodiment of the present invention has the following characteristics. The leaning vehicle 1 is narrower in width than a passenger vehicle. On this account, an obliquely-neighboring vehicle 102 running obliquely forward or obliquely rearward of the leaning vehicle 1 may exist in the lane 100 in which the leaning vehicle 1 runs. The obliquely-neighboring vehicle 102 is remote from the leaning vehicle 1 in the vehicle left-right direction of the leaning vehicle 1. In the vehicle front-rear direction of the leaning vehicle 1, either the front end of the obliquely-neighboring vehicle 102 is forward of the front end of the leaning vehicle 1 and the trailing end of the obliquely-neighboring vehicle 102 is forward of the trailing end of the leaning vehicle 1 or the front end of the obliquely-neighboring vehicle 102 is rearward of the front end of the leaning vehicle 1 and the trailing end of the obliquely-neighboring vehicle 102 is rearward of the trailing end of the leaning vehicle 1. The oblique inter-vehicle distance detection unit 21 is configured to detect the oblique inter-vehicle distance D0 which is the distance between the obliquely-neighboring vehicle 102 and the leaning vehicle 1. The oblique inter-vehicle distance D0 is a distance of a line segment which is inclined with respect to both the vehicle front-rear direction and the vehicle left-right direction in plan view. The vehicle body frame of the leaning vehicle 1 leans rightward in the vehicle left-right direction when turning right and leans leftward in the vehicle left-right direction when turning left. On this account, even though the leaning vehicle 1 is narrow when standing up, the width of the leaning vehicle 1 preferable for running must be sufficiently long in the vehicle left-right direction in some running situations.
The active driving assist control unit 60 is configured to actively assist the driver by controlling the acceleration controller 22 in accordance with the detected oblique inter-vehicle distance D0. In other words, the active driving assist control unit 60 is configured to actively assist the driver by controlling the acceleration controller 22 by utilizing not only the distance between the obliquely-neighboring vehicle 102 and the leaning vehicle 1 in the vehicle front-rear direction but also the distance between the obliquely-neighboring vehicle 102 and the leaning vehicle 1 in the vehicle left-right direction. On this account, driving assist in conformity with the driver's feeling can be realized in situations in which an obliquely-neighboring vehicle 102 is running obliquely forward or rearward of the leaning vehicle 1.
Furthermore, the active driving assist control unit 60 is configured to actively assist the driver by controlling the acceleration controller 22 in accordance with the oblique inter-vehicle distance DO detected by the oblique inter-vehicle distance detection unit 21 while keeping the jerk in the traveling direction is smaller than the maximum value of the jerk generatable by the acceleration controller 22 and larger than the minimum value of the jerk generatable by the acceleration controller 22. Furthermore, the active driving assist control unit 60 is configured to actively assist the driver by controlling the acceleration controller 22 in such a way that, when the acceleration controller 22 is controlled to change the speed in the traveling direction in accordance with the oblique inter-vehicle distance D0 detected by the oblique inter-vehicle distance detection unit 21, the relationship between the speed and the elapsed time is non-linear at an early stage of the speed change.
The active assistance of the driver by controlling the acceleration controller 22 in accordance with the oblique inter-vehicle distance D0 may specifically indicate, for example, changing the speed of the leaning vehicle 1 in sync with the speed of the obliquely-neighboring vehicle 102 so that the oblique inter-vehicle distance D0 is maintained at a predetermined target distance. To achieve this, it is necessary to perform control corresponding to both changes in the distance in the vehicle front-rear direction and changes in the distance in the vehicle left-right direction. For this reason, careful control is required when compared to typical adaptive cruise control with which control is carried out in consideration only of the inter-vehicle distance in the vehicle front-rear direction. Therefore a high degree of synchronization with the obliquely-neighboring vehicle 102 is necessary. Increase in the degree of synchronization is achieved by increasing the absolute value of the acceleration of the leaning vehicle 1 when the obliquely-neighboring vehicle 102 accelerates or decelerates. However, when the absolute value of the acceleration is increased by rapidly changing the acceleration as in the comparative example shown in FIG. 1, the driver feels strange. In this regard, in the present embodiment, two restrictions are applied to the jerk when the driving assist control is performed in accordance with the oblique inter-vehicle distance D0. The first restriction is to arrange the jerk to be smaller than the maximum value J_{MAX} of the jerk which is generatable by the acceleration controller 22 and to be larger than the minimum value J_{MIM} of that jerk. The second restriction is to arrange the relationship between the speed and the elapsed time to be non-linear at an early stage of the speed change. The second restriction indicates that the acceleration changes at an early stage of the speed change and the change of the acceleration is not rapid. To put it differently, when the acceleration does not change rapidly, the absolute value of the jerk is small. In this way, even when the jerk is restricted, the absolute value of the acceleration can be increased with a sufficient time. Because the absolute value of the jerk is small, the driver is unlikely to feel strange even when the absolute value of the acceleration becomes large.
For this reason, the active driving assist control unit 60 is able to perform driving assist in conformity with the driver's feeling, because the unit actively assists the driver by controlling the acceleration controller 22 in accordance with the oblique inter-vehicle distance D0 while restricting the jerk.

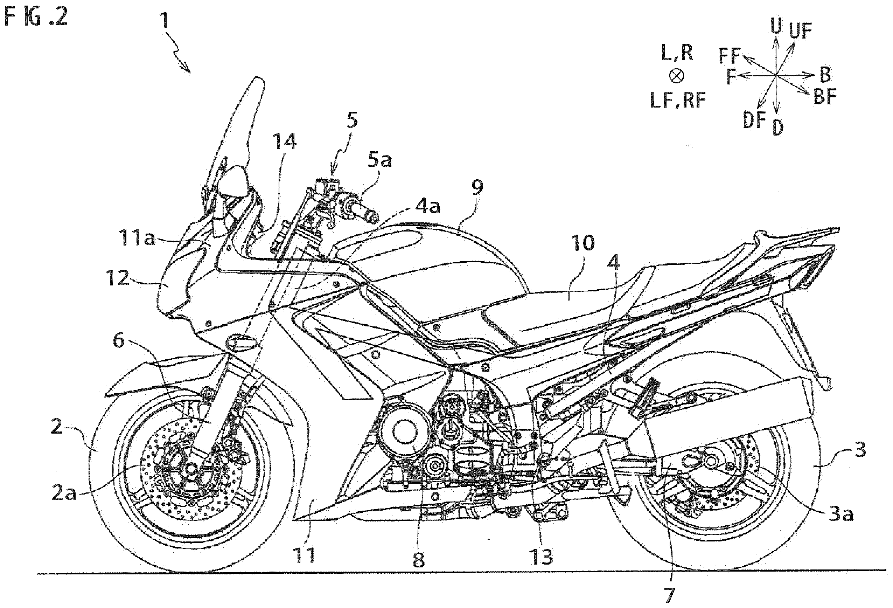

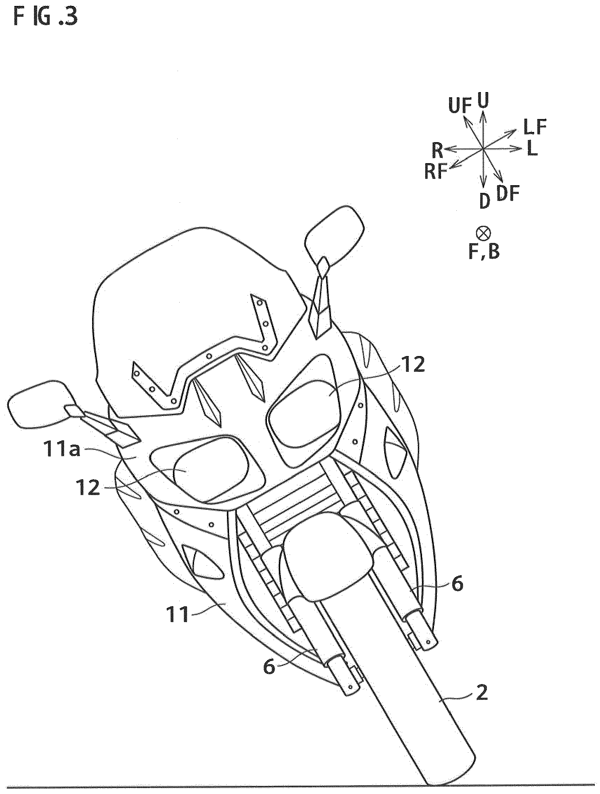

A specific example of the above-described embodiment of the present invention will be described with reference to FIG. 2 to FIG. 14. The following describes a case where the leaning vehicle 1 of the embodiment of the present invention is a motorcycle. In the descriptions below, members identical with those in the above-described embodiment of the present invention are not explained again. Basically, a specific example of an embodiment of the present invention fully encompasses the embodiment of the present invention. An arrow F and an arrow B in each figure indicate forward and rearward in the vehicle front-rear direction, respectively, whereas an arrow L and arrow R indicate leftward and rightward in the vehicle left-right direction, respectively. Arrows U and D indicate upward and downward, respectively. An up-down direction is a direction vertical to the road surface. FIG. 2 shows the motorcycle 1 in an upright state. FIG. 3 shows the motorcycle 1 in which the vehicle body frame 4 leans. In both FIG. 2 and FIG. 3, the road surface is horizontal.

### <Overall Structure of Motorcycle 1>

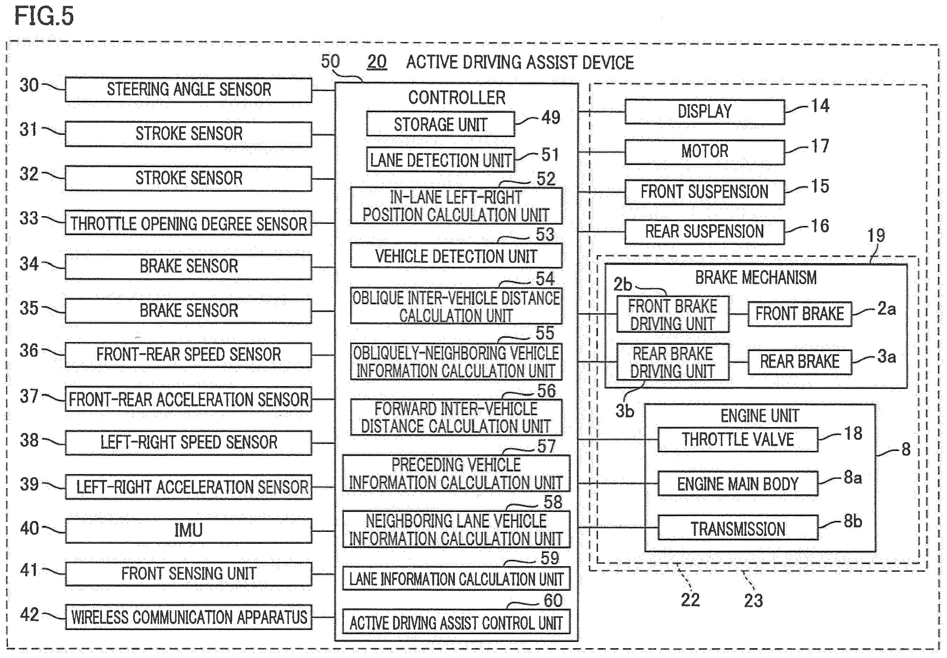

As shown in FIG. 2, the motorcycle 1 includes the front wheel unit 2, the rear wheel unit 3, and the vehicle body frame 4. A head pipe 4a is provided at a front portion of the vehicle body frame 4. A steering shaft (not illustrated) is rotatably inserted into the head pipe 4a. An upper end portion of the steering shaft is connected to a handle unit 5. Upper end portions of paired left and right front forks 6 are secured to the handle unit 5. Lower end portions of the front forks 6 support the front wheel unit 2. The front wheel unit 2 is formed of a single front wheel. The front wheel includes a tire and a wheel. When the handle unit 5 is steered, a plane, which passes the center in the width direction of the front wheel and is orthogonal to the axle shaft, leans relative to the vehicle front-rear direction (FB direction) of the motorcycle 1. Each front fork 6 includes a front suspension 15 (see FIG. 5) which is constructed to absorb shocks in the up-down direction.

A front end portion of each swingarm 7 is swingably supported by a rear portion of the vehicle body frame 4. A rear end portion of this swingarm 7 supports the rear wheel unit 3. The rear wheel unit 3 is formed of a single rear wheel. The swingarms 7 are connected to the vehicle body frame 4 by paired left and right rear suspensions 16 (see FIG. 5) which are constructed to absorb shocks in the up-down direction.

A front brake 2a is provided at the front wheel unit 2. A rear brake 3a is provided at the rear wheel unit 3. The front brake 2a and the rear brake 3a are so-called disc brakes. The front brake 2a and the rear brake 3a may not be disc brakes. A brake converts a kinetic energy to another type of energy (e.g., heat energy) or another kinetic energy. The front brake 2a and the rear brake 3a may be drum brakes. The front brake 2a and the rear brake 3a may be hydraulic brakes, mechanical brakes, or electric brakes.

The vehicle body frame 4 supports a fuel tank 9 and a seat 10. Furthermore, the vehicle body frame 4 supports an engine unit 8. The engine unit 8 is provided below the upper end of the seat 10. When viewed in the up-down direction, at least a part of the engine unit 8 may or may not overlap the seat 10. In other words, at least a part of the engine unit 8 may not be positioned straight below the seat 10. The engine unit 8 may be a 4-stroke engine or a 2-stroke engine.

Although not illustrated, the engine unit 8 includes an engine main body 8a and a transmission 8b, as shown in FIG. 5. The driving force output from the engine main body 8a is transmitted to the rear wheel unit 3 via the transmission 8b. The vehicle body frame 4 further supports a battery (not illustrated). The battery is configured to supply electric power to electronic apparatuses such as a later-described controller 50 and sensors.

As shown in FIG. 5, the motorcycle 1 includes a wireless communication apparatus 42. The wireless communication apparatus 42 is configured to be able to receive a GNSS (Global Navigation Satellite System) signal. The GNSS signal includes, for example, current position information such as longitude and latitude. The wireless communication apparatus 42 is configured to be able to perform vehicle-to-vehicle communication and road-to-vehicle communication. The vehicle-to-vehicle communication is communication between on-board communication apparatuses. The road-to-vehicle communication is communication between a road-side communication apparatus and an on-board communication apparatus. The on-board communication apparatus transmits information, such as the speed of a vehicle on which the on-board communication apparatus is mounted, to a road-side communication apparatus or an on-board communication apparatus of another vehicle. The road-side communication apparatus transmits information regarding a road (e.g., signal information and traffic control information) to an on-board communication apparatus. In addition to this, the road-side communication apparatus transmits information received from an on-board communication apparatus to another on-board communication apparatus. Information transmitted by the road-side communication apparatus may include presence/absence of a vehicle and the speed of a vehicle. The wireless communication apparatus 42 may be constructed to be able to receive a signal transmitted from a communication center remote from the road. Data received by the wireless communication apparatus 42 may include map data.

At least a part of the vehicle body frame 4 is covered with a vehicle body cover 11. The vehicle body cover 11 includes a front cowling 11a which is provided at a front portion of the motorcycle 1. A headlight 12 is provided in the front cowling 11a.

As shown in FIG. 2, footrests 13 are provided at lower parts on left and right sides of the motorcycle 1, respectively. A brake pedal, which is not illustrated, is provided in front of the right footrest 13. When the driver operates the brake pedal, the rear brake 3a is activated and the rear wheel unit 3 brakes. The rear brake 3a is activated not only in response to an operation of the brake pedal but also by a rear brake driving unit 3b (see FIG. 5). The rear brake driving unit 3b is controlled by the controller 50. The rear brake 3a and the rear brake driving unit 3b are included in a brake mechanism 19.

The handle unit 5 includes a left grip 5a (see FIG. 2 and FIG. 3) and a right grip 5b (see FIG. 3). The right grip 5b is an accelerator grip. The accelerator grip 5b is operated to adjust the output of the engine main body 8a. To be more specific, the accelerator grip 5b is operated to adjust the opening degree of a throttle valve 18 of the engine unit 8. A brake lever (not illustrated) is provided in front of the right grip 5b. When the driver operates the brake lever, the front brake 2a is activated and the front wheel unit 2 brakes. The front brake 2a is activated not only in response to an operation of the brake lever but also by a front brake driving unit 2b (see FIG. 5). The front brake driving unit 2b is controlled by the controller 50. The front brake 2a and the front brake driving unit 2b are included in the brake mechanism 19.

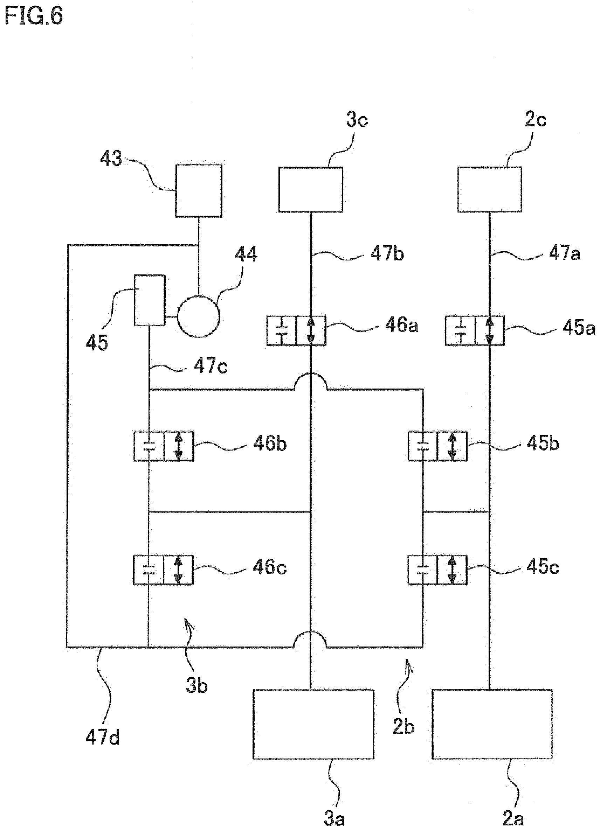

The following will describe a specific example of the brake mechanism 19 when the front brake 2a and the rear brake 3a are hydraulic brakes, with reference to FIG. 6. It is noted that the brake mechanism 19 is not limited to the specific example shown in FIG. 6. As shown in FIG. 6, the brake mechanism 19 includes a reserve tank 43, a pump 44, an accumulator 45, and valves 45a to 45c and 46a to 46c. When a driving assist mode or an autonomous driving mode is set, the pump 44 is always drivable by a motor. The valves 45a to 45c and 46a to 46c are controlled by the controller 50. Each of the valves 45a to 45c and 46a to 46c is, for example, an electromagnetic valve. A master cylinder 2c of the brake lever is connected to the front brake 2a via a first hydraulic passage 47a. A master cylinder 3c of the brake pedal is connected to the rear brake 3a via a second hydraulic passage 47b. A first front valve 45a is provided on the first hydraulic passage 47a, whereas a first rear valve 46a is provided on the second hydraulic passage 47b. The reserve tank 43 is connected to a third hydraulic passage 47c through which oil is supplied from the reserve tank 43 to the front brake 2a and the rear brake 3a. The reserve tank 43 is further connected to a fourth hydraulic passage 47d through which oil is supplied from the front brake 2a and the rear brake 3a to the reserve tank 43. A part of the third hydraulic passage 47c is a part of the fourth hydraulic passage 47d, too. The pump 44, the accumulator 45, a second front valve 45b, and a second rear valve 46b are provided on the third hydraulic passage 47c. A third front valve 45c and a third rear valve 46c are provided on the fourth hydraulic passage 47d. In the normal state, as shown in FIG. 6, the first front valve 45a and the first rear valve 46a are open whereas the other valves 45b, 45c, 46b, and 46c are closed. In response to an operation of the brake lever in this state, the hydraulic pressure in the front brake 2a increases and hence the front brake 2a is activated. When the controller 50 activates the front brake 2a, the controller 50 opens the second front valve 45b and closes the other valves. As a result, oil pressure-supplied from the pump 44 is supplied to the front brake 2a. Thereafter, if it is necessary to keep the front brake 2a activated, the controller 50 closes the second front valve 45b. With this, the hydraulic pressure in the front brake 2a is maintained. If it is necessary to release the front brake 2a, the controller 50 opens the third front valve 45c while keeping the second front valve 45b to be closed. With this, oil returns to the reserve tank 43 from the front brake 2a. The front brake driving unit 2b includes a third hydraulic passage 47c, a fourth hydraulic passage 47d, the reserve tank 43, the pump 44, the accumulator 45, and first to third front valves 45a to 45c. The rear brake driving unit 3b includes the third hydraulic passage 47c, the fourth hydraulic passage 47d, the reserve tank 43, the pump 44, the accumulator 45, and the first to third rear valves 46a to 46c.

As shown in FIG. 2, a display 14 is provided in front of the handle unit 5 and behind the front cowling 11a. The display 14 is configured to display, for example, vehicle speed, engine rotation speed, warnings, and the like. The handle unit 5 is provided with switches. By operating a switch, power supply from the battery to an electric device is started or stopped. Further, by operating a switch, the engine unit 8 is started or stopped. Further, by operating a switch, a screen image displayed on the display 14 is switched. Further, by operating a switch, one of selection items displayed on the display 14 is selected. Further, by operating a switch, one of riding modes is selected. The riding modes include a manual driving mode, the driving assist mode, and the autonomous driving mode. Each of these modes will be detailed later.

Arrows UF, DF, FF, BF, LF, and RF in FIG. 2 and FIG. 3 indicate upward, downward, forward, rearward, leftward, and rightward in the up-down direction, front-rear direction, or the left-right direction of the vehicle body frame 4, respectively. In this specification, an up-down direction (UFDF direction) of the vehicle body frame 4 is in parallel to the axial direction of the head pipe 4a of the vehicle body frame 4. A left-right direction (LFRF direction) of the vehicle body frame 4 is orthogonal to a plane which passes the center in the width direction of the vehicle body frame 4. A front-rear direction (FFBF direction) of the vehicle body frame 4 is orthogonal to both the up-down direction (UFDF direction) of the vehicle body frame 4 and the left-right direction (LFRF direction) of the vehicle body frame 4.

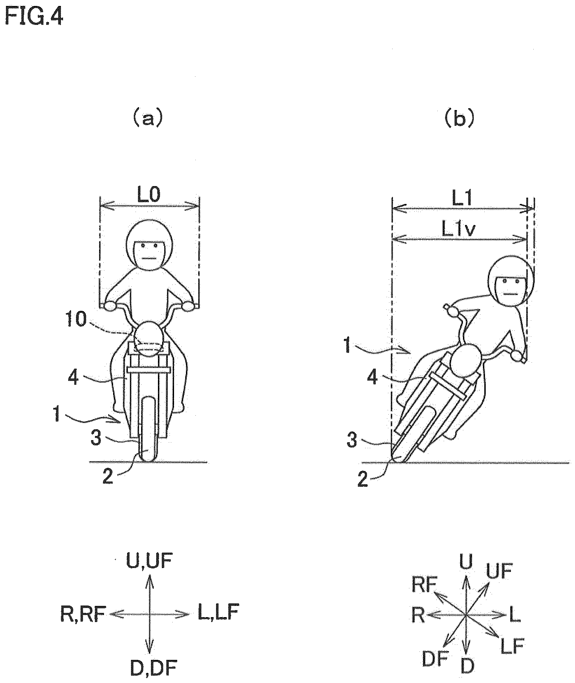

As shown in FIG. 3 and FIG. 4(b), the vehicle body frame 4 of the motorcycle 1 leans rightward in the vehicle left-right direction when turning right and leans leftward in the vehicle left-right direction when turning left. When the vehicle body frame 4 leans, the vehicle left-right direction (LR direction) of the motorcycle 1 does not coincide with the left-right direction (LFRF direction) of the vehicle body frame 4 in front view. When the vehicle body frame 4 leans in the left-right direction, the up-down direction (UD direction) of the motorcycle 1 does not coincide with the up-down direction (UFDF direction) of the vehicle body frame 4 in front view. When viewed in the up-down direction, the vehicle front-rear direction (FB direction) of the motorcycle 1 coincides with the front-rear direction (FFBF direction) of the vehicle body frame 4. When the handle unit 5 is rotated, a plane, which passes the center in the width direction of the front wheel, leans relative to the vehicle front-rear direction (FB direction) of the motorcycle 1 and the front-rear direction (FFBF direction) of the vehicle body frame 4 when viewed in the up-down direction.

As shown in FIG. 4(a), the width which encompasses the motorcycle 1 when the vehicle body frame 4 is upright and the driver is referred to as an upright state width L0. The upright state width L0 is substantially identical with the width of only the motorcycle 1 when the vehicle body frame 4 is upright. As shown in FIG. 4(b), the width which encompasses the motorcycle 1 and the driver when the vehicle body frame 4 leans is referred to as a lean state width L1. Furthermore, the width of the motorcycle 1 when the vehicle body frame 4 leans is referred to as a leaning vehicle width L1v. The widths L0, L1, and L1v are widths measured in a left-right direction (LLRL direction) of the lane. Each of the widths L0, L1, and L1v may be a width in the vehicle left-right direction (LR direction) or a width in a direction orthogonal to the traveling direction of the motorcycle 1.

As shown in FIG. 5, the motorcycle 1 includes a steering angle sensor 30 which is configured to detect a steering angle of a steering shaft. The motorcycle 1 includes a stroke sensor 31 which is configured to detect an extension amount of a front suspension of the front fork 6. The motorcycle 1 includes a stroke sensor 32 which is configured to detect an extension amount of a rear suspension. The motorcycle 1 includes a throttle opening degree sensor 33 which is configured to detect the opening degree of a throttle valve 18. The motorcycle 1 includes a brake sensor 34 which is configured to detect a braking force exerted to the front wheel unit 2 by the front brake 2a. The motorcycle 1 includes a brake sensor 35 which is configured to detect a braking force exerted to the rear wheel unit 3 by the rear brake 3a.

As shown in FIG. 5, the motorcycle 1 includes a front-rear speed sensor 36, a front-rear acceleration sensor 37, a left-right speed sensor 38, and a left-right acceleration sensor 39. The front-rear speed sensor 36 is configured to detect the speed V1_{FB} of the motorcycle 1 in the vehicle front-rear direction (FB direction). The front-rear acceleration sensor 37 is configured to detect the acceleration A1_{FB} of the motorcycle 1 in the vehicle front-rear direction (FB direction). The left-right speed sensor 38 is configured to detect the speed V1_{LR} of the motorcycle 1 in the vehicle left-right direction (LR direction). The left-right acceleration sensor 39 is configured to detect the acceleration A1_{LR} of the motorcycle 1 in the vehicle left-right direction (LR direction). The motorcycle 1 may include a sensor which is configured to detect the speed in the traveling direction. Further, the motorcycle 1 may include a sensor which is configured to detect the acceleration in the traveling direction. The front-rear speed sensor 36, the front-rear acceleration sensor 37, the left-right speed sensor 38, and the left-right acceleration sensor 39 are equivalent to a speed-related information detection unit of the present invention. The speed V1_{FB} may be detected by the later-described controller 50 based on a signal transmitted from the front-rear speed sensor 36. In this case, the front-rear speed sensor 36 and the controller 50 are equivalent to the speed-related information detection unit of the present invention. The same applies to the front-rear acceleration sensor 37, the left-right speed sensor 38, and the left-right acceleration sensor 39.

The motorcycle 1 includes an IMU (Inertial Measurement Unit) 40. The IMU 40 is a device configured to measure the posture and the traveling direction of the motorcycle 1. The IMU 40 includes at least a three-axis gyroscope and a three-directional accelerometer. The IMU 40 is configured to detect angles or angular accelerations of three axes and accelerations in three directions. The accelerations in the three directions are acceleration in the front-rear direction (FFBF direction) of the vehicle body frame 4, the acceleration in the left-right direction (LFRF direction) of the vehicle body frame 4, and the acceleration in the up-down direction (UFDF direction) of the vehicle body frame 4. The three axes are a yaw axis, a roll axis, and a pitch axis of the motorcycle 1. The yaw axis of the motorcycle 1 extends in the up-down direction (UFDF direction) of the vehicle body frame 4. The roll axis of the motorcycle 1 extends in the front-rear direction (FFBF direction) of the vehicle body frame 4. The pitch axis of the motorcycle 1 extends in the left-right direction (LFRF direction) of the vehicle body frame 4. The angles of the three axes are a yaw angle, a roll angle, and a pitch angle of the motorcycle 1, respectively. The angular speeds of the three axes are a yaw rate, a roll rate, and a pitch rate of the motorcycle 1, respectively. The yaw angle, the roll angle, and the pitch angle of the motorcycle 1 are equivalent to rotational angles around the yaw axis, the roll axis, and the pitch axis of the motorcycle 1, respectively. The yaw rate, the roll rate, and the pitch rate of the motorcycle 1 are angular speeds of the rotation around the yaw axis, the roll axis, and the pitch axis of the motorcycle 1, respectively.

A roll angle θ1 of the motorcycle 1 is a tilt angle of leaning in the vehicle left-right direction (LR direction) of the vehicle body frame 4. A roll rate ω1 of the motorcycle 1 is a tilt angular speed of leaning in the vehicle left-right direction (LR direction) of the vehicle body frame 4. The IMU 40 is configured to detect the leaning in the vehicle left-right direction (LR direction) of the motorcycle 1. The IMU 40 is equivalent to a leaning detection unit of the present invention. The roll angle or the roll rate may be detected by the later-described controller 50 based on a signal transmitted from the IMU 40. In this case, the IMU 40 and the controller 50 are equivalent to the leaning detection unit of the present invention. Hereinafter, the IMU 40 may be termed a sensor 40.

The motorcycle 1 includes a front sensing unit 41 which is configured to sense objects in front of the motorcycle 1. The front sensing unit 41 may be provided at any position on condition that objects in front of the motorcycle 1 can be sensed. The front sensing unit 41 may be, for example, provided at the headlight 12 in the front cowling 11a. The front sensing unit 41 includes at least one of, for example, a camera, a millimeter wave radar, a microwave radar, a laser radar, an ultrasonic sensor, an acoustic sensor, an infrared sensor, a radio wave/electric field sensor, a magnetic sensor, or a range image sensor. Such radars and sensors are configured to emit a millimeter wave or the like forward from the motorcycle 1 and receive a reflected wave reflected on an object. The camera may be a monocular camera or compound-eye camera. In the descriptions below, the front sensing unit 41 may be referred to as a sensor 41.

The motorcycle 1 is switchable between the manual driving mode, the driving assist mode, and the autonomous driving mode. A driving operation of the motorcycle 1 is performed by the driver in the manual driving mode. The driving operation of the motorcycle 1 is performed by the driver but the driver is actively assisted in the driving assist mode. In the driving assist mode, the drive control of the motorcycle 1 by the driver may be passively assisted. In the autonomous driving mode, the driver is actively assisted so that the motorcycle 1 automatically reaches a destination even though the drive control of the motorcycle 1 is not performed by the driver. The driving assist mode may be automatically set in accordance with the running situation, even though the mode is not selected by the driver. The driving assist mode may include a plurality of sub-modes.

### <Structure of Controller 50>

As shown in FIG. 5, the motorcycle 1 includes the controller 50 which is configured to control operations of parts of the motorcycle 1. The controller 50 is connected to the sensors 30 to 41 and the wireless communication apparatus 42, which have been described above. The sensors, the wireless communication apparatus 42, and the controller 50 constitute the active driving assist device 20. The controller 50 is, for example, formed of a CPU (Central Processing Unit), a ROM (Read Only Memory), and a RAM (Random Access Memory). The CPU executes information processing based on a program and data sets stored in the ROM and the RAM.

As shown in FIG. 5, the controller 50 includes, as function processors, a lane detection unit 51, an in-lane left-right position calculation unit 52, a vehicle detection unit 53, an oblique inter-vehicle distance calculation unit 54, an obliquely-neighboring vehicle information calculation unit 55, a forward inter-vehicle distance calculation unit 56, a preceding vehicle information calculation unit 57, a neighboring lane vehicle information calculation unit 58, a lane information calculation unit 59, and the active driving assist control unit 60.

The controller 50 includes a storage unit 49 including a ROM and a RAM. The storage unit 49 stores map data. The map data stored in the storage unit 49 may be updated with data supplied from the wireless communication apparatus 42. The storage unit 49 further stores the upright state width L0 of the motorcycle 1. The storage unit 49 may store the length of the motorcycle 1 in the vehicle front-rear direction (FB direction).

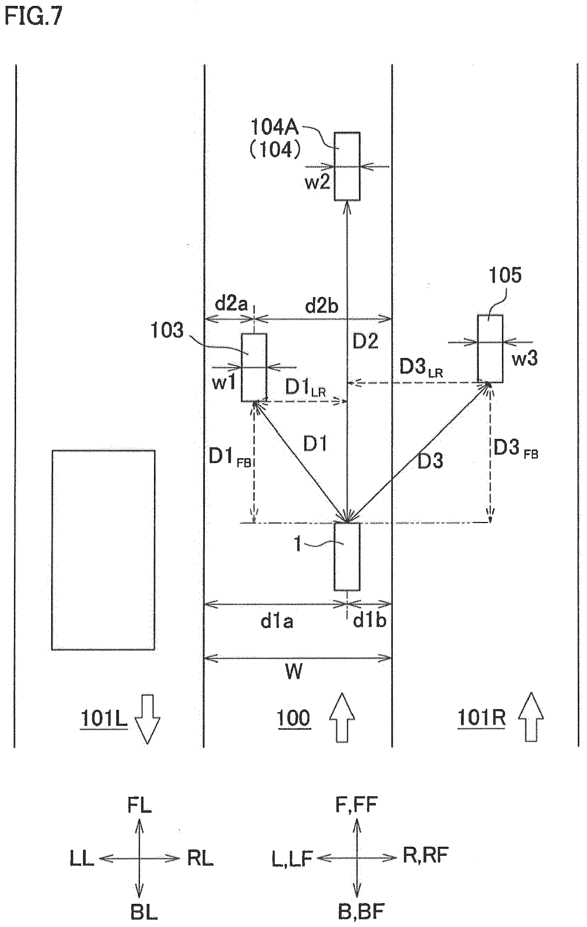

As shown in figures such as FIG. 7, the width of the lane 100 in which the motorcycle 1 runs is at least twice as long as the upright state width L0 (see FIG. 4(a)) of the motorcycle 1. A lane mark (e.g., a white line) may or may not be provided at each edge of the lane 100. Arrows FL, BL, LL, and RL in each figure indicate forward, rearward, leftward, and rightward in the front-rear direction of the lane 100, respectively. Hereinafter, the front-rear direction of the lane 100 will be referred to as a lane front-rear direction (FLBL direction). Furthermore, the left-right direction of the lane 100 will be referred to as a lane left-right direction (LLRL direction).

A vehicle which satisfies the following three conditions (a) to (c) is referred to as an obliquely-forward-neighboring vehicle 103.
(a) The vehicle runs in the lane 100.
(b) The vehicle is remote from the motorcycle 1 in the vehicle left-right direction (LR direction) of the motorcycle 1.
(c-1) The vehicle is, in the vehicle front-rear direction (FB direction) of the leaning vehicle 1, the front end of the vehicle is forward of the front end of the motorcycle 1 and the trailing end of the vehicle is forward of the trailing end of the motorcycle 1.
The obliquely-forward-neighboring vehicle 103 is included in the above-described obliquely-neighboring vehicle 102. The obliquely-forward-neighboring vehicle 103 is a vehicle which satisfies a condition that, in the lane 100, there is no other vehicle in a region which is rearward of (in the direction B) the trailing end of the obliquely-forward-neighboring vehicle 103 and is forward of (in the direction F) the front end of the motorcycle 1.

A vehicle which runs in the lane 100 and is at least partially overlapped with the motorcycle 1 when viewed in the vehicle front-rear direction (FB direction) of the motorcycle 1 is referred to as a preceding vehicle 104. The preceding vehicle 104 is a vehicle which satisfies a condition that there are no other vehicles on a linear line connecting the preceding vehicle 104 with the motorcycle 1. Furthermore, among the preceding vehicles 104, a vehicle with the trailing end which is forward of the trailing end of the obliquely-forward-neighboring vehicle 103 in the vehicle front-rear direction (FB direction) of the motorcycle 1 is referred to as a leading preceding vehicle 104A. When the obliquely-forward-neighboring vehicle 103 exists, the preceding vehicle 104 is the leading preceding vehicle 104A. Meanwhile, the preceding vehicle 104 when no obliquely-forward-neighboring vehicle 103 exists is referred to as a sole preceding vehicle. Although the sole preceding vehicle is not illustrated, the sole preceding vehicle is denoted as 104B in order to differentiate this vehicle from the leading preceding vehicle 104A.

A lane to the left of (LL direction) the lane 100 will be referred to as a left lane 101L. A lane to the right of (RL direction) the lane 100 will be referred to as a right lane 101R. The left lane 101L and the right lane 101R are collectively termed neighboring lanes 101. In the specific example of the embodiment of the present invention, the direction of vehicle flow of the left lane 101L is opposite to the direction of vehicle flow of the lane 100. The direction of vehicle flow of the right lane 101R is identical with the direction of vehicle flow of the lane 100. Outline arrows attached to the lanes 100 and 101 in each figure indicate direction of vehicle flow.

On a neighboring lane 101, a vehicle running in a region forward of (F direction) the motorcycle 1 will be referred to as a neighboring lane vehicle 105.

In FIG. 7, the obliquely-forward-neighboring vehicle 103, the preceding vehicle 104, and the neighboring lane vehicle 105 are all of the leaning vehicle type. In this regard, the obliquely-forward-neighboring vehicle 103, the preceding vehicle 104, and the neighboring lane vehicle 105 may not be of the leaning vehicle type. These vehicles may be passenger vehicles, for example. The obliquely-forward-neighboring vehicle 103 is likely to be of the leaning vehicle type because this vehicle is remote from the motorcycle 1 in the vehicle left-right direction (LR direction). The obliquely-forward-neighboring vehicle 103 may be limited to a vehicle having a width narrower than a predetermined width in the lane left-right direction (LLRL direction) or the vehicle left-right direction (LR direction).

The lane detection unit 51 is configured to detect the lane 100 in which the motorcycle 1 runs. The detection of the lane 100 means that the positions of the respective edges of the lane 100 are detected. The lane detection unit 51 may detect the lane 100, based on a result of sensing by the front sensing unit 41. For example, the lane 100 may be detected based on lane marks (e.g., white lines). The lane detection unit 51 may detect the lane 100 based on a GNSS signal which is received by the wireless communication apparatus 42 and map data which is either stored in the storage unit 49 or received by the wireless communication apparatus 42. The lane detection unit 51 may detect the lane 100, based on information other than a GNSS signal, the information being received by the wireless communication apparatus 42. The lane 100 may be detected based on a combination of these sets of information.

The lane detection unit 51 is configured to detect the presence/absence of a neighboring lane 101. The lane detection unit 51 may detect the positions of the respective edges of a neighboring lane 101. The lane detection unit 51 is configured to detect the presence/absence of a neighboring lane 101 based on information which is at least one of a result of sensing by the front sensing unit 41, map data, or information which is received by the wireless communication apparatus 42 and is not map data. The same applies to the detection of the positions of the respective edges of a neighboring lane 101.

The in-lane left-right position calculation unit 52 is configured to detect the position of the motorcycle 1 in the lane 100 in the lane left-right direction (LLRL direction). The detection of the position of the motorcycle 1 in the lane 100 in the lane left-right direction (LLRL direction) includes, to be more specific, the following ways. For example, the distances d1a and d1b (see FIG. 7) between the edges of the lane 100 and a predetermined part of the motorcycle 1 in the lane left-right direction (LLRL direction) are detected. Alternatively, for example, only the distance (dla or dlb) between one edge of the lane 100 and the predetermined part of the motorcycle 1 in the lane left-right direction (LLRL direction) is detected. Alternatively, for example, the lane 100 is divided into a plurality of regions which are lined up in the lane left-right direction (LLRL direction), and in which region the motorcycle 1 locates is detected.

The in-lane left-right position calculation unit 52 may detect the position of the motorcycle 1 in the lane 100 in the lane left-right direction (LLRL direction) based on a result of sensing by the front sensing unit 41. To be more specific, for example, the front sensing unit 41 is a camera, and the position of the motorcycle 1 is detected by detecting the positions of the edges of the lane 100 based on an image. The in-lane left-right position calculation unit 52 may detect the position not based on a result of sensing by the front sensing unit 41 but based on a GNSS signal which is received by the wireless communication apparatus 42 and map data which is either stored in the storage unit 49 or received by the wireless communication apparatus 42. The in-lane left-right position calculation unit 52 may detect the position based on a result of sensing by the front sensing unit 41, a GNSS signal, and map data.

The vehicle detection unit 53 is configured to detect the obliquely-forward-neighboring vehicle 103, the preceding vehicle 104, and the neighboring lane vehicle 105. The vehicle detection unit 53 is configured to determine the presence/absence of an obliquely-forward-neighboring vehicle 103, a preceding vehicle 104, and a neighboring lane vehicle 105 based on a result of sensing by the front sensing unit 41. The vehicle detection unit 53 is configured to determine whether a detected vehicle is an obliquely-forward-neighboring vehicle 103 or a neighboring lane vehicle 105, based on a detection result of the lane detection unit 51.

The oblique inter-vehicle distance calculation unit 54 is configured to detect an obliquely-forward inter-vehicle distance D1 which is the distance between the motorcycle 1 and an obliquely-forward-neighboring vehicle 103. The obliquely-forward inter-vehicle distance D1 is the shortest distance between a predetermined part of the motorcycle 1 and a predetermined part of the obliquely-forward-neighboring vehicle 103. The predetermined part of the motorcycle 1 may be the front wheel unit 2 or the front sensing unit 41. The predetermined part of the obliquely-forward-neighboring vehicle 103 may be the trailing end of the obliquely-forward-neighboring vehicle 103. The predetermined part of the obliquely-forward-neighboring vehicle 103 may change in accordance with the position of the obliquely-forward-neighboring vehicle 103 relative to the motorcycle 1. The distance between the motorcycle 1 and the obliquely-forward-neighboring vehicle 103 in the vehicle front-rear direction (FB direction) of the motorcycle 1 is referred to as a distance D1_{FB}. The distance between the motorcycle 1 and the obliquely-forward-neighboring vehicle 103 in the vehicle left-right direction (LR direction) of the motorcycle 1 is referred to as a distance D1_{LR}. The detection of the obliquely-forward inter-vehicle distance D1 may indicate the detection of only the distance D1_{FB} and the distance D1_{LR}. The distance D1_{FB} may be a distance in the lane front-rear direction (FLBL direction) and the distance D1_{LR} may be a distance in the lane left-right direction (LLRL direction).

The oblique inter-vehicle distance calculation unit 54 may detect the obliquely-forward inter-vehicle distance D1 based on a result of sensing by the front sensing unit 41. A specific example of detection of the obliquely-forward inter-vehicle distance D1 when the front sensing unit 41 is a millimeter wave radar or a microwave radar will be described. The front sensing unit 41 is configured to emit radio waves in many different directions. The oblique inter-vehicle distance calculation unit 54 is configured to calculate the obliquely-forward inter-vehicle distance D1 based on a time from the emission of radio waves from the front sensing unit 41 to the reach of a reflected wave reflected on the obliquely-forward-neighboring vehicle 103 to the front sensing unit 41. Furthermore, the position of the obliquely-forward-neighboring vehicle 103 relative to the motorcycle 1 is specified based on the direction of an incident wave or a reflected wave, and the distance D1_{FB} and the distance D1_{LR} can be calculated. The oblique inter-vehicle distance calculation unit 54 calculates the distance D1, the distance D1_{FB}, and the distance D1_{LR} in a similar manner, when the front sensing unit 41 is a laser radar, an ultrasonic sensor, an acoustic sensor, an infrared sensor, a radio wave/electric field sensor, a magnetic sensor, or a range image sensor. When the front sensing unit 41 is a monocular camera, the oblique inter-vehicle distance calculation unit 54 specifies a distance measurement object in an image and calculates the distance D1, the distance D1_{FB}, and the distance D1_{LR} based on trigonometry. When the front sensing unit 41 is compound-eye camera, the distance D1, the distance D1_{FB}, and the distance D1_{LR} are calculated based on the parallax of the two eyes.
The oblique inter-vehicle distance calculation unit 54 may detect the obliquely-forward inter-vehicle distance D1 based on the positional information of the motorcycle 1 and the positional information of the obliquely-forward-neighboring vehicle 103 detected by the wireless communication apparatus 42.

The obliquely-neighboring vehicle information calculation unit 55 is configured to detect the width w1 of the obliquely-forward-neighboring vehicle 103 in the lane left-right direction (LLRL direction). The obliquely-neighboring vehicle information calculation unit 55 is configured to detect the width w1 based on a result of sensing by the front sensing unit 41. The width w1 may be the width of the obliquely-forward-neighboring vehicle 103 in the vehicle left-right direction (LR direction) of the motorcycle 1. When the obliquely-forward-neighboring vehicle 103 is a leaning vehicle, the width w1 may always be the width of the obliquely-forward-neighboring vehicle 103 in an upright state, irrespective of the leaning of the obliquely-forward-neighboring vehicle 103. Alternatively, when the obliquely-forward-neighboring vehicle 103 is a leaning vehicle, the width w1 may be changed in accordance with the leaning of the obliquely-forward-neighboring vehicle 103. This width w1 may or may not encompass the driver of the obliquely-forward-neighboring vehicle 103.

The obliquely-neighboring vehicle information calculation unit 55 is configured to detect the position of the obliquely-forward-neighboring vehicle 103 in the lane 100 in the lane left-right direction (LLRL direction). A specific example of the detection of the position of the obliquely-forward-neighboring vehicle 103 in the lane 100 in the lane left-right direction (LLRL direction) is similar to the specific example of the detection of the position of the motorcycle 1 described in relation to the in-lane left-right position calculation unit 52. For example, the distances d2a and d2b (see FIG. 7) between the edges of the lane 100 and a predetermined part of the obliquely-forward-neighboring vehicle 103 in the lane left-right direction (LLRL direction).
The obliquely-neighboring vehicle information calculation unit 55 is configured to detect the position of the obliquely-forward-neighboring vehicle 103 in the lane 100 in the lane left-right direction (LLRL direction), based on a result of sensing by the front sensing unit 41. For example, the obliquely-neighboring vehicle information calculation unit 55 may detect the position based on a result of sensing by the front sensing unit 41 and map data which is either stored in the storage unit 49 or received by the wireless communication apparatus 42.

The obliquely-neighboring vehicle information calculation unit 55 is configured to detect the relative speed RV2_{FB} and the relative acceleration RA2_{FB} of the obliquely-forward-neighboring vehicle 103 relative to the motorcycle 1 in the vehicle front-rear direction (FB direction) of the motorcycle 1. Furthermore, the obliquely-neighboring vehicle information calculation unit 55 is configured to detect the relative speed RV2_{LR} and the relative acceleration RA2_{LR} of the obliquely-forward-neighboring vehicle 103 relative to the motorcycle 1 in the vehicle left-right direction (LR direction) of the motorcycle 1. The obliquely-neighboring vehicle information calculation unit 55 is configured to detect the relative speed RV2_{FB}, the relative speed RV2_{LR}, the relative acceleration RA2_{FB}, and the relative acceleration RA2_{LR} based on a result of sensing by the front sensing unit 41.

The obliquely-neighboring vehicle information calculation unit 55 may detect the speed V2_{FB} of the obliquely-forward-neighboring vehicle 103 in the vehicle front-rear direction (FB direction) of the motorcycle 1, based on the relative speed RV2_{FB} of the obliquely-forward-neighboring vehicle 103 and the speed V1_{FB} of the motorcycle 1. The obliquely-neighboring vehicle information calculation unit 55 may detect the acceleration A2_{FB} of the obliquely-forward-neighboring vehicle 103 in the vehicle front-rear direction (FB direction) of the motorcycle 1, based on the relative acceleration RA2_{FB} of the obliquely-forward-neighboring vehicle 103 and the acceleration A1_{FB} of the motorcycle 1.

The wireless communication apparatus 42 may receive information of the traveling direction of the obliquely-forward-neighboring vehicle 103 and the speed and/or acceleration of the obliquely-forward-neighboring vehicle 103 in the traveling direction of the obliquely-forward-neighboring vehicle 103, by means of vehicle-to-vehicle communication or road-to-vehicle communication. Based on these sets of information received by the wireless communication apparatus 42, the obliquely-neighboring vehicle information calculation unit 55 may detect the speed V2_{FB} and/or the acceleration A2_{FB} of the obliquely-forward-neighboring vehicle 103 in the vehicle front-rear direction (FB direction) of the motorcycle 1 and the speed V2_{LR} and/or the acceleration A2_{LR} of the obliquely-forward-neighboring vehicle 103 in the vehicle left-right direction (LR direction) of the motorcycle 1. The obliquely-neighboring vehicle information calculation unit 55 may detect the relative speed RV2_{FB} based on the detected speed V2_{FB} of the obliquely-forward-neighboring vehicle 103 in the vehicle front-rear direction (FB direction) of the motorcycle 1 and the speed V1_{FB} of the motorcycle 1 in the vehicle front-rear direction (FB direction). The relative acceleration RA2_{FB}, the relative speed RV2_{LR}, and the relative acceleration RA2_{LR} may be detected in a similar manner.

When the obliquely-forward-neighboring vehicle 103 is a leaning vehicle, the obliquely-forward-neighboring vehicle 103 includes a vehicle body frame which leans rightward of the vehicle 103 when turning right and leans leftward of the vehicle 103 when turning left. The obliquely-neighboring vehicle information calculation unit 55 is configured to detect the leaning of the vehicle body frame of the obliquely-forward-neighboring vehicle 103 relative to the up-down direction. To be more specific, the obliquely-neighboring vehicle information calculation unit 55 is configured to detect at least one of a tilt angle θ2, a tilt angular speed ω2, or a tilt angular acceleration α2 of the vehicle body frame of the obliquely-forward-neighboring vehicle 103 relative to the up-down direction. The obliquely-neighboring vehicle information calculation unit 55 is configured to detect the tilt angle θ2, the tilt angular speed ω2, and the tilt angular acceleration α2 based on a result of sensing by the front sensing unit 41. The tilt angle θ2 may be a tilt angle of the vehicle body frame of the obliquely-forward-neighboring vehicle 103 in the vehicle left-right direction (LR direction) of the motorcycle 1 or a tilt angle of leaning of the vehicle body frame of the obliquely-forward-neighboring vehicle 103 in the vehicle left-right direction of the obliquely-forward-neighboring vehicle 103. The same applies to the tilt angular speed ω2 and the tilt angular acceleration α2. Alternatively, the wireless communication apparatus 42 receives information of the tilt angle θ2, the tilt angular speed ω2, and the tilt angular acceleration α2 by means of vehicle-to-vehicle communication or road-to-vehicle communication.

The forward inter-vehicle distance calculation unit 56 is configured to detect a forward inter-vehicle distance D2 which is the distance between the motorcycle 1 and a preceding vehicle 104. The forward inter-vehicle distance D2 may be the shortest distance between a predetermined part of the motorcycle 1 and a predetermined part of the preceding vehicle 104. The forward inter-vehicle distance D2 may be the distance between a predetermined part of the motorcycle 1 and a predetermined part of the preceding vehicle 104 in the lane front-rear direction (FLBL direction). The forward inter-vehicle distance D2 may be the distance between a predetermined part of the motorcycle 1 and a predetermined part of the preceding vehicle 104 in the vehicle front-rear direction (FB direction) of the motorcycle 1. The predetermined part of the motorcycle 1 may be the front wheel unit 2 or the front sensing unit 41. The predetermined part of the preceding vehicle 104 may be the trailing end of the preceding vehicle 104. The predetermined part of the preceding vehicle 104 may be different in accordance with the relative position of the preceding vehicle 104 relative to the motorcycle 1.

The forward inter-vehicle distance calculation unit 56 may detect the forward inter-vehicle distance D2 based on a result of sensing by the front sensing unit 41. The forward inter-vehicle distance calculation unit 56 may detect the forward inter-vehicle distance D2 based on the positional information of the motorcycle 1 and the positional information of the preceding vehicle 104 detected by the wireless communication apparatus 42.

The preceding vehicle information calculation unit 57 is configured to detect the width w2 of the preceding vehicle 104 in the lane left-right direction (LLRL direction). The preceding vehicle information calculation unit 57 is configured to detect the width w2 based on a result of sensing by the front sensing unit 41. The width w2 may be the width of the preceding vehicle 104 in the vehicle left-right direction (LR direction) of the motorcycle 1. When the preceding vehicle 104 is a leaning vehicle, the width w2 may always be the width of the preceding vehicle 104 in an upright state, irrespective of the leaning of the preceding vehicle 104. Alternatively, when the preceding vehicle 104 is a leaning vehicle, the width w2 may be changed in accordance with the leaning of the preceding vehicle 104. This width w2 may or may not encompass the driver of the preceding vehicle 104.

The preceding vehicle information calculation unit 57 is configured to detect the relative speed RV3_{FB} and the relative acceleration RA3_{FB} of the preceding vehicle 104 relative to the motorcycle 1 in the vehicle front-rear direction (FB direction) of the motorcycle 1. Furthermore, the preceding vehicle information calculation unit 57 is configured to detect the relative speed RV3_{LR} and the relative acceleration RA3_{LR} of the preceding vehicle 104 relative to the motorcycle 1 in the vehicle left-right direction (LR direction) of the motorcycle 1. The preceding vehicle information calculation unit 57 is configured to detect the relative speed RV3_{FB}, the relative speed RV3_{LR}, the relative acceleration RA3_{FB}, and the relative acceleration RA3_{LR} based on a result of sensing by the front sensing unit 41.

The wireless communication apparatus 42 may receive information of the traveling direction of the preceding vehicle 104 and the speed and/or acceleration of the preceding vehicle 104 in the traveling direction of the preceding vehicle 104, by means of vehicle-to-vehicle communication or road-to-vehicle communication. Based on these sets of information received by the wireless communication apparatus 42, the preceding vehicle information calculation unit 57 may detect the speed V3_{FB} and/or the acceleration A3_{FB} of the preceding vehicle 104 in the vehicle front-rear direction (FB direction) of the motorcycle 1 and the speed V3_{LR} and/or the acceleration A3_{LR} of the preceding vehicle 104 in the vehicle left-right direction (LR direction) of the motorcycle 1. The preceding vehicle information calculation unit 57 may detect the relative speed RV3_{FB} based on the detected speed V3_{FB} of the preceding vehicle 104 in the vehicle front-rear direction (FB direction) of the motorcycle 1 and the speed V1_{FB} of the motorcycle 1 in the vehicle front-rear direction (FB direction). The relative acceleration RA3_{FB}, the relative speed RV3_{LR}, and the relative acceleration RA3_{LR} may be detected in a similar manner.

When the preceding vehicle 104 is a leaning vehicle, the preceding vehicle 104 includes a vehicle body frame which leans rightward of the vehicle 104 when turning right and leans leftward of the vehicle 104 when turning left. The preceding vehicle information calculation unit 57 is configured to detect the leaning of the vehicle body frame of the preceding vehicle 104 relative to the up-down direction. To be more specific, the preceding vehicle information calculation unit 57 is configured to detect at least one of a tilt angle θ3, a tilt angular speed ω3, or a tilt angular acceleration α3 of the vehicle body frame of the preceding vehicle 104 relative to the up-down direction. The preceding vehicle information calculation unit 57 is configured to detect the tilt angle θ3, the tilt angular speed ω3, and the tilt angular acceleration α3 based on a result of sensing by the front sensing unit 41. The preceding vehicle information calculation unit 57 may obtain information of the tilt angle θ3, the tilt angular speed ω3, and the tilt angular acceleration α3 by means of vehicle-to-vehicle communication or road-to-vehicle communication. The tilt angle θ3 may be a tilt angle of the vehicle body frame of the preceding vehicle preceding vehicle 104 in the vehicle left-right direction (LR direction) of the motorcycle 1 or a tilt angle of leaning of the vehicle body frame of the preceding vehicle 104 in the vehicle left-right direction of the preceding vehicle 104. The same applies to the tilt angular speed ω3 and the tilt angular acceleration α3.

The neighboring lane vehicle information calculation unit 58 is configured to detect a neighboring lane inter-vehicle distance D3 which is the distance between the motorcycle 1 and the neighboring lane vehicle 105. The neighboring lane inter-vehicle distance D3 may be the shortest distance between a predetermined part of the motorcycle 1 and a predetermined part of the neighboring lane vehicle 105. Assume that the distance between the motorcycle 1 and the neighboring lane vehicle 105 in the vehicle front-rear direction (FB direction) of the motorcycle 1 or the lane front-rear direction (FLBL direction) is a distance D3_{FB}. Further assume that the distance between the motorcycle 1 and the neighboring lane vehicle 105 in the vehicle left-right direction (LR direction) or the lane left-right direction (LLRL direction) is a distance D3_{LR}. The detection of the neighboring lane inter-vehicle distance D3 may indicate the detection of only the distance D3_{FB} and the distance D3_{LR}.
The neighboring lane inter-vehicle distance D3 may be the distance between a predetermined part of the motorcycle 1 and a predetermined part of the neighboring lane vehicle 105 in the lane front-rear direction (FLBL direction). The neighboring lane inter-vehicle distance D3 may be the distance between a predetermined part of the motorcycle 1 and a predetermined part of the neighboring lane vehicle 105 in the vehicle front-rear direction (FB direction) of the motorcycle 1. The detection of the neighboring lane inter-vehicle distance D3 may indicate the detection of only the distance D3_{FB}.

The neighboring lane vehicle information calculation unit 58 may detect the neighboring lane inter-vehicle distance D3 based on a result of sensing by the front sensing unit 41. The neighboring lane vehicle information calculation unit 58 may detect the neighboring lane inter-vehicle distance D3 based on the positional information of the motorcycle 1 and the positional information of the neighboring lane vehicle 105 detected by the wireless communication apparatus 42.

The neighboring lane vehicle information calculation unit 58 is configured to detect the width w3 of the neighboring lane vehicle 105 in the lane left-right direction (LLRL direction). The neighboring lane vehicle information calculation unit 58 is configured to detect the width w3 based on a result of sensing by the front sensing unit 41. The width w3 may be the width of the neighboring lane vehicle 105 in the vehicle left-right direction (LR direction) of the motorcycle 1. When the neighboring lane vehicle 105 is a leaning vehicle, the width w3 may always be the width of the neighboring lane vehicle 105 in an upright state, irrespective of the leaning of the neighboring lane vehicle 105. When the neighboring lane vehicle 105 is a leaning vehicle, the width w3 may be changed in accordance with the leaning of the neighboring lane vehicle 105. This width w3 may or may not encompass the driver of the neighboring lane vehicle 105.

The neighboring lane vehicle information calculation unit 58 is configured to detect the relative speed RV4_{FB} and the relative acceleration RA4_{FB} of the neighboring lane vehicle 105 relative to the motorcycle 1 in the vehicle front-rear direction (FB direction) of the motorcycle 1. The neighboring lane vehicle information calculation unit 58 is configured to detect the relative speed RV4_{LR} and the relative acceleration RA4_{LR} of the neighboring lane vehicle 105 relative to the motorcycle 1 in the vehicle left-right direction (LR direction) of the motorcycle 1. The neighboring lane vehicle information calculation unit 58 is configured to detect the relative speed RV4_{FB}, the relative speed RV4_{LR}, the relative acceleration RA4_{FB}, and the relative acceleration RA4_{LR} based on a result of sensing by the front sensing unit 41.

The wireless communication apparatus 42 may receive information of the traveling direction of the neighboring lane vehicle 105 and the speed and/or acceleration of the neighboring lane vehicle 105 in the traveling direction of the neighboring lane vehicle 105, by means of vehicle-to-vehicle communication or road-to-vehicle communication. Based on these sets of information received by the wireless communication apparatus 42, the neighboring lane vehicle information calculation unit 58 may detect the speed V4_{FB} and/or the acceleration A4_{FB} of the neighboring lane vehicle 105 in the vehicle front-rear direction (FB direction) of the motorcycle 1 and the speed V4_{LR} and/or the acceleration A4_{LR} of the neighboring lane vehicle 105 in the vehicle left-right direction (LR direction) of the motorcycle 1. The neighboring lane vehicle information calculation unit 58 may detect the relative speed RV4_{FB} based on the detected speed V4_{FB} of the neighboring lane vehicle 105 in the vehicle front-rear direction (FB direction) of the motorcycle 1 and the speed V1_{FB} of the motorcycle 1 in the vehicle front-rear direction (FB direction). The relative acceleration RA4_{FB}, the relative speed RV4_{LR}, and the relative acceleration RA4_{LR} may be detected in a similar manner.

The lane information calculation unit 59 is configured to detect the width W (see FIG. 7) of the lane 100 in the lane left-right direction (LLRL direction). The lane information calculation unit 59 may detect the width W of the lane 100 based on a result of sensing by the front sensing unit 41. The lane information calculation unit 59 may detect the width W of the lane 100 based on a GNSS signal which is received by the wireless communication apparatus 42 and map data which is either stored in the storage unit 49 or received by the wireless communication apparatus 42.

The lane information calculation unit 59 is configured to detect the direction of vehicle flow of the left lane 101L and the right lane 101R. The lane information calculation unit 59 may detect the direction of vehicle flow of a neighboring lane 101 based on a result of sensing by the front sensing unit 41. For example, the lane information calculation unit 59 may detect the direction of vehicle flow of a neighboring lane 101 based on the relative speed RV4FB detected based on a result of sensing by the front sensing unit 41. The lane information calculation unit 59 may detect the direction of vehicle flow of a neighboring lane 101 based on a GNSS signal which is received by the wireless communication apparatus 42 and map data which is either stored in the storage unit 49 or received by the wireless communication apparatus 42. The lane information calculation unit 59 determines whether roads are right-hand traffic or left-hand traffic, based on the direction of vehicle flow of the lane 100 and the direction of vehicle flow of a neighboring lane 101. That is, when the direction of vehicle flow of the left lane 101L is opposite to the direction of vehicle flow of the lane 100, the lane information calculation unit 59 determines that the road is right-hand traffic. When the direction of vehicle flow of the right lane 101R is opposite to the direction of vehicle flow of the lane 100, the lane information calculation unit 59 determines that the road is left-hand traffic.

In addition to the width W of the lane 100 and the direction of vehicle flow of the neighboring lane 101, the lane information calculation unit 59 may detect, by means of a calculation process or the like, information regarding the lane 100. The information regarding the lane 100, the information being detected by the lane information calculation unit 59, is referred to as lane information. The lane information includes, for example, information regarding curves, corners, intersections, junctions, branches, traffic lights, and crossings of the lane 100. For example, the information regarding curves may include not only the positions of the curves but also curvatures and visibility at each curve. Information other than the positions is also included in each of the sets of information regarding corners, intersections, junctions, and branches.
The lane information calculation unit 59 may detect the lane information based on a result of sensing by the front sensing unit 41. The lane information calculation unit 59 may detect the lane information based on a GNSS signal which is received by the wireless communication apparatus 42 and map data which is either stored in the storage unit 49 or received by the wireless communication apparatus 42.

The wireless communication apparatus 42 may receive the lane information by means of, for example, road-to-vehicle communication. The lane information received by the wireless communication apparatus 42 may include the width W of the lane 100 and the direction of vehicle flow of a neighboring lane 101. The lane information received by the wireless communication apparatus 42 may include, for example, information regarding curves, corners, intersections, junctions, branches, traffic lights, and crossings. The lane information received by the wireless communication apparatus 42 may include traffic control information such as speed limit and traffic jam information. When the wireless communication apparatus 42 is configured to receive the lane information, the lane information calculation unit 59 may be omitted.

The in-lane left-right position calculation unit 52 is included in an in-lane left-right position information acquisition unit of the present invention. When the in-lane left-right position calculation unit 52 detects the position of the motorcycle 1 in the lane 100 in the lane left-right direction (LLRL direction) based on a result of sensing by the front sensing unit 41, the front sensing unit 41 may also be included in the in-lane left-right position information acquisition unit of the present invention. When the in-lane left-right position calculation unit 52 detects the above-described position based on information received by the wireless communication apparatus 42, the wireless communication apparatus 42 may also be included in the in-lane left-right position information acquisition unit of the present invention. When the in-lane left-right position calculation unit 52 detects the above-described position based on information stored in the storage unit 49, the storage unit 49 may also be included in the in-lane left-right position information acquisition unit of the present invention.

The oblique inter-vehicle distance calculation unit 54 is included in an oblique inter-vehicle distance detection unit of the present invention. When the oblique inter-vehicle distance calculation unit 54 is configured to detect the obliquely-forward inter-vehicle distance D1 based on a result of sensing by the front sensing unit 41, the front sensing unit 41 may be included in the oblique inter-vehicle distance detection unit of the present invention, too. When the oblique inter-vehicle distance calculation unit 54 is configured to detect the obliquely-forward inter-vehicle distance D1 based on information received by the wireless communication apparatus 42, the wireless communication apparatus 42 may be included in the oblique inter-vehicle distance detection unit of the present invention, too.

The oblique inter-vehicle distance calculation unit 54 is included in the oblique inter-vehicle distance detection unit 21 of the above-described embodiment. When the oblique inter-vehicle distance calculation unit 54 is configured to detect the obliquely-forward inter-vehicle distance D1 based on a result of sensing by the front sensing unit 41, the front sensing unit 41 is included in the oblique inter-vehicle distance detection unit 21, too. When the oblique inter-vehicle distance calculation unit 54 is configured to detect the obliquely-forward inter-vehicle distance D1 based on information received by the wireless communication apparatus 42, the wireless communication apparatus 42 is included in the oblique inter-vehicle distance detection unit 21, too.

The obliquely-neighboring vehicle information calculation unit 55 and the front sensing unit 41 are included in the obliquely-neighboring vehicle information detection unit of the present invention. When the obliquely-neighboring vehicle information calculation unit 55 uses information received by the wireless communication apparatus 42 for the detection of information regarding the obliquely-forward-neighboring vehicle 103, the wireless communication apparatus 42 may also be included in the obliquely-neighboring vehicle information detection unit of the present invention. When the wireless communication apparatus 42 receives all information related to the obliquely-forward-neighboring vehicle 103, only the wireless communication apparatus 42 is included in the obliquely-neighboring vehicle information detection unit of the present invention.

The forward inter-vehicle distance calculation unit 56 is included in a forward inter-vehicle distance detection unit of the present invention. When the forward inter-vehicle distance calculation unit 56 is configured to detect the forward inter-vehicle distance D2 based on a result of sensing by the front sensing unit 41, the front sensing unit 41 may be included in the forward inter-vehicle distance detection unit of the present invention, too. When the forward inter-vehicle distance calculation unit 56 is configured to detect the forward inter-vehicle distance D2 based on information received by the wireless communication apparatus 42, the wireless communication apparatus 42 may be included in the forward inter-vehicle distance detection unit of the present invention, too.

The preceding vehicle information calculation unit 57 and the front sensing unit 41 are included in the preceding vehicle information detection unit of the present invention. When the preceding vehicle information calculation unit 57 uses information received by the wireless communication apparatus 42 for the detection of information regarding the preceding vehicle 104, the wireless communication apparatus 42 may also be included in an obliquely-neighboring vehicle information detection unit of the present invention.

The neighboring lane vehicle information calculation unit 58 is included in a neighboring lane inter-vehicle distance detection unit of the present invention. When the neighboring lane vehicle information calculation unit 58 is configured to detect the neighboring lane inter-vehicle distance D3 based on a result of sensing by the front sensing unit 41, the front sensing unit 41 may be included in the forward inter-vehicle distance detection unit of the present invention, too. When the neighboring lane vehicle information calculation unit 58 is configured to detect the neighboring lane inter-vehicle distance D3 based on information received by the wireless communication apparatus 42, the wireless communication apparatus 42 may also be included in the forward inter-vehicle distance detection unit of the present invention.

When the lane information calculation unit 59 detects the lane information, the lane information calculation unit 59 is included in a lane information detection unit of the present invention. When the lane information calculation unit 59 uses a result of sensing by the front sensing unit 41 for the detection of the lane information, the front sensing unit 41 may also be included in the lane information detection unit of the present invention. When the lane information calculation unit 59 uses information received by the wireless communication apparatus 42 for the detection of the lane information, the wireless communication apparatus 42 may also be included in the lane information detection unit of the present invention. When the wireless communication apparatus 42 receives the lane information, the wireless communication apparatus 42 is equivalent to the lane information detection unit of the present invention.

### <Control by Active Driving Assist Control Unit 60>

When the driving assist mode or the autonomous driving mode is selected, the active driving assist control unit 60 controls at least one of the acceleration controller 22 or the left-right movement assist device 23 to actively assist the driver.

The acceleration controller 22 is configured to control the rotation of the front wheel unit 2 and the rear wheel unit 3 so as to control the acceleration of the motorcycle 1 in the traveling direction. The acceleration controller 22 includes the engine unit 8 and the brake mechanism 19. The engine unit 8 is configured to apply a driving force to the rear wheel unit 3. The brake mechanism 19 is configured to apply a braking force to each of the front wheel unit 2 and the rear wheel unit 3.

The active driving assist control unit 60 is configured to control the acceleration controller 22 in such a way that the jerk is smaller than the maximum value J_{MAX} of the jerk which is generatable by the acceleration controller 22 and is larger than the minimum value J_{MIN} of that jerk. Because the jerk is small, the acceleration can be gently changed.
Furthermore, the active driving assist control unit 60 is configured to control the acceleration controller 22 in such a way that, when the acceleration controller 22 is controlled to change the speed in accordance with the detected obliquely-forward inter-vehicle distance D1, the relationship between the speed and the elapsed time is non-linear at an early stage of the speed change as shown in FIG. 1. With this, the acceleration does not rapidly change even when the acceleration varies in a wide range. To put it differently, the absolute value of the jerk is small. Because the acceleration gently changes, the driver is less likely to feel strange. Therefore driving assist further in conformity with the driver's feeling can be realized.

The left-right movement assist device 23 is configured to provide assist for the movement of the motorcycle 1 in the vehicle left-right direction (LR direction). The left-right movement assist device 23 may include a notification device which is configured to perform notification to prompt the driver to move the motorcycle in the vehicle left-right direction (LR direction). The notification device is, for example, the display 14. The notification device may perform notification by sound or vibration. The left-right movement assist device 23 may include a left-right movement device which is configured to automatically move the motorcycle 1 in the vehicle left-right direction (LR direction). The left-right movement device includes a motor 17 (see FIG. 5) by which the steering shaft is rotated, the engine unit 8, and the brake mechanism 19. When the motorcycle 1 is turning, the left-right movement device is able to move the motorcycle 1 in the vehicle left-right direction (LR direction) by controlling the front brake 2a, the rear brake 3a, or the throttle valve 18. In other words, during the turning, the acceleration controller 22 functions as the left-right movement assist device 23 (left-right movement device). The left-right movement device may include the front suspension 15 or the rear suspension 16. The left-right movement device may move the motorcycle 1 in the vehicle left-right direction by controlling the balance between the left and the right of the front suspension 15 or the rear suspension 16. The left-right movement device may include a flywheel or a counter weight attached to the crankshaft. The left-right movement device may move the motorcycle 1 in the vehicle left-right direction (LR direction) by controlling the tilt angle θ1 of the motorcycle 1 by means of the flywheel or the counter weight.

The active driving assist device 20 may perform lane keeping assist control. The lane keeping assist control is driving assist control which causes the motorcycle 1 to run along the lane 100. The active driving assist device 20 may perform automatic brake control which activates brake upon detection of an object or a pedestrian. The active driving assist control unit 60 may perform cruise control by which the vehicle speed is maintained to be constant.

The following will explain the control by the active driving assist control unit 60 with specific examples.

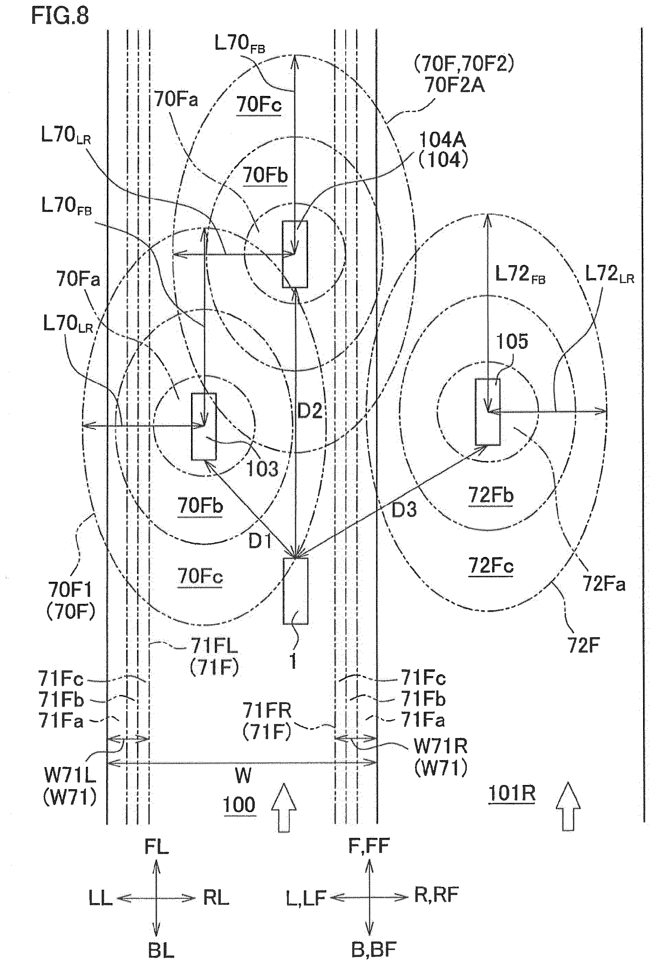

As shown in FIG. 8, the active driving assist control unit 60 sets a field 70F which is substantially centered on the obliquely-forward-neighboring vehicle 103 or the preceding vehicle 104 and has a predetermined size. While the field 70F is elliptical in FIG. 8, the field 70F is not limited to this shape. The long axis of the elliptical field 70F is parallel to the vehicle front-rear direction (FB direction) of the motorcycle 1 whereas the short axis of the elliptical field 70F is parallel to the vehicle left-right direction of the motorcycle 1. The long axis of the elliptical field 70F may be parallel to the traveling direction of the motorcycle 1, the lane front-rear direction (FLBL direction), the traveling direction of the obliquely-forward-neighboring vehicle 103 or the preceding vehicle 104, or another direction. 1/2 of the maximum length of the field 70F in the vehicle front-rear direction (FB direction) is referred to as a length L70_{FB}. 1/2 of the maximum length of the field 70F in the vehicle left-right direction (LR direction) is referred to as a length L70_{LR}. The length L70_{FB} and the length L70_{LR} are changed in accordance with a predetermined condition. Each edge field 70F is formed of three fields 70Fa, 70Fb, and 70Fc. The first field 70Fa, the second field 70Fb, and the third field 70Fc are lined up in this order. Among them, the first field 70Fa is the closest to the obliquely-forward-neighboring vehicle 103. The size of each of the first field 70Fa and the second field 70Fb is set in accordance with the size of the field 70F. The field 70F may be substantially a rear half of an ellipse. This is because only substantially a rear half of the field 70F is used for the driving assist control. The same applies to a later-described field 72F.

A field 70F which is substantially centered on the obliquely-forward-neighboring vehicle 103 is referred to as a field 70F1. A field 70F which is substantially centered on the leading preceding vehicle 104A is referred to as a field 70F2A. Although not illustrated, a field 70F which is substantially centered on the sole preceding vehicle 104B is referred to as a field 70F2B for the sake of convenience. The field 70F2A and the field 70F2B are collectively termed fields 70F2. In other words, a field 70F which is substantially centered on the preceding vehicle 104 is referred to as a field 70F2.

When an obliquely-forward-neighboring vehicle 103 is detected, the active driving assist control unit 60 controls at least one of the acceleration controller 22 or the left-right movement assist device 23 so that the motorcycle 1 is in contact with the field 70F1 of the obliquely-forward-neighboring vehicle 103. In other words, the active driving assist control unit 60 is configured to actively assist the driver by controlling at least one of the acceleration controller 22 or the left-right movement assist device 23 based on the detected obliquely-forward inter-vehicle distance D1, so that the obliquely-forward inter-vehicle distance D1 is maintained at a predetermined target distance. Furthermore, based on the detected obliquely-forward inter-vehicle distance D1, the active driving assist control unit 60 is configured to control at least one of the acceleration controller 22 or the left-right movement assist device 23 so that the obliquely-forward inter-vehicle distance D1 is maintained at a predetermined target distance, while controlling the position of the motorcycle 1 in the lane 100 in the lane left-right direction (LLRL direction).

For example, the active driving assist control unit 60 may monitor variation of the obliquely-forward inter-vehicle distance D1 over time, and control at least one of the acceleration controller 22 or the left-right movement assist device 23 when the motorcycle 1 enters or leaves the field 70F1. Furthermore, for example, the active driving assist control unit 60 may control at least one of the acceleration controller 22 or the left-right movement assist device 23 based on the obliquely-forward inter-vehicle distance D1 at a certain point of time so that the motorcycle 1 makes contact with the field 70F1 after t seconds elapse. In this case, at least one of the acceleration controller 22 or the left-right movement assist device 23 is controlled so that the acceleration and the jerk during the elapse of t seconds are at desired values.

When an obliquely-forward-neighboring vehicle 103 and a leading preceding vehicle 104A are detected, the active driving assist control unit 60 controls at least one of the acceleration controller 22 or the left-right movement assist device 23 so that the motorcycle 1 is in contact with the field 70F1 of the obliquely-forward-neighboring vehicle 103 and does not enter the field 70F2A of the leading preceding vehicle 104A. In other words, the active driving assist control unit 60 controls at least one of the acceleration controller 22 or the left-right movement assist device 23 based on the detected obliquely-forward inter-vehicle distance D1, so that the obliquely-forward inter-vehicle distance D1 is maintained at a predetermined target distance. In addition to this, the active driving assist control unit 60 controls at least one of the acceleration controller 22 or the left-right movement assist device 23 based on the detected forward inter-vehicle distance D2 so that the forward inter-vehicle distance D2 is equal to or longer than a predetermined limit distance.

When a sole preceding vehicle 104B is detected, the active driving assist control unit 60 controls at least one of the acceleration controller 22 or the left-right movement assist device 23 so that the motorcycle 1 is in contact with the field 70F2B of the sole preceding vehicle 104B. In other words, the active driving assist control unit 60 controls at least one of the acceleration controller 22 or the left-right movement assist device 23 based on the forward inter-vehicle distance D2, so that the forward inter-vehicle distance D2 is maintained at a predetermined target distance.

As shown in FIG. 8, the active driving assist control unit 60 sets a left edge field 71FL and a right edge field 71FR at a left edge portion and a right edge portion of the lane 100, respectively. The width of the left edge field 71FL in the lane left-right direction (LLRL direction) is referred to as width W71L. The width of the right edge field 71FR in the lane left-right direction (LLRL direction) is referred to as width W71R. The widths W71L and W71R are changed in accordance with a predetermined condition. Each of the widths W71L and W71R may be constant. The widths W71L and W71R may be the widths of the edge fields 71FL and 71FR in the vehicle left-right direction (LR direction). Hereinafter, the edge field 71FR and the edge field 71FL may be collectively termed edge fields 71F. Each of the widths W71L and W71R may be termed width W71 when it is not necessary to distinguish between them. The edge field 71F is formed of three edge fields 71Fa, 71Fb, and 71Fc. The first edge field 71Fa, the second edge field 71Fb, and the third edge field 71Fc are lined up in this order. Among them, the edge field 71Fa is the closest to the edge of the lane 100. The widths of the first edge field 71Fa, the second edge field 71Fb, and the third edge field 71Fc are set in accordance with the width W71 of the edge field 71F.

When an obliquely-forward-neighboring vehicle 103 is detected, the active driving assist control unit 60 controls at least one of the acceleration controller 22 or the left-right movement assist device 23 so that the motorcycle 1 is in contact with the field 70F of the obliquely-forward-neighboring vehicle 103 and does not enter the edge field 71F. In other words, the active driving assist control unit 60 controls at least one of the acceleration controller 22 or the left-right movement assist device 23 based on the detected obliquely-forward inter-vehicle distance D1 and the position of the motorcycle 1 in the lane 100 in the lane left-right direction (LLRL direction). To put it differently, in accordance with information regarding the position of the motorcycle 1 in the lane 100 in the lane left-right direction (LLRL direction), the active driving assist control unit 60 controls at least one of the acceleration controller 22 or the left-right movement assist device 23 so that the distance between an edge of the lane 100 and the motorcycle 1 in the lane left-right direction is equal to or longer than the width W71.

When a neighboring lane vehicle 105 running in a neighboring lane 101 which is identical with the lane 100 in the direction of vehicle flow, the active driving assist control unit 60 sets a field 72F which is substantially centered on the neighboring lane vehicle 105. While the field 72F is elliptical in FIG. 8, the field 72F is not limited to this shape. 1/2 of the maximum length of the field 72F in the vehicle front-rear direction (FB direction) is referred to as a length L72_{FB}. 1/2 of the maximum length of the field 72F in the vehicle left-right direction (LR direction) is referred to as a length L72_{LR}. The length L72_{FB} and the length L72_{LR} are changed in accordance with a predetermined condition. The field 72F is formed of three fields 72Fa, 72Fb, and 72Fc. The first field 72Fa, the second field 72Fb, and the third field 72Fc are lined up in this order. Among them, the first field 72Fa is the closest to the neighboring lane vehicle 105. The size of each of the first field 72Fa and the second field 72Fb is set in accordance with the size of the field 72F. The active driving assist control unit 60 controls at least one of the acceleration controller 22 or the left-right movement assist device 23 so that the motorcycle 1 does not enter the field 72F of the neighboring lane vehicle 105. The active driving assist control unit 60 may set a field which is substantially centered on a neighboring lane vehicle 105 running in a neighboring lane 101 which is opposite to the lane 100 in the direction of vehicle flow.

A position in the motorcycle 1, based on which the positional relations between the motorcycle 1 and the fields 70F, 71F, and 72F are determined, may be the front sensing unit 41 or the front wheel unit 2. In the latter case, for example, a position which is away from the front sensing unit 41 for a predetermined distance in the forward direction (F direction) is assumed as the front end of the front wheel unit 2. Based on this, whether the front wheel unit 2 is in the field is determined. The determination of the positional relation between the edge field 71F and the motorcycle 1 may be based not only on the front wheel unit 2 but also on the rear wheel unit 3.

The following will specifically describe control by the active driving assist control unit 60 using the fields 70F, 71F, and 72F.

When the motorcycle 1 is remote from the field 70F1 of the obliquely-forward-neighboring vehicle 103 or the field 70F2B of the sole preceding vehicle 104B, the active driving assist control unit 60 controls the acceleration controller 22 so that the motorcycle 1 comes close to the fields 70F and 70F2B, in accordance with the running situation. To be more specific, for example, the acceleration controller 22 is controlled so that the jerk of the motorcycle 1 in the traveling direction is increased. The speed V1_{FB} of the motorcycle 1, however, must be within a predetermined speed range after the control. Increase in the jerk indicates either the absolute value of positive jerk is increased or the absolute value of negative jerk is decreased. When this control is started, the acceleration of the motorcycle 1 in the traveling direction may be positive, negative, or zero. The active driving assist control unit 60 performs control so that the opening degree of the throttle valve 18 is increased. As a result, the output of the engine main body 8a is increased and hence the acceleration of the motorcycle 1 is increased. In other words, the motorcycle 1 deaccelerates while the acceleration increases or accelerates. The active driving assist control unit 60 may control the output of the engine main body 8a by changing a parameter which is used for controlling the engine unit 8. The active driving assist control unit 60 increases the output of the engine main body 8a and changes the transmission ratio of the transmission 8b of the engine unit 8 in accordance with the speed. Even if the motorcycle 1 is remote from the field 70F1 of the obliquely-forward-neighboring vehicle 103 or the field 70F2B of the sole preceding vehicle 104B, the acceleration controller 22 may be controlled so that the jerk of the motorcycle 1 in the traveling direction decreases, as long as the speed V1_{FB} of the motorcycle 1 is higher than the speed V2_{FB} of the obliquely-forward-neighboring vehicle 103. For example, immediately after a obliquely-forward-neighboring vehicle 103 moves to the lane 100 from a neighboring lane 101, the motorcycle 1 may be remote from the field 70F1 of the obliquely-forward-neighboring vehicle 103 or the field 70F2B of the sole preceding vehicle 104B and at the same time the speed V1_{FB} of the motorcycle 1 may be higher than the speed V2_{FB} of the obliquely-forward-neighboring vehicle 103.

When the motorcycle 1 is remote from the field 70F1 of the obliquely-forward-neighboring vehicle 103 or the field 70F2B of the sole preceding vehicle 104B, the active driving assist control unit 60 may control the left-right movement assist device 23 so that the motorcycle 1 comes close to the fields 70F and 70F2B, in accordance with the running situation. To be more specific, the left-right movement assist device 23 may perform notification to prompt the driver to move the motorcycle 1 in the vehicle left-right direction (LR direction) or may move the motorcycle 1 in the vehicle left-right direction (LR direction).

When at least a part of the motorcycle 1 enters the field 70F of the obliquely-forward-neighboring vehicle 103 or the preceding vehicle 104, the active driving assist control unit 60 controls the acceleration controller 22 in order to cause the motorcycle 1 to leave the field 70F. To be more specific, for example, the acceleration controller 22 is controlled so that the jerk of the motorcycle 1 in the traveling direction is decreased. When this control is performed, the acceleration of the motorcycle 1 in the traveling direction may be positive, negative, or zero. The active driving assist control unit 60 performs control so that the opening degree of the throttle valve 18 is decreased. As a result, the output of the engine main body 8a is decreased and hence the acceleration of the motorcycle 1 is decreased. In other words, the motorcycle 1 accelerates while the acceleration decreases or deaccelerates. The active driving assist control unit 60 may control the output of the engine main body 8a by changing a parameter which is used for controlling the engine unit 8. The active driving assist control unit 60 decreases the output of the engine main body 8a and changes the transmission ratio of the transmission 8b of the engine unit 8 in accordance with the speed V1_{FB}. Furthermore, according to need, the active driving assist control unit 60 controls the front brake driving unit 2b and/or the rear brake driving unit 3b to activate the front brake 2a and/or the rear brake 3a. With this, a braking force is applied to the front wheel unit 2 and/or the rear wheel unit 3, with the result that the motorcycle 1 deaccelerates. Even if the motorcycle 1 is in the field 70F1 of the obliquely-forward-neighboring vehicle 103 or the field 70F2B of the sole preceding vehicle 104B, the acceleration controller 22 may be controlled so that the jerk of the motorcycle 1 in the traveling direction increases, as long as the speed V1_{FB} of the motorcycle 1 is lower than the speed V2_{FB} of the obliquely-forward-neighboring vehicle 103. For example, immediately after an obliquely-forward-neighboring vehicle 103 moves to the lane 100 from a neighboring lane 101, the motorcycle 1 may be in the field 70F1 of the obliquely-forward-neighboring vehicle 103 or the field 70F2B of the sole preceding vehicle 104B and at the same time the speed V1_{FB} of the motorcycle 1 may be lower than the speed V2_{FB} of the obliquely-forward-neighboring vehicle 103.

When at least a part of the motorcycle 1 enters the field 70F of the obliquely-forward-neighboring vehicle 103 or the preceding vehicle 104, the active driving assist control unit 60 may control the left-right movement assist device 23 in order to cause the motorcycle 1 to leave the field 70F. To be more specific, the left-right movement assist device 23 may perform notification to prompt the driver to move the motorcycle 1 in the vehicle left-right direction (LR direction) or may move the motorcycle 1 in the vehicle left-right direction (LR direction).

When at least a part of the motorcycle 1 enters the field 72F of the neighboring lane vehicle 105, the active driving assist control unit 60 controls at least one of the acceleration controller 22 or the left-right movement assist device 23 in order to cause the motorcycle 1 to leave the field 72F. The control method in this case is identical to the control method when the motorcycle 1 enters the field 70F.

When at least a part of the motorcycle 1 enters the third fields 70Fc and 72Fc of the fields 70F and 72F, driving assist control is mildly carried out to the extent not to cause the driver to feel strange. When at least a part of the motorcycle 1 enters the second fields 70Fb and 72Fb of the fields 70F and 72F, driving assist control which is harder than the driving assist control when the motorcycle 1 enters the third fields 70Fc and 72Fc is carried out. For example, the absolute value of the negative acceleration in deceleration is arranged to be larger than that when the motorcycle 1 enters the third fields 70Fc and 72Fc. If by any chance at least a part of the motorcycle 1 enters the first fields 70Fa and 72Fa of the fields 70F and 72F, driving assist control which is harder than the driving assist control when the motorcycle 1 enters the second fields 70Fb and 72Fb is carried out.

When at least a part of the motorcycle 1 enters the edge field 71F, the active driving assist control unit 60 controls the left-right movement assist device 23 so that the motorcycle 1 moves in the vehicle left-right direction (LR direction), in order to cause the motorcycle 1 to leave the edge field 71F.

When at least a part of the motorcycle 1 enters the third field 71Fc of the edge field 71F, driving assist control is mildly carried out to the extent not to cause the driver to feel strange. When at least a part of the motorcycle 1 enters the second edge field 71Fb of the edge field 71F, driving assist control which is harder than the driving assist control when the motorcycle 1 enters the third field 71Fc is carried out. For example, the positive acceleration is increased and the motorcycle 1 is moved in the vehicle left-right direction, when compared to cases where the motorcycle 1 enters the third edge field 71Fc. If by any chance at least a part of the motorcycle 1 enters the first edge field 71Fa of the edge field 71F, driving assist control which is harder than the driving assist control when the motorcycle 1 enters the second edge field 71Fb is carried out.

The active driving assist control unit 60 may perform control other than those described above, in order to cause the motorcycle 1 to come close to the fields 70F1 and 70F2B. The active driving assist control unit 60 may perform control other than those described above, in order to cause the motorcycle 1 to leave or to be in contact with the field 70F, 71F, or 72F. For example, the damping force generated at the front suspension 15 or the rear suspension 16 may be controlled. Alternatively, a notification which prompts deceleration or acceleration may be made.

The following will describe conditions based on which the lengths L70_{FB} and L70_{LR} of the field 70F1 of the obliquely-forward-neighboring vehicle 103 are changed. It is noted that the conditions for change are not limited to the following conditions.

The active driving assist control unit 60 changes the lengths L70_{FB} and L70_{LR} of the field 70F1 in accordance with the speed V1_{FB} and/or the acceleration A1_{FB} of the motorcycle 1 in the vehicle front-rear direction (FB direction). For example, the active driving assist control unit 60 increases the lengths L70_{FB} and L70_{LR} of the field 70F1 as the speed V1_{FB} or the acceleration A1_{FB} increases. The acceleration controller 22 is controlled so that the motorcycle 1 is in contact with the field 70F1 which is arranged in this way. In other words, the active driving assist control unit 60 controls the acceleration controller 22 based on at least one of the speed V1_{FB} or the acceleration A1_{FB} of the motorcycle 1 in the vehicle front-rear direction (FB direction) and the obliquely-forward inter-vehicle distance D1.

The active driving assist control unit 60 changes the lengths L70_{FB} and L70_{LR} of the field 70F1 in accordance with the speed V1_{LR} and/or the acceleration A1_{LR} of the motorcycle 1 in the vehicle left-right direction (FB direction). For example, the active driving assist control unit 60 increases the lengths L70_{FB} and L70_{LR} of the field 70F1 as the speed V1_{LR} or the acceleration A1_{LR} increases. The acceleration controller 22 is controlled so that the motorcycle 1 is in contact with the field 70F1 which is arranged in this way. In other words, the active driving assist control unit 60 controls the acceleration controller 22 based on at least one of the speed V1_{LR} or the acceleration A1_{LR} of the motorcycle 1 in the vehicle left-right direction (LR direction) and the obliquely-forward inter-vehicle distance D1.

The active driving assist control unit 60 changes the lengths L70_{FB} and L70_{LR} of the field 70F1 in accordance with the relative speed RV2_{FB} and/or the relative acceleration RA2_{FB} of the obliquely-forward-neighboring vehicle 103 relative to the motorcycle 1 in the vehicle front-rear direction (FB direction) of the motorcycle 1. For example, the active driving assist control unit 60 increases the lengths L70_{FB} and L70_{LR} of the field 70F1 as the relative speed RA2_{FB} or the relative acceleration RV2_{FB} increases. The active driving assist control unit 60 may change the lengths L70_{FB} and L70_{LR} of the field 70F1 in accordance with the speed V2_{FB} and/or the acceleration A2_{FB} of the obliquely-forward-neighboring vehicle 103 in the vehicle front-rear direction (FB direction) of the motorcycle 1. The acceleration controller 22 is controlled so that the motorcycle 1 is in contact with the field 70F1 which is arranged in this way. In other words, the active driving assist control unit 60 controls the acceleration controller 22 based on at least one of the relative speed RA2_{FB}, the speed V2_{FB}, the relative acceleration RA2_{FB}, or the acceleration A2_{FB} of the obliquely-forward-neighboring vehicle 103 in the vehicle front-rear direction (FB direction) and the obliquely-forward inter-vehicle distance D1.

The active driving assist control unit 60 changes the lengths L70_{FB} and L70_{LR} of the field 70F1 in accordance with the relative speed RV2_{LR} and/or the relative acceleration RA2_{LR} of the obliquely-forward-neighboring vehicle 103 relative to the motorcycle 1 in the vehicle left-right direction (LR direction) of the motorcycle 1. For example, the active driving assist control unit 60 increases the lengths L70_{FB} and L70_{LR} of the field 70F1 as the relative speed RA2_{LR} or the relative acceleration RV2_{LR} increases. The active driving assist control unit 60 may change the lengths L70_{FB} and L70_{LR} of the field 70F1 in accordance with the speed V2_{LR} and/or the acceleration A2_{LR} of the obliquely-forward-neighboring vehicle 103 in the vehicle left-right direction (LR direction) of the motorcycle 1. The acceleration controller 22 is controlled so that the motorcycle 1 is in contact with the field 70F1 which is arranged in this way. In other words, the active driving assist control unit 60 controls the acceleration controller 22 based on at least one of the relative speed RA2_{LR}, the speed V2_{LR}, the relative acceleration RA2_{LR}, or the acceleration A2_{LR} of the obliquely-forward-neighboring vehicle 103 in the vehicle left-right direction (LR direction) and the obliquely-forward inter-vehicle distance D1.

The active driving assist control unit 60 may change the lengths L70_{FB} and L70_{LR} of the field 70F1 in accordance with the width w1 of the obliquely-forward-neighboring vehicle 103 in the lane left-right direction (LLRL direction). For example, the active driving assist control unit 60 increases the length L70_{LR} of the field 70F1 as the width w1 increases. When the width w1 is shorter than a predetermined width, it can be determined that the obliquely-forward-neighboring vehicle 103 is likely to be a leaning vehicle. The length L70_{FB} which is set when the width w1 is shorter than the predetermined width may be shorter than the length L70_{FB} which is set when the width w1 is longer than the predetermined width. For example, the predetermined width may be a half of the width of the lane 100. The acceleration controller 22 is controlled so that the motorcycle 1 is in contact with the field 70F1 which is arranged in this way. In other words, the active driving assist control unit 60 controls the acceleration controller 22 based on the width w1 of the obliquely-forward-neighboring vehicle 103 in the lane left-right direction (LLRL direction) and the obliquely-forward inter-vehicle distance D1.

The active driving assist control unit 60 changes the lengths L70_{LR} and L70_{LR} of the field 70F1 in accordance with the distance D1_{LR} between the obliquely-forward-neighboring vehicle 103 and the motorcycle 1 in the vehicle left-right direction (LR direction). For example, the lengths L70_{FB} and L70_{LR} of the field 70F1 are increased as the distance D1_{LR} is decreased. The acceleration controller 22 is controlled so that the motorcycle 1 is in contact with the field 70F1 which is arranged in this way. In other words, the active driving assist control unit 60 controls the acceleration controller 22 based on the distance D1_{LR} between the obliquely-forward-neighboring vehicle 103 and the motorcycle 1 in the vehicle left-right direction (LR direction) and the obliquely-forward inter-vehicle distance D1.

The active driving assist control unit 60 may change the lengths L70_{FB} and L70_{LR} of the field 70F1 in accordance with the tilt angle θ1 or the tilt angular speed ω1 of the motorcycle 1. The acceleration controller 22 is controlled so that the motorcycle 1 is in contact with the field 70F1 which is arranged in this way. In other words, the active driving assist control unit 60 controls the acceleration controller 22 based on the tilt angle θ1 or the tilt angular speed ω1 of the motorcycle 1 and further based on the obliquely-forward inter-vehicle distance D1.

The active driving assist control unit 60 may change the lengths L70_{FB} and L70_{LR} of the field 70F1 in accordance with at least one of the tilt angle θ2, the tilt angular speed ω2, or the tilt angular acceleration α2 of the obliquely-forward-neighboring vehicle 103. The acceleration controller 22 is controlled so that the motorcycle 1 is in contact with the field 70F1 which is arranged in this way. In other words, the active driving assist control unit 60 controls the acceleration controller 22 based on at least one of the tilt angle θ2, the tilt angular speed ω2, or the tilt angular acceleration α2 of the obliquely-forward-neighboring vehicle 103 and further based on the obliquely-forward inter-vehicle distance D1.

The active driving assist control unit 60 may change the lengths L70_{FB} and L70_{LR} of the field 70F based on the lane information detected by the lane information calculation unit 59 or the wireless communication apparatus 42. The acceleration controller 22 is controlled so that the motorcycle 1 is in contact with the field 70F1 which is arranged in this way. In other words, the active driving assist control unit 60 controls the acceleration controller 22 based on the lane information and the obliquely-forward inter-vehicle distance D1.

The active driving assist control unit 60 may change the lengths L70_{FB} and L70_{LR} of the field 70F based on the width of the motorcycle 1 in the lane left-right direction (LLRL direction) or the vehicle left-right direction (LR direction). The width of the motorcycle 1 in this case may be the upright state width L0, the lean state width LI, or the leaning vehicle width L1v. The lean state width L1 and the width L1v are calculated by the controller 50 based on the upright state width L0 stored in the storage unit 49 and the tilt angle θ1 detected by the IMU 40. The active driving assist control unit 60 may change the lengths L70_{FB} and L70_{LR} of the field 70F based on the total length of the motorcycle 1 in the lane front-rear direction (FLBL direction) or the vehicle front-rear direction (FB direction).

The conditions of changing the lengths L70_{FB} and L70_{LR} of the field 70F2 of the preceding vehicle 104 are substantially identical with the conditions of changing the lengths L70_{FB} and L70_{LR} of the field 70F1 of the obliquely-forward-neighboring vehicle 103. This statement, i.e., the conditions are substantially identical, presupposes that the parameters related to the obliquely-forward-neighboring vehicle 103 are replaced with the parameters related to the preceding vehicle 104.

The following will describe conditions based on which the lengths L72_{FB} and L72_{LR} of the field 72F of the neighboring lane vehicle 105 are changed. It is noted that the conditions for change are not limited to the following conditions.

The active driving assist control unit 60 may change the lengths L72_{FB} and L72_{LR} of the field 72F in accordance with the relative speed RV4_{FB} and/or the relative acceleration RA4_{FB} of the neighboring lane vehicle 105 relative to the motorcycle 1 in the vehicle front-rear direction (FB direction) of the motorcycle 1.
The active driving assist control unit 60 may change the lengths L72_{FB} and L72_{LR} of the field 72F in accordance with the speed V4_{FB} and/or the acceleration A4_{FB} of the neighboring lane vehicle 105 in the vehicle front-rear direction (FB direction) of the motorcycle 1. The active driving assist control unit 60 changes the lengths L72_{FB} and L72_{LR} of the field 72F in accordance with the speed V1_{FB} and/or the acceleration A1_{FB} of the motorcycle 1 in the vehicle front-rear direction (FB direction). The active driving assist control unit 60 may change the lengths L72_{FB} and L72_{LR} of the field 72F in accordance with the speed V1_{LR} and/or the acceleration A1_{LR} of the motorcycle 1 in the vehicle left-right direction (LR direction).

The active driving assist control unit 60 may change the lengths L72_{FB} and L72_{LR} of the field 72F in accordance with the width w3 of the neighboring lane vehicle 105 in the lane left-right direction (LLRL direction). The active driving assist control unit 60 may change the lengths L72_{FB} and L72_{LR} of the field 72F in accordance with the neighboring lane inter-vehicle distance D3.

The active driving assist control unit 60 may change the lengths L72_{FB} and L72_{LR} of the field 72F in accordance with the relative speed RV4_{LR} and/or the relative acceleration RA4_{LR} of the neighboring lane vehicle 105 relative to the motorcycle 1 in the vehicle left-right direction (LR direction) of the motorcycle 1. The active driving assist control unit 60 may change the lengths L72_{FB} and L72_{LR} in accordance with the speed V4_{LR} and/or the acceleration A4_{LR} of the neighboring lane vehicle 105 in the vehicle left-right direction (LR direction) of the motorcycle 1.

The active driving assist control unit 60 may change the lengths L72_{FB} and L72_{LR} of the field 72F based on the lane information detected by the lane information calculation unit 59 or the wireless communication apparatus 42.

The active driving assist control unit 60 may change the lengths L72_{FB} and L72_{LR} of the field 72F based on the width of the motorcycle 1 in the lane left-right direction (LLRL direction) or the vehicle left-right direction (LR direction). This width of the motorcycle 1 is identical with the width of the motorcycle 1 which has been described as the condition based on which the size of the field 70F is changed.
The active driving assist control unit 60 may change the lengths L72_{FB} and L72_{LR} of the field 72F based on the total length of the motorcycle 1 in the lane front-rear direction (FLBL direction) or the vehicle front-rear direction (FB direction).

The following will describe conditions based on which the width W71 of the edge field 71F set at an edge portion of the lane 100 is changed will be described. It is noted that the conditions for change are not limited to the following conditions.

The active driving assist control unit 60 may change the width W71 of the edge field 71F based on the lane information detected by the lane information calculation unit 59 or the wireless communication apparatus 42. A specific example of this is described below.

The active driving assist control unit 60 may change the width W71 of the edge field 71F in accordance with the width W of the lane 100. For example, the width W71 of the edge field 71F may be increased as the width W of the lane 100 is increased. At least one of the acceleration controller 22 or the left-right movement assist device 23 is controlled so that the motorcycle 1 does not enter the edge field 71F arranged in this way and the motorcycle 1 is in contact with the field 70F1. In other words, the active driving assist control unit 60 controls at least one of the acceleration controller 22 or the left-right movement assist device 23 based on the width W of the lane 100 in the lane left-right direction (LLRL direction) and the obliquely-forward inter-vehicle distance D1.

The active driving assist control unit 60 may change the width W71L of the left edge field 71FL in accordance with the direction of vehicle flow of the left lane 101L. The active driving assist control unit 60 may change the width W71R of the right edge field 71FR in accordance with the direction of vehicle flow of the right lane 101R. The width W71L which is set when the direction of vehicle flow of the left lane 101L is opposite to the direction of vehicle flow of the lane 100 may be longer than the width W71L when the direction of vehicle flow of the left lane 101L is identical with the direction of vehicle flow of the lane 100. The same applies to the right lane 101R. At least one of the acceleration controller 22 or the left-right movement assist device 23 is controlled so that the motorcycle 1 does not enter the edge field 71F arranged in this way and the motorcycle 1 is in contact with the field 70F1. In other words, the active driving assist control unit 60 is configured to control at least one of the acceleration controller 22 or the left-right movement assist device 23 based on the direction of vehicle flow of the neighboring lane 101 and the obliquely-forward inter-vehicle distance D1.

The active driving assist control unit 60 may change the width W71 of the edge field 71F based on the type of a lane mark. The active driving assist control unit 60 may change the width W71 of the edge field 71F based on the width of a road shoulder or a side strip.

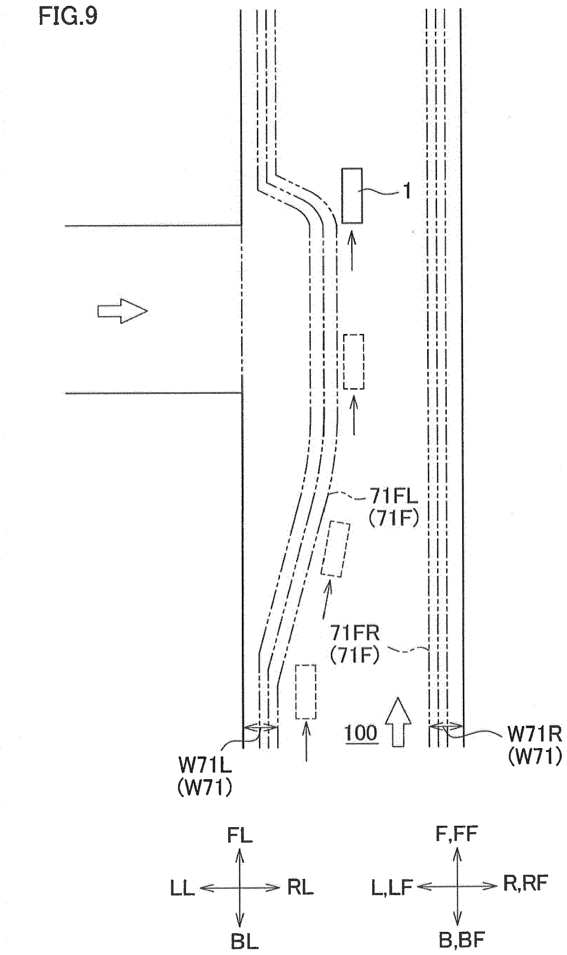

When the lane information calculation unit 59 or the wireless communication apparatus 42 detects an intersection with the lane 100, the active driving assist control unit 60 may change the width W71 of the edge field 71F connected to a lane which intersects the lane 100. For example, in FIG. 9, the left edge field 71FL is connected to the lane intersecting the lane 100. The active driving assist control unit 60 may increase the width W71L of the left edge field 71FL from a position rearward of the intersection in the lane front-rear direction to at least a part in the intersection. In FIG. 9, the increase in the width W71L of the left edge field 71FL ends at around the end of the intersection. Depending on the state of the lane 100 and the state of vehicles around the intersection, the position from which the width W71L of the left edge field 71FL increases may be close to the intersection.

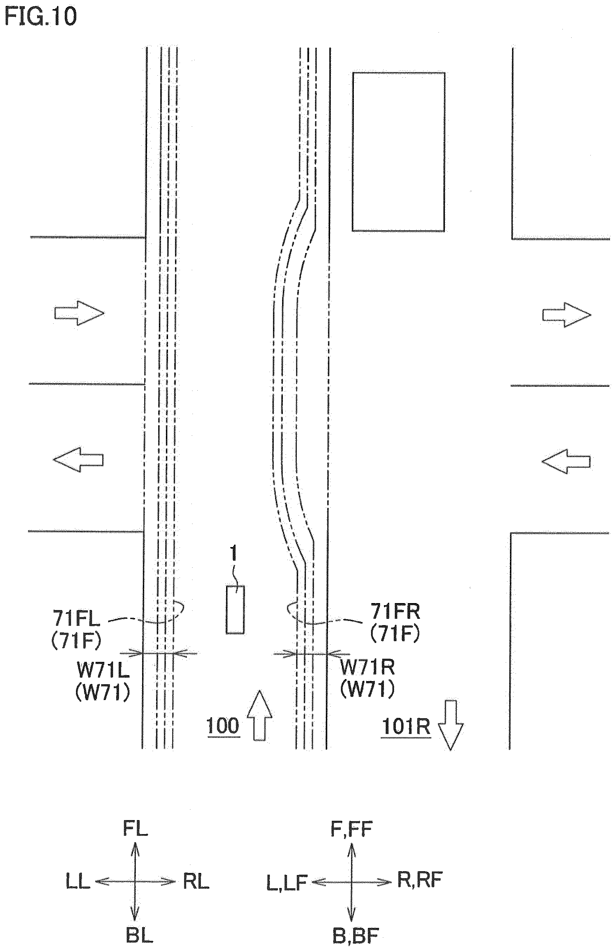

As shown in FIG. 10, for example, when the road is left-hand traffic and a vehicle in the right lane 101R is on standby for turning right, the width W71R of the right edge field 71FR may be long at the intersection. The width W71L of the left edge field 71FL may be constant at the intersection and its vicinities. The width W71L of the left edge field 71FL may be changed as shown in FIG. 9.

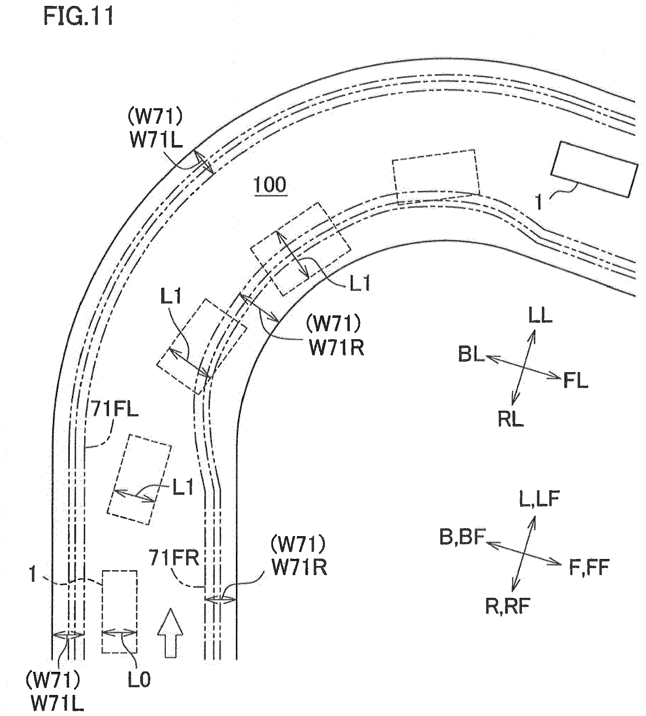

When the lane information calculation unit 59 or the wireless communication apparatus 42 detects a curve in the lane 100, as shown in FIG. 11, for example, the active driving assist control unit 60 may arrange the width W71 of the edge field 71F on the inner side of the curve to be longer than the width W71 of the edge field 71F at a straight part of the lane. This prevents a part of the motorcycle 1 or the driver from jutting out from the lane 100 when the motorcycle 1 leans at a curve and increases in width. The active driving assist control unit 60 may change the width W71 in accordance with curvature of a curve.

When the lane information calculation unit 59 or the wireless communication apparatus 42 detects a curve with low visibility, the active driving assist control unit 60 may further increase the width W71 of the edge field 71F on the inner side of the curve. This allows the driver to corner in a so-called "out-out-in" manner, with sufficient visibility.

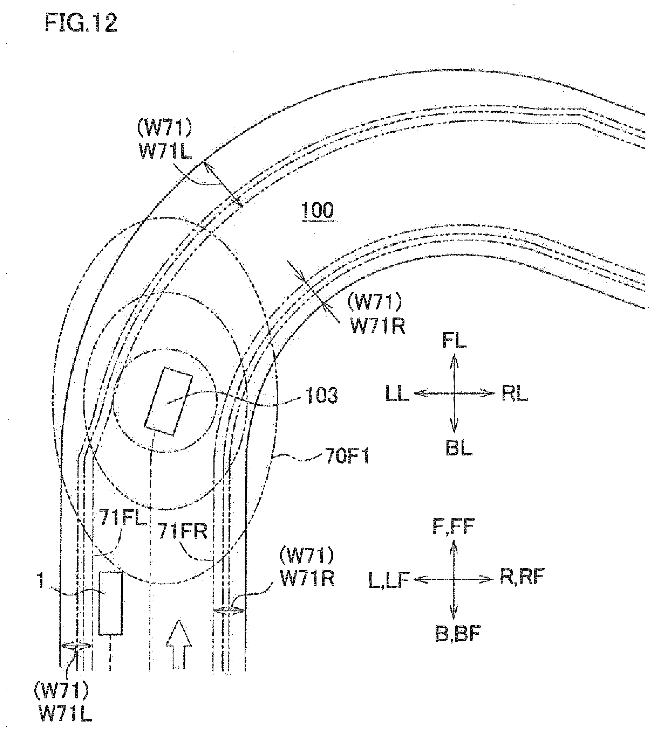

When the lane information calculation unit 59 or the wireless communication apparatus 42 detects no obstacles on the inner side of the curve, as shown in FIG. 12, for example, the active driving assist control unit 60 may arrange the width W71 of the edge field 71F on the inner side of the curve to be substantially identical with the width W71 of the edge field 71F at a straight part of the lane.

As shown in FIG. 12, for example, the active driving assist control unit 60 may increase the width W71 of the edge field 71F on the outer side of the curve. This allows the driver to corner in a so-called "out-in-out" manner. Because the turning radius is long, cornering in a high speed is possible.

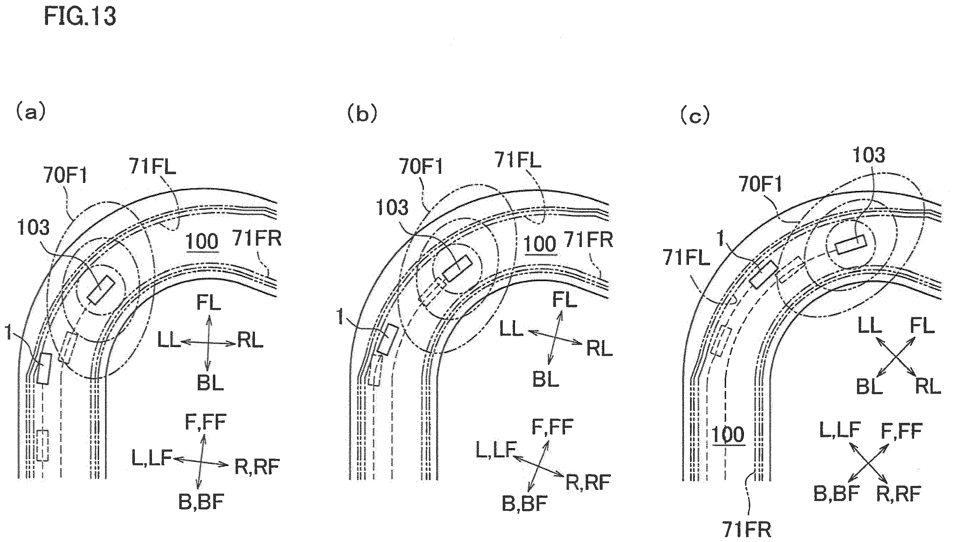

Increase in the width W71 of the edge field 71F on the outer side of the curve results in the following advantage. FIG. 13(a) shows a state immediately after the state shown in FIG. 12. FIG. 13(a) to FIG. 13(c) show how the motorcycle 1 and the obliquely-forward-neighboring vehicle 103 run. In FIG. 13(a) to FIG. 13(c), the traveling lines of the motorcycle 1 and the obliquely-forward-neighboring vehicle 103 are indicated by dotted lines. The traveling line is the locus of the front wheel. When the motorcycle 1 enters the left edge field 71FL, the active driving assist control unit 60 performs control so as to assist rightward movement of the motorcycle 1. As a result, the traveling line of the motorcycle 1 becomes close to the traveling line of the obliquely-forward-neighboring vehicle 103. On this account, the distance D1_{LR} between the motorcycle 1 and the obliquely-forward-neighboring vehicle 103 is shortened in the vehicle left-right direction (LR direction) of the motorcycle 1. This facilitates the motorcycle 1 to enter the field 70F1 of the obliquely-forward-neighboring vehicle 103. The active driving assist control unit 60, however, controls at least one of the acceleration controller 22 or the left-right movement assist device 23 so that the motorcycle 1 does not enter the field 70F1 but is in contact with the field 70F1. On this account, the distance D1_{FB} between the motorcycle 1 and the obliquely-forward-neighboring vehicle 103 in the vehicle front-rear direction (FB direction) of the motorcycle 1 can be advantageously long. In this way, driving assist further in conformity with the driver's feeling can be realized.

When there is an obstacle such as a parked car or a construction site forward of (FL direction) the motorcycle 1 in the lane 100, the edge fields of two lanes may be connected to prompt the motorcycle 1 to change the lane. For example, when moving to the right lane 101R, in some circumstances, it may be preferable for the motorcycle 1 to turn left and then turn right. The width W71 of the edge field 71F may be changed to prompt the driver to drive in this way.

The active driving assist control unit 60 may change the width W71 of the edge field 71F in accordance with the tilt angle θ1 or the tilt angular speed ω1 of the motorcycle 1. For example, the width W71R of the right edge field 71FR is increased as the motorcycle 1 leans rightward and the tilt angle θ1 increases. The active driving assist control unit 60 may change the width W71 of the edge field 71F in accordance with at least one of the tilt angle θ2, the tilt angular speed ω2, or the tilt angular acceleration α2 of the obliquely-forward-neighboring vehicle 103. The active driving assist control unit 60 may change the width W71 of the edge field 71F in accordance with at least one of the tilt angle θ3, the tilt angular speed ω3, or the tilt angular acceleration α3 of the preceding vehicle 104. The active driving assist control unit 60 may change the width W71 of the edge field 71F in accordance with the speed V1_{FB} and/or the acceleration A1_{FB} of the motorcycle 1 in the vehicle front-rear direction (FB direction). The active driving assist control unit 60 may change the width W71 of the edge field 71F in accordance with the speed V1_{LR} and/or the acceleration A1_{LR} of the motorcycle 1 in the vehicle left-right direction (LR direction). The active driving assist control unit 60 may change the width W71 of the edge field 71F in accordance with the relative speed RV4_{FB} and/or the relative acceleration RA4_{FB} of the neighboring lane vehicle 105 relative to the motorcycle 1 in the vehicle front-rear direction (FB direction) of the motorcycle 1.

The active driving assist control unit 60 may change the width W71 of the edge field 71F based on the width of the motorcycle 1 in the lane left-right direction (LLRL direction) or the vehicle left-right direction (LR direction). This width of the motorcycle 1 is identical with the width of the motorcycle 1 which has been described as the condition based on which the size of the field 70F is changed.
The active driving assist control unit 60 may change the width W71 of the edge field 71F based on the total length of the motorcycle 1 in the lane front-rear direction (FLBL direction) or the vehicle front-rear direction (FB direction).

Even if the motorcycle 1 is remote from the field 70F1, 70F2B, the active driving assist control unit 60 does not control the motorcycle 1 to come close to the field 70F1, 70F2B in some running situations. In other words, the active driving assist control unit 60 determines whether to perform control for actively assisting the driver, in accordance with the running situation.

When the motorcycle 1 enters the field 70F, 71F, or 72F, the active driving assist control unit 60 determines which one of the acceleration controller 22 and the left-right movement assist device 23 is to be controlled, based on a predetermined condition. When the motorcycle 1 is remote from the field 70F1, 70F2B, the active driving assist control unit 60 determines which one of the acceleration controller 22 and the left-right movement assist device 23 is to be controlled, based on a predetermined condition. The phrase "which one of the acceleration controller 22 and the left-right movement assist device 23 is to be controlled" encompasses a case where both of them are to be controlled.

When the motorcycle 1 enters or is remote from the field 70F1 of the obliquely-forward-neighboring vehicle 103, the active driving assist control unit 60 determines which one of the acceleration controller 22 and the left-right movement assist device 23 is to be controlled, based on at least one of sets of first determination criteria information described below. The first determination criteria information is not limited to the following ones.

The first determination criteria information includes the width w1 of the obliquely-forward-neighboring vehicle 103 in the lane left-right direction (LLRL direction). In this case, the active driving assist control unit 60 controls at least one of the acceleration controller 22 or the left-right movement assist device 23 based on the width w1 of the obliquely-forward-neighboring vehicle 103 in the lane left-right direction (LLRL direction) and the obliquely-forward inter-vehicle distance D1.

The first determination criteria information includes the position of the motorcycle 1 in the lane 100 in the lane left-right direction (LLRL direction). For example, assume that the motorcycle 1 runs at a position close to the left edge of the lane 100 whereas the obliquely-forward-neighboring vehicle 103 runs at a position rightward of the position where the motorcycle 1 runs in the left-right direction of the lane 100. In this circumstance, when the obliquely-forward-neighboring vehicle 103 moves left in the left-right direction of the lane and the motorcycle 1 enters the field 70F1 of the obliquely-forward-neighboring vehicle 103, the active driving assist control unit 60 may control the acceleration controller 22 to deaccelerate the motorcycle 1. In this example, the active driving assist control unit 60 controls the acceleration controller 22 based on the position of the motorcycle 1 in the lane 100 in the lane left-right direction (LLRL direction) and the obliquely-forward inter-vehicle distance D1.

The first determination criteria information includes the position of the obliquely-forward-neighboring vehicle 103 in the lane 100 in the lane left-right direction (LLRL direction). For example, assume that the obliquely-forward-neighboring vehicle 103 runs substantially at the center of the lane 100 whereas the motorcycle 1 runs at a position leftward of the position where the obliquely-forward-neighboring vehicle 103 runs in the left-right direction of the lane 100. In this circumstance, when the obliquely-forward-neighboring vehicle 103 moves left in the left-right direction of the lane and the motorcycle 1 enters the field 70F1 of the obliquely-forward-neighboring vehicle 103, the active driving assist control unit 60 may control the acceleration controller 22 to deaccelerate the motorcycle 1 without controlling the left-right movement assist device 23. In this example, the active driving assist control unit 60 controls the acceleration controller 22 based on the position of the obliquely-forward-neighboring vehicle 103 in the lane 100 in the lane left-right direction (LLRL direction) and the obliquely-forward inter-vehicle distance D1.

The first determination criteria information includes the speed V1_{FB} and/or the acceleration A1_{FB} of the motorcycle 1 in the vehicle front-rear direction (FB direction). In this case, the active driving assist control unit 60 controls at least one of the acceleration controller 22 or the left-right movement assist device 23 based on the obliquely-forward inter-vehicle distance D1 and at least one of the speed V1_{FB} and the acceleration A1_{FB} of the motorcycle 1 in the vehicle front-rear direction (FB direction).

The first determination criteria information includes the speed V1_{LR} and/or the acceleration A1_{LR} of the motorcycle 1 in the vehicle left-right direction (LR direction). In this case, the active driving assist control unit 60 controls at least one of the acceleration controller 22 or the left-right movement assist device 23 based on the obliquely-forward inter-vehicle distance D1 and at least one of the speed V1_{LR} and the acceleration A1_{LR} of the motorcycle 1 in the vehicle left-right direction (LR direction).

The first determination criteria information includes the relative speed RV2_{FB} and/or the relative acceleration RA2_{FB} of the obliquely-forward-neighboring vehicle 103 relative to the motorcycle 1 in the vehicle front-rear direction (FB direction) of the motorcycle 1. In this case, the active driving assist control unit 60 controls at least one of the acceleration controller 22 or the left-right movement assist device 23 based on the obliquely-forward inter-vehicle distance D1 and at least one of the relative speed RV2_{FB} and the relative acceleration RA2_{FB} of the obliquely-forward-neighboring vehicle 103 relative to the motorcycle 1 in the vehicle front-rear direction (FB direction) of the motorcycle 1.

The first determination criteria information includes the relative speed RV2_{LR} and/or the relative acceleration RA2_{LR} of the obliquely-forward-neighboring vehicle 103 relative to the motorcycle 1 in the vehicle left-right direction (LR direction) of the motorcycle 1. In this case, the active driving assist control unit 60 controls at least one of the acceleration controller 22 or the left-right movement assist device 23 based on the obliquely-forward inter-vehicle distance D1 and at least one of the relative speed RV2_{LR} and the relative acceleration RA2_{LR} of the obliquely-forward-neighboring vehicle 103 relative to the motorcycle 1 in the vehicle left-right direction (LR direction) of the motorcycle 1.

The first determination criteria information may be whether or not the vehicle body frame 4 of the motorcycle 1 leans. The first determination criteria information may be the tilt angle θ1 and/or the tilt angular speed ω1 of the motorcycle 1. In this case, the active driving assist control unit 60 controls at least one of the acceleration controller 22 or the left-right movement assist device 23 based on the obliquely-forward inter-vehicle distance D1 and at least one of the tilt angle θ1 and the tilt angular speed ω1 of the motorcycle 1.

The first determination criteria information includes at least one of the tilt angle θ2, the tilt angular speed ω2, or the tilt angular acceleration α2 of the obliquely-forward-neighboring vehicle 103. In this case, the active driving assist control unit 60 controls at least one of the acceleration controller 22 or the left-right movement assist device 23 based on the obliquely-forward inter-vehicle distance D1 and at least one of the tilt angle θ2, the tilt angular speed ω2, and the tilt angular acceleration α2 of the obliquely-forward-neighboring vehicle 103.

The first determination criteria information includes information regarding the lane 100 detected by the lane information calculation unit 59 or the wireless communication apparatus 42. In this case, the active driving assist control unit 60 controls at least one of the acceleration controller 22 or the left-right movement assist device 23 based on the information regarding the lane 100 and the obliquely-forward inter-vehicle distance D1. For example, when the lane information calculation unit 59 or the wireless communication apparatus 42 detects any of a crossing, a traffic light, and an intersection, the motorcycle 1 is not accelerated even if the motorcycle 1 goes away from the field 70F1. In this case, the active driving assist control unit 60 controls the acceleration controller 22 based on the detected information regarding the lane 100 and the obliquely-forward inter-vehicle distance D1.

The first determination criteria information includes the width of the motorcycle 1 in the lane left-right direction (LLRL direction) or the vehicle left-right direction (LR direction). This width of the motorcycle 1 is identical with the width of the motorcycle 1 which has been described as the condition based on which the size of the field 70F is changed. The first determination criteria information includes the total length of the motorcycle 1 in the lane front-rear direction (FLBL direction) or the vehicle front-rear direction (FB direction).

When the motorcycle 1 enters or is remote from the field 70F2 of the leading preceding vehicle 104A, the active driving assist control unit 60 determines which one of the acceleration controller 22 and the left-right movement assist device 23 is to be controlled, based on at least one of sets of second determination criteria information described below. The second determination criteria information is not limited to the following ones.

The second determination criteria information includes the width w2 of the leading preceding vehicle 104A in the lane left-right direction (LLRL direction). In this case, the active driving assist control unit 60 controls at least one of the acceleration controller 22 or the left-right movement assist device 23 based on the width w2 of the leading preceding vehicle 104A in the lane left-right direction (LLRL direction), the forward inter-vehicle distance D2, and the obliquely-forward inter-vehicle distance D1.

The second determination criteria information includes the position of the leading preceding vehicle 104A in the lane 100 in the lane left-right direction (LLRL direction). In this case, the active driving assist control unit 60 controls at least one of the acceleration controller 22 or the left-right movement assist device 23 based on the position of the leading preceding vehicle 104A in the lane 100 in the lane left-right direction (LLRL direction), the forward inter-vehicle distance D2, and the obliquely-forward inter-vehicle distance D1.

The first determination criteria information includes the speed V1_{FB} and/or the acceleration A1_{FB} of the motorcycle 1 in the vehicle front-rear direction (FB direction). The second determination criteria information includes the relative speed RV3_{FB} and/or the relative acceleration RA3_{FB} of the preceding vehicle 104 relative to the motorcycle 1 in the vehicle front-rear direction (FB direction) of the motorcycle 1. The second determination criteria information includes the relative speed RV3_{LR} and/or the relative acceleration RA3_{LR} of the preceding vehicle 104 relative to the motorcycle 1 in the vehicle left-right direction (LR direction) of the motorcycle 1. The second determination criteria information includes the tilt angle θ1 and/or the tilt angular speed ω1 of the motorcycle 1. The second determination criteria information includes at least one of the tilt angle θ3, the tilt angular speed ω3, or the tilt angular acceleration α3 of the preceding vehicle 104. The second determination criteria information includes information regarding the lane 100 detected by the lane information calculation unit 59 or the wireless communication apparatus 42.

The second determination criteria information includes the width of the motorcycle 1 in the lane left-right direction (LLRL direction) or the vehicle left-right direction (LR direction). This width of the motorcycle 1 is identical with the width of the motorcycle 1 which has been described as the condition based on which the size of the field 70F is changed. The second determination criteria information includes the total length of the motorcycle 1 in the lane front-rear direction (FLBL direction) or the vehicle front-rear direction (FB direction).

Vehicles are typically deaccelerated before entering a curve. This is particularly the case for leaning vehicles. In this connection, assume that the size of the field 70F1 is constant irrespective of the speed of the obliquely-forward-neighboring vehicle 103. In such a case, at least a part of the motorcycle 1 tends to enter the field 70F1 when the obliquely-forward-neighboring vehicle 103 enters a curve. When at least a part of the motorcycle 1 enters the field 70F1, the active driving assist control unit 60 deaccelerates the motorcycle 1 in the same manner as in the obliquely-forward-neighboring vehicle 103, even when the motorcycle 1 runs straight. This causes the driver to feel strange. Actually, however, the active driving assist control unit 60 reduces the size of the field 70F1 when the obliquely-forward-neighboring vehicle 103 deaccelerates. On this account, the deceleration of the motorcycle 1 by the active driving assist control unit 60 is restrained when the obliquely-forward-neighboring vehicle 103 deaccelerates at the entrance of a curve. In this way, driving assist further in conformity with the driver's feeling can be realized.

In addition to the above, when the lane information calculation unit 59 or the wireless communication apparatus 42 detects a curve in front of the motorcycle 1, the active driving assist control unit 60 may decrease the size of the field 70F1. With this arrangement, the deceleration of the motorcycle 1 by the active driving assist control unit 60 is further restrained when the obliquely-forward-neighboring vehicle 103 deaccelerates at the entrance of a curve. In this way, driving assist further in conformity with the driver's feeling can be realized.

In addition to the above, when the lane information calculation unit 59 or the wireless communication apparatus 42 detects a curve in front of the motorcycle 1, the leaning of the obliquely-forward-neighboring vehicle 103 or the sole preceding vehicle 104B is detected, and the leaning of the vehicle body frame 4 of the motorcycle 1 is not detected, the active driving assist control unit 60 may decrease the size of the field 70F1. With this arrangement, the deceleration of the motorcycle 1 by the active driving assist control unit 60 is further restrained when the obliquely-forward-neighboring vehicle 103 deaccelerates at the entrance of a curve.

Vehicles are typically accelerated at the second half of a curve. This is particularly the case for leaning vehicles. In this connection, assume that the size of the field 70F1 is constant irrespective of the speed of the obliquely-forward-neighboring vehicle 103. In such a case, the motorcycle 1 tends to be away from the field 70F1 when the obliquely-forward-neighboring vehicle 103 accelerates at the second half of the curve. When the motorcycle 1 is away from the field 70F1, the active driving assist control unit 60 accelerates the motorcycle 1 in the same manner as in the obliquely-forward-neighboring vehicle 103, even when the motorcycle 1 is turning. This causes the driver to feel strange. Actually, however, the active driving assist control unit 60 increases the size of the field 70F1 when the obliquely-forward-neighboring vehicle 103 accelerates. On this account, the acceleration of the motorcycle 1 by the active driving assist control unit 60 is restrained when the obliquely-forward-neighboring vehicle 103 accelerates at the second half of the curve. In this way, driving assist further in conformity with the driver's feeling can be realized.

In addition to the above, when the lane information calculation unit 59 or the wireless communication apparatus 42 detects that the motorcycle 1 is running at a curve, the size of the field 70F1 may be increased by the active driving assist control unit 60. When the leaning of the obliquely-forward-neighboring vehicle 103 is not detected whereas the leaning of the vehicle body frame 4 of the motorcycle 1 is detected, the active driving assist control unit 60 may increase the size of the field 70F1. Whether the obliquely-forward-neighboring vehicle 103 is changing from a leaning state to an upright state, i.e., whether the obliquely-forward-neighboring vehicle 103 is standing up is determined based on a temporal change of the tilt angle θ2, the tilt angular speed ω2, or the tilt angular acceleration α2 of the obliquely-forward-neighboring vehicle 103. When it is determined that the obliquely-forward-neighboring vehicle 103 is standing up and the leaning of the vehicle body frame 4 of the motorcycle 1 is detected, the active driving assist control unit 60 may increase the size of the field 70F1. By increasing the size of the field 70F1 in size in this manner, the acceleration of the motorcycle 1 by the active driving assist control unit 60 is further restrained when the obliquely-forward-neighboring vehicle 103 accelerates at the second half of the curve.

When the positive acceleration of the obliquely-forward-neighboring vehicle 103 is considerably high, the motorcycle 1 tends to be away from the enlarged field 70F. When the motorcycle 1 is away from the field 70F, the active driving assist control unit 60 accelerates the motorcycle 1 even when the motorcycle 1 is turning. This causes the driver to feel strange,

For this reason, the active driving assist control unit 60 controls the acceleration controller 22 so that a control range A of the jerk when the leaning of the vehicle body frame 4 of the motorcycle 1 is detected is smaller than the upper limit of a control range B of the jerk when the leaning of the vehicle body frame 4 is not detected but is larger than the lower limit of the control range B. The control range of the jerk is a range from the upper limit of the acceleration controlled by the active driving assist control unit 60 to the lower limit of the acceleration controlled by the active driving assist control unit 60. The control range of the jerk may be a control range of the jerk in the traveling direction or a control range of the jerk in the vehicle front-rear direction of the motorcycle 1. With this arrangement, even if the obliquely-forward-neighboring vehicle 103 accelerates at the second half of the curve and the motorcycle 1 is away from the field 70F1, the acceleration of the motorcycle 1 is restrained as long as the motorcycle 1 is turning and leaning. Therefore driving assist further in conformity with the driver's feeling can be realized.

The active driving assist control unit 60 may control the acceleration controller 22 to change the jerk of the motorcycle 1, based on the tilt angle θ1 or the tilt angular speed ω1 of the motorcycle 1. In this case, the active driving assist control unit 60 controls the acceleration controller 22 based on the detected tilt angle θ1 or tilt angular speed ω1 of the motorcycle 1 and further based on the obliquely-forward inter-vehicle distance D1.

Even if the motorcycle 1 is not in the field 70F of the obliquely-forward-neighboring vehicle 103, the active driving assist control unit 60 may control the left-right movement assist device 23 so that the motorcycle 1 is moved leftward in the lane (LL direction) when the obliquely-forward-neighboring vehicle 103 runs at a position close to the right edge of the lane 100. When the obliquely-forward-neighboring vehicle 103 runs at a position close to the left edge of the lane 100, the left-right movement assist device 23 is controlled to move the motorcycle 1 in the opposite direction. This control may be performed only when the width w1 of the obliquely-forward-neighboring vehicle 103 is shorter than a predetermined width.

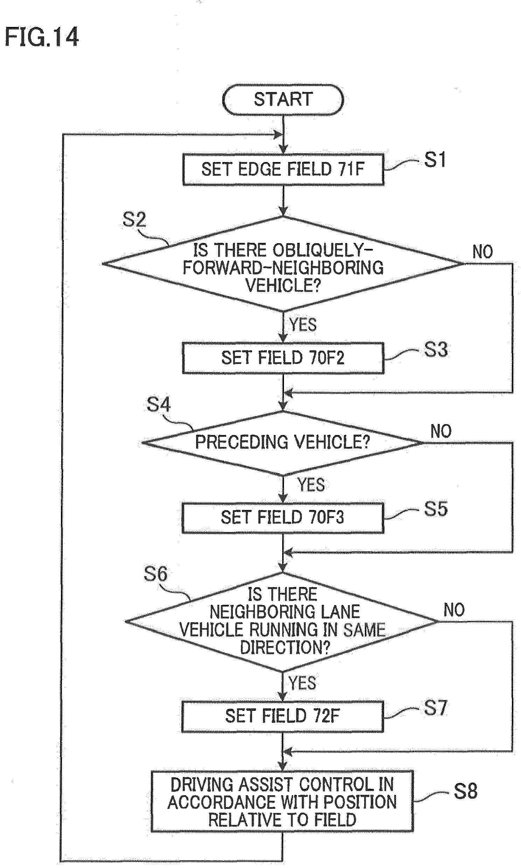

An example of steps of driving assist control by the active driving assist device 20 will be described with reference to a flowchart shown in FIG. 14. To begin with, the active driving assist control unit 60 sets the edge field 71F (step S1). Subsequently, whether the vehicle detection unit 53 detects an obliquely-forward-neighboring vehicle 103 is determined (step S2). When the obliquely-forward-neighboring vehicle 103 is detected (Yes in the step S2), the active driving assist control unit 60 sets the field 70F1 of the obliquely-forward-neighboring vehicle 103 (step S3). When the obliquely-forward-neighboring vehicle 103 is not detected (No in the step S1), the field 70F1 is not set. Subsequently, whether the vehicle detection unit 53 detects a preceding vehicle 104 is determined (step S4). When the preceding vehicle 104 is detected (Yes in the step S4), the active driving assist control unit 60 sets the field 70F2 of the preceding vehicle 104 (step S5). When the preceding vehicle 104 is not detected (No in the step S4), the field 70F2 is not set, Subsequently, whether the vehicle detection unit 53 detects a neighboring lane vehicle 105 running in a neighboring lane 101 which is identical in the direction of vehicle flow with the lane 100 is determined (step S6). When such a neighboring lane vehicle 105 is detected (Yes in step S6), the active driving assist control unit 60 sets the field 72F of the neighboring lane vehicle 105 (step S7). Based on the positional relationship between the field having been set and the motorcycle 1, etc., the active driving assist control unit 60 performs driving assist control (step S8).

The motorcycle 1 of the specific example of the embodiment of the present invention has the following characteristics.
The oblique inter-vehicle distance calculation unit 54 is configured to detect an obliquely-forward inter-vehicle distance D1 which is the distance between the obliquely-forward-neighboring vehicle 103 which is obliquely forward of the motorcycle 1 and the motorcycle 1. The active driving assist control unit 60 is configured to actively assist the driver by controlling the acceleration controller 22 in accordance with the detected obliquely-forward inter-vehicle distance D1, while restricting the jerk as described above. To be more specific, the motorcycle 1 is arranged to follow the obliquely-forward-neighboring vehicle 103 so that the oblique inter-vehicle distance D0 is maintained at a predetermined target distance. Because the absolute value of the jerk is small, the followability to the obliquely-forward-neighboring vehicle 103 can be improved while restraining the strange feeling for the driver. On this account, driving assist in conformity with the driver's feeling can be realized in situations in which an obliquely-forward-neighboring vehicle 103 runs at a position obliquely forward of the motorcycle 1.

When the motorcycle 1 and an obliquely-forward-neighboring vehicle 103 run, another preceding vehicle 104 may run on the same lane. The preceding vehicle 104 is a vehicle which has the trailing end positioned forward of the trailing end of the obliquely-forward-neighboring vehicle 103 in the vehicle front-rear direction of the motorcycle 1 and is at least partially overlapped with the motorcycle 1 when viewed in the vehicle front-rear direction of the motorcycle 1. The forward inter-vehicle distance calculation unit 56 is configured to detect a forward inter-vehicle distance D2 which is the distance between the preceding vehicle 104 and the motorcycle 1. The active driving assist control unit 60 is configured to actively assist the driver by controlling the acceleration controller 22 in accordance with the forward inter-vehicle distance D2 and the obliquely-forward inter-vehicle distance D1, while restricting the jerk as described above. To be more specific, the motorcycle 1 is arranged to control the acceleration of the motorcycle 1 so that the oblique inter-vehicle distance D0 is maintained at a predetermined target distance and the forward inter-vehicle distance D2 is equal to or longer than a predetermined limit distance. On this account, driving assist in conformity with the driver's feeling can be realized in situations in which the obliquely-forward-neighboring vehicle 103 and the preceding vehicle 104 run.

The obliquely-neighboring vehicle information calculation unit 55 is configured to detect the width of the obliquely-forward-neighboring vehicle 103 in the lane left-right direction. Based on the width w1 of the obliquely-forward-neighboring vehicle 103, it is possible to determine whether the obliquely-forward-neighboring vehicle 103 is of the leaning vehicle type. The active driving assist control unit 60 is configured to actively assist the driver by controlling the acceleration controller 22 based on the width w1 of the obliquely-forward-neighboring vehicle 103 detected by the obliquely-neighboring vehicle information calculation unit 55 and the oblique inter-vehicle distance D0, while restricting the jerk as described above. It is therefore possible to change the driving assist control based on whether the obliquely-forward-neighboring vehicle 103 is of the leaning vehicle type. For this reason, driving assist further in conformity with the driver's feeling can be realized.

The preceding vehicle information calculation unit 57 is configured to detect the width w2 of the preceding vehicle 104 in the lane left-right direction or the vehicle left-right direction of the motorcycle 1. Based on the width w2 of the preceding vehicle 104, it is possible to determine whether the preceding vehicle 104 is of the leaning vehicle type. The active driving assist control unit 60 is configured to actively assist the driver by controlling the acceleration controller 22 based on the width of the preceding vehicle 104 detected by the preceding vehicle information calculation unit 57, forward inter-vehicle distance D2, and the oblique inter-vehicle distance D0, while restricting the jerk as described above. It is therefore possible to change the driving assist control based on whether the preceding vehicle 104 is of the leaning vehicle type. For this reason, driving assist further in conformity with the driver's feeling can be realized.

A preferable value of the oblique inter-vehicle distance D0 may vary in accordance with the speed of the motorcycle 1 in the traveling direction. The same applies to the acceleration of the motorcycle 1 in the traveling direction, the speed and acceleration of the motorcycle 1 in the vehicle front-rear direction, and the speed and acceleration of the motorcycle 1 in the vehicle left-right direction. The sensors 36 to 39 are configured to detect these speeds and accelerations of the motorcycle 1. The active driving assist control unit 60 is configured to actively assist the driver based on at least one of sets of information detected by the sensors 36 to 39 and the oblique inter-vehicle distance D0, while restricting the jerk as described above. It is therefore possible to change the target distance of the oblique inter-vehicle distance D0 in accordance with the speed or acceleration of the motorcycle 1. For this reason, driving assist further in conformity with the driver's feeling can be realized.

When the motorcycle 1 turns, the vehicle body frame 4 of the motorcycle 1 leans in the vehicle left-right direction. When the vehicle body frame 4 leans in the vehicle left-right direction, the width of the motorcycle 1 changes in the vehicle left-right direction. On this account, a preferable value of the oblique inter-vehicle distance D0 may vary in accordance with the tilt angle or the tilt angular speed of leaning of the vehicle body frame 4 of the motorcycle 1 in the vehicle left-right direction. The IMU 40 is configured to detect a tilt angle θ1 and a tilt angular speed ω1 of leaning of the vehicle body frame 4 of the motorcycle 1 in the vehicle left-right direction. The active driving assist control unit 60 is configured to actively assist the driver by controlling the acceleration controller 22 based on the oblique inter-vehicle distance D0 and at least one of the tilt angle θ1 or the tilt angular speed ω1 of the motorcycle 1 detected by the IMU 40, while restricting the jerk as described above. On this account, the driving assist control is changeable in accordance with the state of leaning of the vehicle body frame 4 of the motorcycle 1. For this reason, driving assist further in conformity with the driver's feeling can be realized.

A preferable value of the oblique inter-vehicle distance D0 may vary in accordance with the speed V2_{FB} of the obliquely-forward-neighboring vehicle 103 in the vehicle front-rear direction of the motorcycle 1. The same applies to the relative speed RV2_{FB}, the acceleration A2_{FB}, and the real RA2_{FB} of the obliquely-forward-neighboring vehicle 103 in the vehicle front-rear direction of the motorcycle 1 and the speed V2_{LR}, the relative speed RV2_{LR}, the acceleration A2_{LR}, and the relative acceleration RA2_{LR} of the obliquely-forward-neighboring vehicle 103 in the vehicle left-right direction of the motorcycle 1. The obliquely-neighboring vehicle information calculation unit 55 is configured to detect the speeds V2_{FB} and V2_{LR}, the accelerations A2_{FB} and A2_{LR}, the relative speeds RV2_{FB} and RV2_{LR}, and the relative accelerations RA2_{FB} and RA2_{LR} of the obliquely-forward-neighboring vehicle 103. The active driving assist control unit 60 is configured to actively assist the driver based on the oblique inter-vehicle distance D0 and at least one of the above-described sets of information detected by the obliquely-neighboring vehicle information calculation unit 55, which are the speeds V2_{FB} and V2_{LR}, the accelerations A2_{FB} and A2_{LR}, the relative speeds RV2_{FB} and RV2_{LR}, and the relative accelerations RA2_{FB} and RA2_{LR}, while restricting the jerk as described above. It is therefore possible to change the target distance of the oblique inter-vehicle distance D0 in accordance with a change of the speed of the obliquely-forward-neighboring vehicle 103. For this reason, driving assist further in conformity with the driver's feeling can be realized.

The obliquely-forward-neighboring vehicle 103 is remote from the motorcycle 1 in the vehicle left-right direction. The obliquely-forward-neighboring vehicle 103 is therefore likely to be of the leaning vehicle type. Alternatively, the obliquely-forward-neighboring vehicle 103 is restricted to the leaning vehicle type. When the obliquely-forward-neighboring vehicle 103 is of the leaning vehicle type, the obliquely-forward-neighboring vehicle 103 leans relative to the up-down direction when the obliquely-forward-neighboring vehicle 103 turns. When the obliquely-forward-neighboring vehicle 103 leans, the width of the obliquely-forward-neighboring vehicle 103 changes. A preferable value of the oblique inter-vehicle distance D0 may vary in accordance with the tilt angle θ2, the tilt angular speed ω2, and the tilt angular acceleration α2 of the obliquely-forward-neighboring vehicle 103. The obliquely-neighboring vehicle information calculation unit 55 is configured to detect the tilt angle θ2, the tilt angular speed ω2, and the tilt angular acceleration α2 of the obliquely-forward-neighboring vehicle 103 relative to the up-down direction. The active driving assist control unit 60 is configured to actively assist the driver by controlling the acceleration controller 22 based on at least one of the tilt angle θ2, the tilt angular speed ω2, or the tilt angular acceleration α2 of the obliquely-forward-neighboring vehicle 103 detected by the obliquely-neighboring vehicle information calculation unit 55 and further based on the oblique inter-vehicle distance D0, while restricting the jerk as described above. It is therefore possible to change the driving assist control in accordance with the state of leaning of the obliquely-forward-neighboring vehicle 103. For this reason, driving assist further in conformity with the driver's feeling can be realized.

The motorcycle 1 is narrow in width. The motorcycle 1 is therefore able to run on a selected position in the lane 100 in the left-right direction. The in-lane left-right position calculation unit 52 is configured to detect the position of the motorcycle 1 in the lane 100 in the left-right direction of the lane 100. The active driving assist control unit 60 is configured to actively assist the driver by controlling the acceleration controller 22 based on the oblique inter-vehicle distance D0 and the position of the motorcycle 1 in the lane 100 obtained by the in-lane left-right position calculation unit 52, while restricting the jerk as described above. It is therefore possible to change the driving assist control based on the position of the motorcycle 1 in the lane 100. For this reason, driving assist further in conformity with the driver's feeling can be realized.

The obliquely-forward-neighboring vehicle 103 is remote from the motorcycle 1 in the vehicle left-right direction. The obliquely-forward-neighboring vehicle 103 is therefore likely to be the leaning vehicle type. Alternatively, the obliquely-forward-neighboring vehicle 103 is restricted to the leaning vehicle type. When the obliquely-forward-neighboring vehicle 103 is of the leaning vehicle type, the obliquely-forward-neighboring vehicle 103 is able to run on a selected position in the lane 100 in the left-right direction. The obliquely-neighboring vehicle information calculation unit 55 is configured to detect the position of the obliquely-forward-neighboring vehicle 103 in the lane 100 in the left-right direction of the lane 100. The active driving assist control unit 60 is configured to actively assist the driver by controlling the acceleration controller 22 based on the position of the obliquely-forward-neighboring vehicle 103 in the lane 100 detected by the obliquely-neighboring vehicle information calculation unit 55 and the oblique inter-vehicle distance D0, while restricting the jerk as described above. On this account, the driving assist control is changeable in accordance with the position where the obliquely-forward-neighboring vehicle 103 runs in the lane 100, even if the obliquely-forward-neighboring vehicle 103 is of the leaning vehicle type. For this reason, driving assist further in conformity with the driver's feeling can be realized.

The lane information calculation unit 59 is configured to detect the lane information related to the lane 100 in which the motorcycle 1 runs. The lane information includes, for example, information regarding curves, corners, intersections, junctions, branches, traffic lights, and crossings. The lane information may include traffic restriction information such as speed limit and traffic jam information. A preferred running situation of the motorcycle 1 varies in accordance with the state of the lane 100. The active driving assist control unit 60 is configured to actively assist the driver by controlling the acceleration controller 22 based on the lane information detected by the lane information calculation unit 59 and the oblique inter-vehicle distance D0, while restricting the jerk as described above. It is therefore possible to change the driving assist control in accordance with the state of the lane 100. On this account, driving assist further in conformity with the driver's feeling can be realized.

The lane information calculation unit 59 is configured to detect the width W of the lane 100 in the lane left-right direction.
A preferred running position of the motorcycle 1 in the lane 100 may vary in accordance with the width W of the lane 100. The active driving assist control unit 60 is configured to actively assist the driver by controlling the acceleration controller 22 based on the width W of the lane 100 detected by the lane information calculation unit 59 and the oblique inter-vehicle distance D0, while restricting the jerk as described above. It is therefore possible to change the driving assist control in accordance with the width W of the lane 100. On this account, driving assist further in conformity with the driver's feeling can be realized.

The lane information calculation unit 59 is configured to detect the direction of vehicle flow of a left lane 101L which is to the left of the lane 100 in which the motorcycle 1 runs and the direction of vehicle flow of a right lane 101R which is to the right of the lane 100 in which the motorcycle 1 runs.
A preferred running position of the motorcycle 1 in the lane 100 may vary in accordance with the direction of vehicle flow of the left lane 101L or the right lane 101R. The active driving assist control unit 60 is configured to actively assist the driver by controlling the acceleration controller 22 based on the direction of vehicle flow of the neighboring lane 101 detected by the lane information calculation unit 59 and the oblique inter-vehicle distance D0, while restricting the jerk as described above. It is therefore possible to change the driving assist control in accordance with the direction of vehicle flow of the neighboring lane 101. On this account, driving assist further in conformity with the driver's feeling can be realized.

When the motorcycle 1 and an obliquely-forward-neighboring vehicle 103 run, a neighboring lane vehicle 105 may run in a neighboring lane 101. The neighboring lane vehicle 105 is a vehicle which runs at a position forward of the motorcycle 1 in the vehicle front-rear direction of the motorcycle 1. The neighboring lane vehicle information calculation unit 58 is configured to detect a neighboring lane inter-vehicle distance D3 which is the distance between the neighboring lane vehicle 105 and the motorcycle 1. The active driving assist control unit 60 is configured to actively assist the driver by controlling the acceleration controller 22 in accordance with the neighboring lane inter-vehicle distance D3 and the obliquely-forward inter-vehicle distance D1, while restricting the jerk as described above. On this account, when, for example, the neighboring lane vehicle 105 is of the leaning vehicle type and a plurality of leaning vehicles run closely across two lanes, the neighboring lane inter-vehicle distance D3 is controllable to be equal to or longer than a predetermined distance. On this account, driving assist in conformity with the driver's feeling can be realized in situations in which the neighboring lane vehicle 105 and the obliquely-forward-neighboring vehicle 103 run.

The active driving assist control unit 60 is configured to actively assist the driver by controlling the acceleration controller 22 based on the obliquely-forward inter-vehicle distance D1 detected by the oblique inter-vehicle distance calculation unit 54 so that the obliquely-forward inter-vehicle distance D1 is maintained at a target distance, while restricting the jerk as described above. The obliquely-forward inter-vehicle distance D1 is a distance of a line segment which is inclined with respect to both the vehicle front-rear direction and the vehicle left-right direction in plan view. The active driving assist control unit 60 controls the inter-vehicle distance with the obliquely-forward-neighboring vehicle 103 to be maintained at a predetermined target distance based not only on the distance between the obliquely-forward-neighboring vehicle 103 and the motorcycle 1 in the vehicle front-rear direction but also on the distance between the obliquely-forward-neighboring vehicle 103 and the motorcycle 1 in the vehicle left-right direction. On this account, driving assist in conformity with the driver's feeling can be realized.

The active driving assist control unit 60 is configured to actively assist the driver by controlling the acceleration controller 22 based on the detected obliquely-forward inter-vehicle distance D1 and the detected forward inter-vehicle distance D2 so that the obliquely-forward inter-vehicle distance D1 is maintained at a target distance and the forward inter-vehicle distance D2 is equal to or longer than a predetermined limit distance, while restricting the jerk as described above. On this account, driving assist further in conformity with the driver's feeling can be realized in situations in which the obliquely-forward-neighboring vehicle 103 and the preceding vehicle 104 run.

A preferred embodiment of the present invention has been described above. However, the present invention is not limited to the above-described embodiment, and various changes can be made within the scope of the claims. Further, modifications described below may be used in combination as needed.

In the specific example of the embodiment above, a position of the motorcycle 1, based on which the positional relations between the motorcycle 1 and the fields 70F, 71F, and 72F are determined, is the front sensing unit 41 or the front wheel unit 2. The position in the motorcycle 1, based on which the positional relations between the motorcycle 1 and the fields 70F, 71F, and 72F are determined, may be different from this. The outer edge of the motorcycle 1 in plan view may be used as a basis. For example, whether a rectangle or an ellipse, which has the same width and total length as the motorcycle 1, enters a field is determined. The width of the motorcycle 1 in such a case may be the upright state width L0 or a width which varies in accordance with the tilt angle θ1 of the vehicle body frame 4. The width which varies in accordance with the tilt angle θ1 of the vehicle body frame 4 may be the width of only the motorcycle 1 (L0, L1v) or the width including the driver (L0, L1). When the width which varies in accordance with the tilt angle θ1 of the vehicle body frame 4 is employed, the width W71 of the edge field 71F on the inner side of a curve may be identical with the width W71 of the edge field 71F at a straight part, as shown in FIG. 12.

Instead of setting fields 70F2, 70F3, and 72F to vehicles 103, 104, and 105 which are not the motorcycle 1, a field may be set to the motorcycle 1. A condition for changing the size of this field is a combination of conditions for changing the sizes of the fields 70F2, 70F3, and 72F. In this case, the active driving assist control unit 60 controls at least one of the acceleration controller 22 or the left-right movement assist device 23 so that the obliquely-forward-neighboring vehicle 103 is in contact with the field of the motorcycle 1 and at the same time the leading preceding vehicle 104A or the neighboring lane vehicle 105 does not enter the field of the motorcycle 1. In addition, in the same manner as in the embodiment above, the motorcycle 1 is controlled not to enter the edge field 71F.

The oblique inter-vehicle distance calculation unit 54 may detect an inter-vehicle time T1 between the obliquely-forward-neighboring vehicle 103 and the motorcycle 1 in the vehicle front-rear direction (FB direction). The inter-vehicle time T1 is a value calculated by converting the distance D1_{FB} between the obliquely-forward-neighboring vehicle 103 and the motorcycle 1 in the vehicle front-rear direction to a time. The inter-vehicle time T1 in the vehicle front-rear direction (FB direction) is a time from a time point at which the obliquely-forward-neighboring vehicle 103 passes a particular position to a time point at which the motorcycle 1 passes the same position. The particular position is not a point but a line extending along the vehicle left-right direction (LR direction). The inter-vehicle time T1 is, for example, calculated based on the distance D1_{FB} at a particular time point and temporal changes of the speed V1_{FB} of the motorcycle 1 and the relative speed RV2_{FB} of the obliquely-forward-neighboring vehicle 103. The inter-vehicle time T1 may be an inter-vehicle time in the traveling direction of the motorcycle 1. Alternatively, the inter-vehicle time T1 may be an inter-vehicle time in the front-rear direction of the lane 100.

The active driving assist control unit 60 may perform the above-described driving assist control by using the inter-vehicle time T1 and the distance D1_{LR} instead of the obliquely-forward inter-vehicle distance D1. For example, the active driving assist control unit 60 may control the acceleration controller 22 based on the inter-vehicle time T1 in such a way that the inter-vehicle time T1 is maintained at a predetermined target time and the distance D1_{LR} is maintained at a predetermined distance corresponding to the target time.

The forward inter-vehicle distance calculation unit 56 may detect an inter-vehicle time T2 between the preceding vehicle 104 and the motorcycle 1. The active driving assist control unit 60 may perform the above-described driving assist control by using the inter-vehicle time T2 instead of the forward inter-vehicle distance D2. For example, a limit inter-vehicle time is set instead of setting the field 70F2 of the preceding vehicle 104. The active driving assist control unit 60 may control the acceleration controller 22 in such a way that the obliquely-forward inter-vehicle distance D1 is maintained at a predetermined target distance and the inter-vehicle time T2 is equal to or longer than the predetermined limit inter-vehicle time.

In the specific example of the embodiment above, the active driving assist control unit 60 controls at least one of the acceleration controller 22 or the left-right movement assist device 23 so that the obliquely-forward inter-vehicle distance D1 is maintained at a target inter-vehicle distance. Alternatively, the active driving assist control unit 60 may control at least one of the acceleration controller 22 or the left-right movement assist device 23 so that the obliquely-forward inter-vehicle distance D1 is maintained to be equal to or longer than a predetermined limit distance.

The motorcycle 1 may not include any of the above-described sensors 30 to 41. The controller 50 does not have to include all of the above-described function processors 51 to 60.

The motorcycle 1 may include a sensor which is configured to detect the tilt angular acceleration α1 of the leaning of the vehicle body frame 4 in the vehicle left-right direction (LR direction). The controller 50 may calculate the tilt angular acceleration α1 based on the tilt angular speed ω1. The active driving assist control unit 60 may perform the driving assist control described in the specific example of the embodiment above, by using at least one of the tilt angle θ1, the tilt angular speed ω1, or the tilt angular acceleration α1.

In the specific example of the embodiment above, the leaning of the vehicle body frame 4 of the motorcycle 1 is detected by the IMU 40. Alternatively, the controller 50 detects the leaning of the vehicle body frame 4 of the motorcycle 1 based on a result of sensing by the front sensing unit 41. Furthermore, the controller 50 may detect at least one of the tilt angle θ1, the tilt angular speed ω1, or the tilt angular acceleration α1 of the vehicle body frame 4 of the motorcycle 1 based on a result of sensing by the front sensing unit 41. In this case, the front sensing unit 41 is encompassed in a leaning detection unit of the present invention. Alternatively, the controller 50 may detect the leaning of the vehicle body frame 4 of the motorcycle 1 based on a GNSS signal which is received by the wireless communication apparatus 42 and map data which is either stored in the storage unit 49 or received by the wireless communication apparatus 42. In this case, the wireless communication apparatus 42 is encompassed in the leaning detection unit of the present invention.

Instead of detecting the speed V1_{FB} of the motorcycle 1 in the vehicle front-rear direction (FB direction) and the speed V1_{LR} of the motorcycle 1 in the vehicle left-right direction (LR direction), only the speed VI of the motorcycle 1 in the traveling direction may be detected. In place of the speeds V1_{FB} and V1_{LR}, the active driving assist control unit 60 performs the above-described driving assist control by using the speed VI. For example, the size of the field 70F is changed based on the speed VI. Furthermore, instead of detecting the acceleration A1_{FB} of the motorcycle 1 in the vehicle front-rear direction (FB direction) and the acceleration A1_{LR} of the motorcycle 1 in the vehicle left-right direction (LR direction), only the acceleration A1 of the motorcycle 1 in the traveling direction may be detected. In place of the accelerations A1_{FB} and A1_{LR}, the active driving assist control unit 60 performs the above-described driving assist control by using the acceleration A1. In accordance with the speed or acceleration of the motorcycle 1 in the traveling direction, a preferable distance in the vehicle left-right direction (LR direction) and a preferable distance in the vehicle front-rear direction (FB direction) between the motorcycle 1 and the obliquely-forward-neighboring vehicle 103 may vary. According to this modification, at least one of the acceleration controller 22 and the left-right movement assist device 23 is controlled based on the obliquely-forward inter-vehicle distance D1 and at least one of the speed V1 or the acceleration A1 of the motorcycle 1 in the traveling direction. Therefore driving assist further in conformity with the driver's feeling can be realized.

Instead of detecting the speed V2_{FB}, the relative speed RV2_{FB}, the acceleration A2_{FB}, and the relative acceleration RA2_{FB} of the obliquely-forward-neighboring vehicle 103 in the vehicle front-rear direction (FB direction) of the motorcycle 1, the speed, relative speed, acceleration, and relative acceleration of the obliquely-forward-neighboring vehicle 103 in the traveling direction of the motorcycle 1 or the obliquely-forward-neighboring vehicle 103 may be detected. The active driving assist control unit 60 performs the above-described driving assist control by using these sets of information.
Instead of detecting the speed V2_{LR}, the relative speed RV2_{LR}, the acceleration A2_{LR}, and the relative acceleration RA2_{LR} of the obliquely-forward-neighboring vehicle 103 in the vehicle left-right direction (LR direction) of the motorcycle 1, the speed, relative speed, acceleration, and relative acceleration of the obliquely-forward-neighboring vehicle 103 in a direction orthogonal to the traveling direction of the motorcycle 1 or the obliquely-forward-neighboring vehicle 103 may be detected. The active driving assist control unit 60 performs the above-described driving assist control by using these sets of information.

The obliquely-neighboring vehicle information calculation unit 55 may detect the relative speed RV2_{LR} or the relative acceleration RA2_{LR} of the obliquely-forward-neighboring vehicle 102 relative to the motorcycle 1 in the vehicle left-right direction (LR direction) based on a result of sensing by the front sensing unit 41. The active driving assist control unit 60 may perform the above-described driving assist control based on the relative speed RV2_{LR} and/or the relative acceleration RA2_{LR}. For example, the active driving assist control unit 60 may control the acceleration controller 22 so that the jerk at the detection of leaning of the vehicle body frame 4 is changed based on the relative speed RV2_{LR} or the relative acceleration RA2_{LR}.

The motorcycle 1 may be configured so that the driver can input a position in the lane 100 in the lane left-right direction (LLRL direction), the position at which the motorcycle 1 being expected to run. For example, the position may be input by operating a switch on the handle unit 5 corresponding to a screen image of the display 14. The information of the input position is received by a receiver of the controller 50. In this case, the receiver of the controller 50 is encompassed in the in-lane left-right position information acquisition unit of the present invention. In place of the position of the motorcycle 1 in the lane 100 detected by the in-lane left-right position calculation unit 52, the active driving assist control unit 60 performs the above-described driving assist control by using the positional information received by the receiver.

The wireless communication apparatus 42 may receive the width w1 of the obliquely-forward-neighboring vehicle 103 in the lane left-right direction (LLRL direction). Information other than the width w1 used for the driving assist control may be received by the wireless communication apparatus 42.

The motorcycle 1 may include a sensor which is configured to detect the jerk of the motorcycle 1. The active driving assist control unit 60 may perform the above-described driving assist control by using the jerk of the motorcycle 1 detected by a jerk sensor. It is noted that the jerk of the motorcycle 1 is controllable even when no jerk sensor is provided.

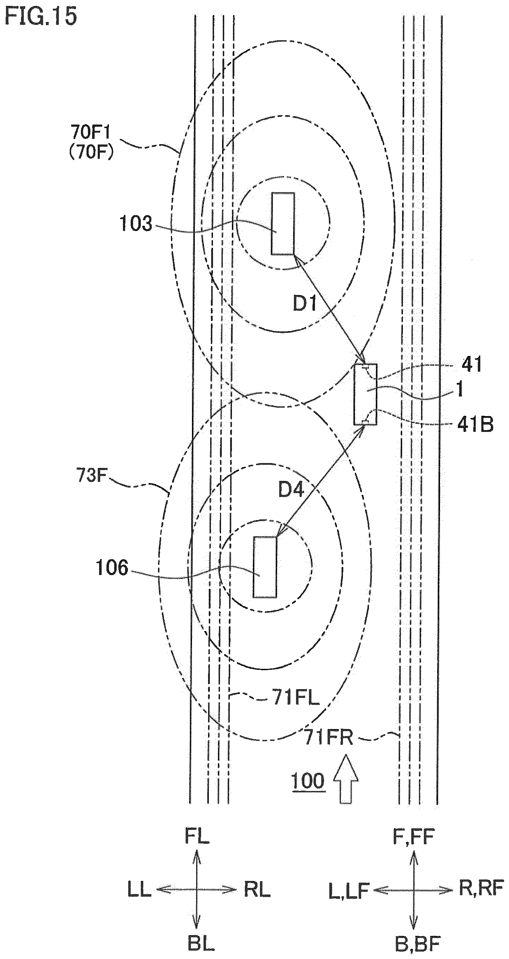

As shown in FIG. 15, the motorcycle 1 may include a rear sensing unit 41B which is configured to sense objects behind (B direction) the motorcycle 1. Specific examples of devices constituting the rear sensing unit 41B are identical with those of the front sensing unit 41. As shown in FIG. 15, among obliquely-neighboring vehicles 102, a vehicle running behind the motorcycle 1 is referred to as an obliquely-rearward-neighboring vehicle 106. The obliquely-rearward-neighboring vehicle 106 is arranged such that the front end of the vehicle is rearward of the front end of the motorcycle 1 and the trailing end of the vehicle is rearward of the trailing end of the motorcycle 1. Furthermore, the obliquely-rearward-neighboring vehicle 106 is a vehicle which satisfies a condition that, in the lane 100, there is no other vehicle in a region which is forward of (F direction) the front end of the obliquely-rearward-neighboring vehicle 106 and is rearward of the trailing end of the motorcycle 1. The following describes how the controller 50 works when the rear sensing unit 41B is provided.

The vehicle detection unit 53 of the controller 50 is configured to detect an obliquely-rearward-neighboring vehicle 106 based on a result of sensing by the rear sensing unit 41B. The oblique inter-vehicle distance calculation unit 54 of the controller 50 detects an obliquely-rearward inter-vehicle distance D4 which is the distance between the obliquely-rearward-neighboring vehicle 106 and the motorcycle 1, based on a result of sensing by the rear sensing unit 41B or the like. Furthermore, the obliquely-neighboring vehicle information calculation unit 55 of the controller 50 detects information such as speed and width for the obliquely-rearward-neighboring vehicle 106, in the same manner as for the obliquely-forward-neighboring vehicle 103. The active driving assist control unit 60 sets a field 73F which has the obliquely-rearward-neighboring vehicle 106 substantially as a center. Being similar to the field 70F and the field 72F, the size of the field 73F is changed based on different conditions. The active driving assist control unit 60 controls at least one of the acceleration controller 22 or the left-right movement assist device 23 so that the motorcycle 1 does not enter the field 73F of the obliquely-rearward-neighboring vehicle 106. The active driving assist control unit 60 may control at least one of the acceleration controller 22 or the left-right movement assist device 23 so that the motorcycle 1 is in contact with the field 73F of the obliquely-rearward-neighboring vehicle 106.

In the present invention, methods of actively assisting the driver by controlling the acceleration controller in accordance with the oblique inter-vehicle distance between an obliquely-neighboring vehicle and a leaning vehicle are not limited to those described in the specific example of the embodiment above. The active driving assist device of the present invention may be any types of active driving assist devices on condition that the driver of a leaning vehicle is assisted. The active driving assist device of the present invention may include so-called ADAS (Advanced Driver Assistant Systems). To be more specific, for example, the active driving assist device of the present invention may include an anti-skid device (ESC: Electronic Stability Control). When information other than the information described in the present invention is required depending on a type of driving assist, the active driving assist device of the present invention obtains the required information and performs driving assist control.

In the specific example of the embodiment above, engine power is controlled by controlling an intake air amount by adjusting the opening degree of the throttle valve 18. Alternatively, the active driving assist control unit of the present invention may control the engine power by controlling the intake air amount by adjusting the lift of the intake valve of the engine unit. Alternatively, the active driving assist control unit of the present invention may control the engine power by controlling the intake air amount by adjusting the timings to open and close the intake valve of the engine unit. Alternatively, the active driving assist control unit of the present invention may control the engine power by controlling a fuel injection amount.

The engine unit included in the acceleration controller of the present invention may or may not include a throttle valve. An example of an engine unit not including a throttle valve is a diesel engine. The diesel engine controls power solely by a fuel injection amount. Another example of an engine unit not including a throttle valve is an engine unit in which an intake air amount is controlled solely by the lift of an intake valve.

The leaning vehicle of the present invention may be of any type on condition that the leaning vehicle includes a vehicle body frame which leans rightward in the vehicle left-right direction when turning right and leans leftward in the vehicle left-right direction when turning left. The leaning vehicle of the present invention may be a straddled vehicle which is not a motorcycle. A straddled vehicle indicates all types of vehicles on which a rider rides in a manner of straddling a saddle. The leaning vehicle of the present invention may not be a straddled vehicle. The leaning vehicle of the present invention may be a tricycle or a four-wheeled vehicle. The leaning vehicle of the present invention may include two or more front wheels. The leaning vehicle of the present invention may include two or more rear wheels.

When there are two or more front wheels, the active driving assist control unit may move the leaning vehicle in the left-right direction by controlling the driving forces of both the left and right front wheels. When there are two or more rear wheels, the active driving assist control unit may move the leaning vehicle in the left-right direction by controlling the driving forces of both the left and right rear wheels.

Japanese Patent Application No. 2015-160461, which is a basic application of the subject application, will be referred to as a basic application 1.
The active driving assist device in this specification is equivalent to a driving assist device of the basic application 1. The oblique inter-vehicle distance detection unit in this specification is equivalent to an oblique inter-vehicle distance detection unit of the basic application 1. The forward inter-vehicle distance detection unit in this specification is equivalent to a front distance detection unit of the basic application 1. The speed-related information detection unit in this specification is equivalent to a speed/acceleration detection unit of the basic application 1. The in-lane left-right position information acquisition unit in this specification includes a left-right position detection/receiving unit of the basic application 1. The in-lane left-right position information acquisition unit 52 in this specification is equivalent to a left-right position calculation unit 51 of the basic application 1. The oblique inter-vehicle distance calculation unit 54 in this specification is equivalent to an oblique distance calculation unit 54 of the basic application 1. The obliquely-neighboring vehicle information calculation unit 55 in this specification is equivalent to an obliquely-neighboring vehicle information acquisition unit 55 of the basic application 1. The forward inter-vehicle distance calculation unit 56 in this specification is equivalent to a front distance calculation unit 56 of the basic application 1. The preceding vehicle information calculation unit 57 in this specification is equivalent to a preceding vehicle information acquisition unit 57 of the basic application 1. The neighboring lane vehicle information calculation unit 58 in this specification is equivalent to a neighboring lane vehicle information acquisition unit 58 of the basic application 1. The lane information calculation unit 59 in this specification is equivalent to a lane information acquisition unit 59 of the basic application 1. The active driving assist control unit 60 in this specification is equivalent to a driving assist control unit 60 of the basic application 1.

### [Reference Signs List]

1 leaning vehicle, motorcycle
2 front wheel unit
3 rear wheel unit
4 vehicle body frame
10 seat
20 active driving assist device
21 oblique inter-vehicle distance detection unit
22 acceleration controller
23 left-right movement assist device
36 front-rear speed sensor (speed-related information detection unit)
37 front-rear acceleration sensor (speed-related information detection unit)
38 left-right speed sensor (speed-related information detection unit)
39 left-right acceleration sensor (speed-related information detection unit)
40 IMU (leaning detection unit)
41 front sensing unit
41B rear sensing unit
42 wireless communication apparatus
50 controller
52 in-lane left-right position calculation unit (in-lane left-right position information acquisition unit)
54 oblique inter-vehicle distance calculation unit (oblique inter-vehicle distance detection unit)
55 obliquely-neighboring vehicle information calculation unit (obliquely-neighboring vehicle information detection unit)
56 forward inter-vehicle distance calculation unit (forward inter-vehicle distance detection unit)
57 preceding vehicle information calculation unit (preceding vehicle information detection unit)
58 neighboring lane vehicle information calculation unit (neighboring lane inter-vehicle distance detection unit)
59 lane information calculation unit (lane information detection unit)
60 active driving assist control unit
100 lane
101 (101L, 101R) neighboring lane
102 obliquely-neighboring vehicle
103 obliquely-forward-neighboring vehicle
104 (104A, 104B) preceding vehicle
105 neighboring lane vehicle
106 obliquely-rearward-neighboring vehicle
D0 oblique inter-vehicle distance
D1 obliquely-forward inter-vehicle distance
D2 forward inter-vehicle distance
D3 neighboring lane inter-vehicle distance
D4 oblique inter-vehicle distance
L0 upright state width
L1 lean state width
L1v leaning vehicle width
w1 width of obliquely-forward-neighboring vehicle
w2 width of preceding vehicle
w3 width of neighboring lane vehicle
W width of lane

## Claims

1. A leaning vehicle (1) comprising:
a vehicle body frame (4) which leans rightward in a vehicle left-right direction when turning right and leans leftward in the vehicle left-right direction when turning left;
a seat (10) supported by the vehicle body frame (4);
a front wheel unit (2), which includes at least one front wheel, is supported by the vehicle body frame (4), and is provided at least partially forward of the seat (10) in a vehicle front-rear direction;
a rear wheel unit (3), which includes at least one rear wheel, is supported by the vehicle body frame (4), and is provided at least partially rearward of the seat (10) in the vehicle front-rear direction; and
an active driving assist device (20) configured to actively assist a driver,
the active driving assist device (20) including:
an acceleration controller (22) configured to control acceleration in a traveling direction by controlling rotation of at least one of the front wheel unit (2) or the rear wheel unit (3);
wherein the active driving assist device includes:
an oblique inter-vehicle distance detection unit (54) which is configured to detect an oblique inter-vehicle distance (D0, D4) which is the distance between the leaning vehicle (1) and an obliquely-neighboring vehicle (102) which (a) runs in a lane (100) in which the leaning vehicle (1) runs, (b) is remote from the leaning vehicle (1) in the vehicle left-right direction of the leaning vehicle (1), and (c) is arranged so that, in the vehicle front-rear direction of the leaning vehicle (1), either a front end of the obliquely-neighboring vehicle (102) is forward of a front end of the leaning vehicle (1) and a trailing end of the obliquely-neighboring vehicle (102) is forward of a trailing end of the leaning vehicle (1) or the front end of the obliquely-neighboring vehicle (102) is rearward of the front end of the leaning vehicle (1) and the trailing end of the obliquely-neighboring vehicle (102) is rearward of the trailing end of the leaning vehicle (1); and
an active driving assist control unit (60) configured to actively assist the driver by controlling the acceleration controller (22) in accordance with the oblique inter-vehicle distance (D0, D4) detected by the oblique inter-vehicle distance detection unit (54) while arranging jerk in a traveling direction to be smaller than a maximum value of jerk generatable by the acceleration controller (22) and to be larger than a minimum value of the jerk generatable by the acceleration controller (22), the active driving assist control unit (60) being configured to actively assist the driver by controlling the acceleration controller (22) in such a way that, when the acceleration controller (22) is controlled so that speed in the traveling direction is changed in accordance with the oblique inter-vehicle distance (D0, D4) detected by the oblique inter-vehicle distance detection unit (54), relationship between speed and elapsed time is non-linear at an early stage of speed change.

2. The leaning vehicle (1) according to claim 1, wherein,
the oblique inter-vehicle distance detection unit (54) is configured to detect an obliquely-forward inter-vehicle distance (D1) which is the distance between the leaning vehicle (1) and an obliquely-forward-neighboring vehicle (103) which (a) runs in the lane (100) in which the leaning vehicle (1) runs, (b) is remote from the leaning vehicle (1) in the vehicle left-right direction of the leaning vehicle (1), and (c-1) is arranged so that, in the vehicle front-rear direction of the leaning vehicle (1), a front end of the obliquely-forward-neighboring vehicle (103) is forward of the front end of the leaning vehicle (1) and a trailing end of the obliquely-forward-neighboring vehicle (103) is forward of the trailing end of the leaning vehicle (1), and
the active driving assist control unit (60) is configured to actively assist the driver by controlling the acceleration controller (22) in accordance with the obliquely-forward inter-vehicle distance (D1) detected by the oblique inter-vehicle distance detection unit (54).

3. The leaning vehicle (1) according to claim 2, wherein,
the active driving assist device (20) includes a forward inter-vehicle distance detection unit (56) which is configured to detect a forward inter-vehicle distance (D2) which is the distance between the leaning vehicle (1) and a preceding vehicle (104) which (d) runs in the lane (100) in which the leaning vehicle (1) runs, (e) has a trailing end which is forward of the trailing end of the obliquely-forward-neighboring vehicle (103) in the vehicle front-rear direction of the leaning vehicle (1), and (f) is at least partially overlapped with the leaning vehicle (1) when viewed in the vehicle front-rear direction of the leaning vehicle (1), and
the active driving assist control unit (60) is configured to actively assist the driver by controlling the acceleration controller (22) in accordance with the forward inter-vehicle distance (D2) detected by the forward inter-vehicle distance detection unit (56) and the obliquely-forward inter-vehicle distance (D1) detected by the oblique inter-vehicle distance detection unit (54).

4. The leaning vehicle (1) according to any one of claims 1 to 3, wherein, the active driving assist device (20) includes an obliquely-neighboring vehicle information detection unit (55) configured to detect the width of the obliquely-neighboring vehicle (102) in a left-right direction of the lane (100), the vehicle left-right direction of the leaning vehicle (1), or the vehicle left-right direction of the obliquely-neighboring vehicle (102), and
the active driving assist control unit (60) is configured to actively assist the driver by controlling the acceleration controller (22) based on the width of the obliquely-neighboring vehicle (102) in the left-right direction of the lane (100) or the vehicle left-right direction of the leaning vehicle (1), which is detected by the obliquely-neighboring vehicle information detection unit (55), and further based on the oblique inter-vehicle distance (D0, D4) detected by the oblique inter-vehicle distance detection unit (54).

5. The leaning vehicle (1) according to claim 3, wherein, the active driving assist device (20) includes
a preceding vehicle information detection unit (57) which is configured to detect the width (w2) of the preceding vehicle (104) in a left-right direction of the lane (100) or the vehicle left-right direction of the leaning vehicle (1), and
the active driving assist control unit (60) is configured to actively assist the driver by controlling the acceleration controller (22) based on the width (w2) of the preceding vehicle (104) in the left-right direction of the lane (100) or the vehicle left-right direction of the leaning vehicle (1), which is detected by the preceding vehicle information detection unit (57), the forward inter-vehicle distance (D2) detected by the forward inter-vehicle distance detection unit (56), and the obliquely-forward inter-vehicle distance (D1) detected by the oblique inter-vehicle distance detection unit (54).

6. The leaning vehicle (1) according to any one of claims 1 to 5, wherein,
the active driving assist device (20) includes a speed-related information detection unit (36, 37, 38, 39) configured to detect at least one of sets of information, the sets of information being:
a speed of the leaning vehicle (1) in the traveling direction;
an acceleration of the leaning vehicle (1) in the traveling direction;
a speed of the leaning vehicle (1) in the vehicle front-rear direction;
an acceleration of the leaning vehicle (1) in the vehicle front-rear direction;
a speed of the leaning vehicle (1) in the vehicle left-right direction; and
an acceleration of the leaning vehicle (1) in the vehicle left-right direction, and
the active driving assist control unit (60) is configured to actively assist the driver by controlling the acceleration controller (22) based on at least one of the sets of information detected by the speed-related information detection unit (36, 37, 38, 39) of the leaning vehicle (1) and the oblique inter-vehicle distance (D0, D4) detected by the oblique inter-vehicle distance detection unit (54).

7. The leaning vehicle (1) according to any one of claims 1 to 6, wherein, the active driving assist device (20) includes a leaning detection unit (40) which is configured to detect at least one of sets of information, the sets of information being a tilt angle, a tilt angular speed, and a tilt angular acceleration of leaning of the vehicle body frame (4) of the leaning vehicle (1) in the vehicle left-right direction, and
the active driving assist control unit (60) is configured to actively assist the driver by controlling the acceleration controller (22) based on at least one of the set of the information which are the tilt angle, the tilt angular speed, and the tilt angular acceleration of the vehicle body frame (4) of the leaning vehicle (1) detected by the leaning detection unit (40), and further based on the oblique inter-vehicle distance detected by the oblique inter-vehicle distance detection unit (54).

8. The leaning vehicle (1) according to any one of claims 1 to 7, wherein, the active driving assist device (20) includes an obliquely-neighboring vehicle information detection unit (55) configured to detect at least one of sets of information, the sets of information being:
a speed of the obliquely-neighboring vehicle (102) in the vehicle front-rear direction of the leaning vehicle (1) or a traveling direction of the leaning vehicle (1);
a relative speed of the obliquely-neighboring vehicle (102) relative to the leaning vehicle (1) in the vehicle front-rear direction of the leaning vehicle (1) or the traveling direction of the leaning vehicle (1);
an acceleration of the obliquely-neighboring vehicle (102) in the vehicle front-rear direction of the leaning vehicle (1) or a traveling direction of the leaning vehicle (1);
a relative acceleration of the obliquely-neighboring vehicle (102) relative to the leaning vehicle (1) in the vehicle front-rear direction of the leaning vehicle (1) or the traveling direction of the leaning vehicle (1);
a speed of the obliquely-neighboring vehicle (102) in the vehicle left-right direction of the leaning vehicle (1) or a direction orthogonal to the traveling direction of the leaning vehicle (1);
a relative speed of the obliquely-neighboring vehicle (102) relative to the leaning vehicle (1) in the vehicle left-right direction of the leaning vehicle (1) or the direction orthogonal to the traveling direction of the leaning vehicle (1);
an acceleration of the obliquely-neighboring vehicle (102) in the vehicle left-right direction of the leaning vehicle (1) or the direction orthogonal to the traveling direction of the leaning vehicle (1);
a relative acceleration of the obliquely-neighboring vehicle (102) relative to the leaning vehicle (1) in the vehicle left-right direction of the leaning vehicle (1) or the direction orthogonal to the traveling direction of the leaning vehicle (1);
a tilt angle in an up-down direction relative to the obliquely-neighboring vehicle (102);
a tilt angular speed of leaning relative to the up-down direction of the obliquely-neighboring vehicle (102); and
a tilt angular acceleration of leaning relative to the up-down direction of the obliquely-neighboring vehicle (102), and
the active driving assist control unit (60) is configured to actively assist the driver by controlling the acceleration controller (22) based on the at least one set of information detected by the obliquely-neighboring vehicle information detection unit (55) and the oblique inter-vehicle distance detected by the oblique inter-vehicle distance detection unit (54).

9. The leaning vehicle (1) according to any one of claims 1 to 8, wherein, the active driving assist device (20) includes an in-lane left-right position information acquisition unit (52) configured to obtain information of a position of the leaning vehicle (1) in the lane (100) in the left-right direction of the lane (100), and
the active driving assist control unit (60) is configured to actively assist the driver by controlling the acceleration controller (22) based on the information of the position of the leaning vehicle (1) in the lane (100) in the left-right direction of the lane (100), which is obtained by the in-lane left-right position information acquisition unit (52), and further based on the oblique inter-vehicle distance detected by the oblique inter-vehicle distance detection unit (54).

10. The leaning vehicle (1) according to any one of claims 1 to 9, wherein, the active driving assist device (20) includes an obliquely-neighboring vehicle information detection unit (55) configured to detect a position of the obliquely-neighboring vehicle (102) in the lane (100) in the left-right direction of the lane (100), and
the active driving assist control unit (60) is configured to actively assist the driver by controlling the acceleration controller (22) based on the position of the obliquely-neighboring vehicle (102) in the lane (100) in which the obliquely-neighboring vehicle (102) runs, in the left-right direction of the lane (100), the position being detected by the obliquely-neighboring vehicle information detection unit (55), and further based on the oblique inter-vehicle distance detected by the oblique inter-vehicle distance detection unit (54).

11. The leaning vehicle (1) according to any one of claims 1 to 10, wherein, the active driving assist device (20) includes a lane information detection unit (59) configured to detect lane information related to the lane (100), and
the active driving assist control unit (60) is configured to actively assist the driver by controlling the acceleration controller (22) based on the lane information detected by the lane information detection unit (59) and the oblique inter-vehicle distance detected by the oblique inter-vehicle distance detection unit (54).

12. The leaning vehicle (1) according to claim 11, wherein, the lane information detection unit (59) is configured to detect at least one of sets of information, the sets of information being:
a width (W) of the lane (100) in the left-right direction of the lane (100) or the vehicle left-right direction of the leaning vehicle (1);
a direction of vehicle flow of a lane (100) which is to the left of the lane (100) in which the leaning vehicle (1) runs; and
a vehicle traveling direction of a lane (100) which is to the right of the lane (100) in which the leaning vehicle (1) runs, and
the active driving assist control unit (60) is configured to actively assist the driver by controlling the acceleration controller (22) based on at least one of the sets of information detected by the lane information detection unit (59) and the oblique inter-vehicle distance detected by the oblique inter-vehicle distance detection unit (54).

13. The leaning vehicle (1) according to any one of claims 2, 3, and 5, wherein,
the active driving assist device (20) includes a neighboring lane inter-vehicle distance detection unit (58) which is configured to detect a neighboring lane inter-vehicle distance (D3) which is the distance between the leaning vehicle (1) and a neighboring lane vehicle (105) which runs in a lane (101) neighboring the lane (100) in which the leaning vehicle (1) runs, and runs at a position forward of the leaning vehicle (1) in the vehicle front-rear direction of the leaning vehicle (1), and
the active driving assist control unit (60) is configured to actively assist the driver by controlling the acceleration controller (22) in accordance with the neighboring lane inter-vehicle distance (D3) detected by the neighboring lane inter-vehicle distance detection unit (58) and the obliquely-forward inter-vehicle distance (D1) detected by the oblique inter-vehicle distance detection unit (54).

14. The leaning vehicle (1) according to any one of claims 2, 3, 5, and 13, wherein, the active driving assist control unit (60) is configured to actively assist the driver by controlling the acceleration controller (22) based on the obliquely-forward inter-vehicle distance (D1) detected by the oblique inter-vehicle distance detection unit (54) so that the obliquely-forward inter-vehicle distance (D1) is maintained at a predetermined target distance.

15. The leaning vehicle (1) according to claim 3 or 5, wherein, the active driving assist control unit (60) is configured to actively assist the driver by controlling the acceleration controller (22) based on the obliquely-forward inter-vehicle distance (D1) detected by the oblique inter-vehicle distance detection unit (54) and the forward inter-vehicle distance (D2) detected by the forward inter-vehicle distance detection unit (56) so that the obliquely-forward inter-vehicle distance (D1) is maintained at a predetermined target distance and the forward inter-vehicle distance (D2) is equal to or longer than a predetermined limit distance.

## Patentansprüche

1. Ein sich neigendes Fahrzeug (1), das folgende Merkmale aufweist:
einen Fahrzeugkarosserierahmen (4), der sich beim Rechtsabbiegen in einer Fahrzeug-Links-Rechts-Richtung nach rechts neigt und sich beim Linksabbiegen in der Fahrzeug-Links-Rechts-Richtung nach links neigt;
einen Sitz (10), der durch den Fahrzeugkarosserierahmen (4) getragen wird;
eine Vorderradeinheit (2), die zumindest ein Vorderrad umfasst, durch den Fahrzeugkarosserierahmen (4) getragen wird und in einer Fahrzeug-Vorne-Hinten-Richtung zumindest teilweise vor dem Sitz (10) vorgesehen ist;
eine Hinterradeinheit (3), die zumindest ein Hinterrad umfasst, durch den Fahrzeugkarosserierahmen (4) getragen wird und in der Fahrzeug-Vorne-Hinten-Richtung zumindest teilweise hinter dem Sitz (10) vorgesehen ist; und
eine aktive Fahrassistenzvorrichtung (20), die dazu konfiguriert ist, einen Fahrer aktiv zu unterstützen,
wobei die aktive Fahrassistenzvorrichtung (20) folgende Merkmale umfasst:
eine Beschleunigungssteuerung (22), die dazu konfiguriert ist, eine Beschleunigung in einer Fahrtrichtung zu steuern, indem sie die Drehung zumindest entweder der Vorderradeinheit (2) und/oder der Hinterradeinheit (3) steuert;
wobei die aktive Fahrassistenzvorrichtung folgende Merkmale umfasst:
eine Einheit zur Erfassung eines schrägen Abstands zwischen Fahrzeugen (54), die dazu konfiguriert ist, einen schrägen Abstand zwischen Fahrzeugen (D0, D4) zu erfassen, der der Abstand zwischen dem sich neigenden Fahrzeug (1) und einem schräg benachbarten Fahrzeug (102) ist, das (a) in einer Spur (100) fährt, in der das sich neigende Fahrzeug (1) fährt, (b) in der Fahrzeug-Links-Rechts-Richtung des sich neigenden Fahrzeugs (1) von dem sich neigenden Fahrzeug (1) entfernt ist, und (c) so angeordnet ist, dass in der Fahrzeug-Vorne-Hinten-Richtung des sich neigenden Fahrzeugs (1) entweder ein vorderes Ende des schräg benachbarten Fahrzeugs (102) weiter vorne ist als ein vorderes Ende des sich neigenden Fahrzeugs (1) und ein hinteres Ende des schräg benachbarten Fahrzeugs (102) weiter vorne ist als ein hinteres Ende des sich neigenden Fahrzeugs (1) oder das vordere Ende des schräg benachbarten Fahrzeugs (102) weiter hinten ist als das vordere Ende des sich neigenden Fahrzeugs (1) und das hintere Ende des schräg benachbarten Fahrzeugs (102) weiter hinten ist als das hintere Ende des sich neigenden Fahrzeugs (1); und
eine aktive Fahrassistenzsteuereinheit (60), die dazu konfiguriert ist, den Fahrer aktiv zu unterstützen, indem sie die Beschleunigungssteuerung (22) gemäß dem durch die Einheit zur Erfassung eines schrägen Abstands zwischen Fahrzeugen (54) erfassten schrägen Abstand zwischen Fahrzeugen (D0, D4) steuert, während sie dafür sorgt, dass eine ruckweise Bewegung in einer Fahrtrichtung kleiner ist als ein Maximalwert einer ruckweisen Bewegung, die durch die Beschleunigungssteuerung (22) erzeugt werden kann, und größer ist als ein Minimalwert der ruckweisen Bewegung, die durch die Beschleunigungssteuerung (22) erzeugt werden kann, wobei die aktive Fahrassistenzsteuereinheit (60) dazu konfiguriert ist, den Fahrer aktiv zu unterstützen, indem sie die Beschleunigungssteuerung (22) derart steuert, dass dann, wenn die Beschleunigungssteuerung (22) so gesteuert wird, dass die Geschwindigkeit in der Fahrtrichtung gemäß dem durch die Einheit zur Erfassung eines schrägen Abstands zwischen Fahrzeugen (54) erfassten schrägen Abstand zwischen Fahrzeugen (D0, D4) geändert wird, die Beziehung zwischen der Geschwindigkeit und der verstrichenen Zeit in einer frühen Stufe des Geschwindigkeitswechsels nicht-linear ist.

2. Das sich neigende Fahrzeug (1) gemäß Anspruch 1, bei dem
die Einheit zur Erfassung eines schrägen Abstands zwischen Fahrzeugen (54) dazu konfiguriert ist, einen Schräg-Vorne-Abstand zwischen Fahrzeugen (D1) zu erfassen, der der Abstand zwischen dem sich neigenden Fahrzeug (1) und einem schräg nach vorne benachbarten Fahrzeug (103) ist, das (a) in der Spur (100) fährt, in der das sich neigende Fahrzeug (1) fährt, (b) in der Fahrzeug-Links-Rechts-Richtung des sich neigenden Fahrzeugs (1) von dem sich neigenden Fahrzeug (1) entfernt ist, und (c-1) so angeordnet ist, dass in der Fahrzeug-Vorne-Hinten-Richtung des sich neigenden Fahrzeugs (1) ein vorderes Ende des schräg nach vorne benachbarten Fahrzeugs (103) weiter vorne ist als das vordere Ende des sich neigenden Fahrzeugs (1) und ein hinteres Ende des schräg nach vorne benachbarten Fahrzeugs (103) weiter vorne ist als das hintere Ende des sich neigenden Fahrzeugs (1), und
die aktive Fahrassistenzsteuereinheit (60) dazu konfiguriert ist, den Fahrer aktiv zu unterstützen, indem sie die Beschleunigungssteuerung (22) gemäß dem durch die Einheit zur Erfassung eines schrägen Abstands zwischen Fahrzeugen (54) erfassten Schräg-Vorne-Abstand zwischen den Fahrzeugen (D1) steuert.

3. Das sich neigende Fahrzeug (1) gemäß Anspruch 2, bei dem
die aktive Fahrassistenzvorrichtung (20) eine Einheit zur Erfassung eines Vorwärtsabstands zwischen Fahrzeugen (56) umfasst, die dazu konfiguriert ist, einen Vorwärtsabstand zwischen Fahrzeugen (D2) zu erfassen, der der Abstand zwischen dem sich neigenden Fahrzeug (1) und einem vorausfahrenden Fahrzeug (104) ist, das (d) in der Spur (100) fährt, in der das sich neigende Fahrzeug (1) fährt, (e) ein hinteres Ende aufweist, das sich in der Fahrzeug-Vorne-Hinten-Richtung des sich neigenden Fahrzeugs (1) vor dem hinteren Ende des schräg nach vorne benachbarten Fahrzeugs (103) befindet und (f) sich in der Perspektive der Fahrzeug-Vorne-Hinten-Richtung des sich neigenden Fahrzeugs (1) zumindest teilweise mit dem sich neigenden Fahrzeug (1) überlappt, und
die aktive Fahrassistenzsteuereinheit (60) dazu konfiguriert ist, den Fahrer aktiv zu unterstützen, indem sie die Beschleunigungssteuerung (22) gemäß dem durch die Einheit zur Erfassung eines Vorwärtsabstands zwischen Fahrzeugen (56) erfassten Vorwärtsabstand zwischen Fahrzeugen (D2) und dem durch die Einheit zur Erfassung eines schrägen Abstands zwischen Fahrzeugen (54) erfassten Schräg-Vorne-Abstand zwischen Fahrzeugen (D1) steuert.

4. Das sich neigende Fahrzeug (1) gemäß einem der Ansprüche 1 bis 3, bei dem die aktive Fahrassistenzvorrichtung (20) eine Einheit zur Erfassung von Informationen über ein schräg benachbartes Fahrzeug (55) umfasst, die dazu konfiguriert ist, die Breite des schräg benachbarten Fahrzeugs (102) in einer Links-Rechts-Richtung der Spur (100), der Fahrzeug-Links-Rechts-Richtung des sich neigenden Fahrzeugs (1) oder der Fahrzeug-Links-Rechts-Richtung des schräg benachbarten Fahrzeugs (102) zu erfassen, und
die aktive Fahrassistenzsteuereinheit (60) dazu konfiguriert ist, den Fahrer aktiv zu unterstützen, indem sie die Beschleunigungssteuerung (22) auf der Basis der Breite des schräg benachbarten Fahrzeugs (102) in der Links-Rechts-Richtung der Spur (100) oder der Fahrzeug-Links-Rechts-Richtung des sich neigenden Fahrzeugs (1), die durch die Einheit zur Erfassung von Informationen über ein schräg benachbartes Fahrzeug (55) erfasst wird, und ferner auf der Basis des durch die Einheit zur Erfassung eines schrägen Abstands zwischen Fahrzeugen (54) erfassten schrägen Abstands zwischen Fahrzeugen (D0, D4) steuert.

5. Das sich neigende Fahrzeug (1) gemäß Anspruch 3, bei dem die aktive Fahrassistenzvorrichtung (20) folgende Merkmale umfasst:
eine Einheit zur Erfassung von Informationen bezüglich eines vorausfahrenden Fahrzeugs (57), die dazu konfiguriert ist, die Breite (w2) des vorausfahrenden Fahrzeugs (104) in einer Links-Rechts-Richtung der Spur (100) oder der Fahrzeug-Links-Rechts-Richtung des sich neigenden Fahrzeugs (1) zu erfassen, und
die aktive Fahrassistenzsteuereinheit (60) dazu konfiguriert ist, den Fahrer aktiv zu unterstützen, indem sie die Beschleunigungssteuerung (22) auf der Basis der Breite (w2) des vorausfahrenden Fahrzeugs (104) in der Links-Rechts-Richtung der Spur (100) oder der Fahrzeug-Links-Rechts-Richtung des sich neigenden Fahrzeugs (1), die durch die Einheit zur Erfassung von Informationen bezüglich eines vorausfahrenden Fahrzeugs (57) erfasst wird, des durch die Einheit zur Erfassung eines Vorwärtsabstands zwischen Fahrzeugen (56) erfassten Vorwärtsabstands zwischen Fahrzeugen (D2) und des durch die Einheit zur Erfassung eines schrägen Abstands zwischen Fahrzeugen (54) erfassten Schräg-Vorne-Abstands zwischen Fahrzeugen (D1) steuert.

6. Das sich neigende Fahrzeug (1) gemäß einem der Ansprüche 1 bis 5, bei dem
die aktive Fahrassistenzvorrichtung (20) eine Einheit zur Erfassung geschwindigkeitsbezogener Informationen (36, 37, 38, 39) umfasst, die dazu konfiguriert ist, zumindest eine von Gruppen von Informationen zu erfassen, wobei die Gruppen von Informationen Folgende sind:
eine Geschwindigkeit des sich neigenden Fahrzeugs (1) in der Fahrtrichtung;
eine Beschleunigung des sich neigenden Fahrzeugs (1) in der Fahrtrichtung;
eine Geschwindigkeit des sich neigenden Fahrzeugs (1) in der Fahrzeug-Vorne-Hinten-Richtung;
eine Beschleunigung des sich neigenden Fahrzeugs in der Fahrzeug-Vorne-Hinten-Richtung;
eine Geschwindigkeit des sich neigenden Fahrzeugs (1) in der Fahrzeug-Links-Rechts-Richtung; und
eine Beschleunigung des sich neigenden Fahrzeugs (1) in der Fahrzeug-Links-Rechts-Richtung, und
die aktive Fahrassistenzsteuereinheit (60) dazu konfiguriert ist, den Fahrer aktiv zu unterstützen, indem sie die Beschleunigungssteuerung (22) auf der Basis zumindest einer der durch die Einheit zur Erfassung geschwindigkeitsbezogener Informationen (36, 37, 38, 39) des sich neigenden Fahrzeugs (1) erfassten Gruppen von Informationen und des durch die Einheit zur Erfassung eines schrägen Abstands zwischen Fahrzeugen (54) erfassten schrägen Abstands zwischen Fahrzeugen (D0, D4) steuert.

7. Das sich neigende Fahrzeug (1) gemäß einem der Ansprüche 1 bis 6, bei dem die aktive Fahrassistenzvorrichtung (20) eine Neigungserfassungseinheit (40) umfasst, die dazu konfiguriert ist, zumindest eine von Gruppen von Informationen zu erfassen, wobei die Gruppen von Informationen ein Neigungswinkel, eine Neigungswinkelgeschwindigkeit und eine Neigungswinkelbeschleunigung der Neigung des Fahrzeugkarosserierahmens (4) des sich neigenden Fahrzeugs (1) in der Fahrzeug-Links-Rechts-Richtung sind, und
die aktive Fahrassistenzsteuereinheit (60) dazu konfiguriert ist, den Fahrer aktiv zu unterstützen, indem sie die Beschleunigungssteuerung (22) auf der Basis zumindest einer der Gruppe der Informationen, die der Neigungswinkel, die Neigungswinkelgeschwindigkeit und die Neigungswinkelbeschleunigung des Fahrzeugkarosserierahmens (4) des sich neigenden Fahrzeugs (1) sind, die durch die Neigungserfassungseinheit (40) erfasst werden, und ferner auf der Basis des durch die Einheit zur Erfassung eines schrägen Abstands zwischen Fahrzeugen (54) erfassten schrägen Abstands zwischen Fahrzeugen steuert.

8. Das sich neigende Fahrzeug (1) gemäß einem der Ansprüche 1 bis 7, bei dem die aktive Fahrassistenzvorrichtung (20) eine Einheit zur Erfassung von Informationen über ein schräg benachbartes Fahrzeug (55) umfasst, die dazu konfiguriert ist, zumindest eine von Gruppen von Informationen zu erfassen, wobei die Gruppen von Informationen Folgende sind:
eine Geschwindigkeit des schräg benachbarten Fahrzeugs (102) in der Fahrzeug-Vorne-Hinten-Richtung des sich neigenden Fahrzeugs (1) oder einer Fahrtrichtung des sich neigenden Fahrzeugs (1);
eine relative Geschwindigkeit des schräg benachbarten Fahrzeugs (102) relativ zu dem sich neigenden Fahrzeug (1) in der Fahrzeug-Vorne-Hinten-Richtung des sich neigenden Fahrzeugs (1) oder der Fahrtrichtung des sich neigenden Fahrzeugs (1);
eine Beschleunigung des schräg benachbarten Fahrzeugs (102) in der Fahrzeug-Vorne-Hinten-Richtung des sich neigenden Fahrzeugs (1) oder einer Fahrtrichtung des sich neigenden Fahrzeugs (1);
eine relative Beschleunigung des schräg benachbarten Fahrzeugs (102) relativ zu dem sich neigenden Fahrzeug (1) in der Fahrzeug-Vorne-Hinten-Richtung des sich neigenden Fahrzeugs (1) oder der Fahrtrichtung des sich neigenden Fahrzeugs (1);
eine Geschwindigkeit des schräg benachbarten Fahrzeugs (102) in der Fahrzeug-Links-Rechts-Richtung des sich neigenden Fahrzeugs (1) oder einer Richtung, die zu der Fahrtrichtung des sich neigenden Fahrzeugs (1) orthogonal ist;
eine relative Geschwindigkeit des schräg benachbarten Fahrzeugs (102) relativ zu dem sich neigenden Fahrzeug (1) in der Fahrzeug-Links-Rechts-Richtung des sich neigenden Fahrzeugs (1) oder der Richtung, die zu der Fahrtrichtung des sich neigenden Fahrzeugs (1) orthogonal ist;
eine Beschleunigung des schräg benachbarten Fahrzeugs (102) in der Fahrzeug-Links-Rechts-Richtung des sich neigenden Fahrzeugs (1) oder der Richtung, die zu der Fahrtrichtung des sich neigenden Fahrzeugs (1) orthogonal ist;
eine relative Beschleunigung des schräg benachbarten Fahrzeugs (102) relativ zu dem sich neigenden Fahrzeug (1) in der Fahrzeug-Links-Rechts-Richtung des sich neigenden Fahrzeugs (1) oder der Richtung, die zu der Fahrtrichtung des sich neigenden Fahrzeugs (1) orthogonal ist;
ein Neigungswinkel in einer Aufwärts-Abwärts-Richtung relativ zu dem schräg benachbarten Fahrzeug (102);
eine Neigungswinkelgeschwindigkeit der Neigung relativ zu der Aufwärts-Abwärts-Richtung des schräg benachbarten Fahrzeugs (102); und
eine Neigungswinkelbeschleunigung der Neigung relativ zu der Aufwärts-Abwärts-Richtung des schräg benachbarten Fahrzeugs (102), und
die aktive Fahrassistenzsteuereinheit (60) ist dazu konfiguriert, den Fahrer aktiv zu unterstützen, indem sie die Beschleunigungssteuerung (22) auf der Basis der zumindest einen Gruppe von Informationen, die durch die Einheit zur Erfassung von Informationen über ein schräg benachbartes Fahrzeug (55) erfasst wird, und des durch die Einheit zur Erfassung eines schrägen Abstands zwischen Fahrzeugen (54) erfassten schrägen Abstands zwischen Fahrzeugen steuert.

9. Das sich neigende Fahrzeug (1) gemäß einem der Ansprüche 1 bis 8, bei dem die aktive Fahrassistenzvorrichtung (20) eine Einheit zur Gewinnung von Links-Rechts-Positionsinformationen innerhalb einer Spur (52) umfasst, die dazu konfiguriert ist, Informationen einer Position des sich neigenden Fahrzeugs (1) innerhalb der Spur (100) in der Links-Rechts-Richtung der Spur (100) zu erhalten, und die aktive Fahrassistenzsteuereinheit (60) dazu konfiguriert ist, den Fahrer aktiv zu unterstützen, indem sie die Beschleunigungssteuerung (22) auf der Basis der Informationen der Position des sich neigenden Fahrzeugs (1) in der Spur (100) in der Links-Rechts-Richtung der Spur (100), die durch die Einheit zur Gewinnung von Links-Rechts-Positionsinformationen innerhalb einer Spur (52) erhalten werden, und ferner auf der Basis des durch die Einheit zur Erfassung eines schrägen Abstands zwischen Fahrzeugen (54) erfassten schrägen Abstands zwischen Fahrzeugen steuert.

10. Das sich neigende Fahrzeug (1) gemäß einem der Ansprüche 1 bis 9, bei dem die aktive Fahrassistenzvorrichtung (20) eine Einheit zur Erfassung von Informationen über ein schräg benachbartes Fahrzeug (55) umfasst, die dazu konfiguriert ist, eine Position des schräg benachbarten Fahrzeugs (102) in der Spur (100) in der Links-Rechts-Richtung der Spur (100) zu erfassen, und
die aktive Fahrassistenzsteuereinheit (60) dazu konfiguriert ist, den Fahrer aktiv zu unterstützen, indem sie die Beschleunigungssteuerung (22) auf der Basis der Position des schräg benachbarten Fahrzeugs (102) in der Spur (100), in der das schräg benachbarte Fahrzeug (102) fährt, in der Links-Rechts-Richtung der Spur (100), wobei die Position durch die Einheit zur Erfassung von Informationen über ein schräg benachbartes Fahrzeug (55) erfasst wird, und ferner auf der Basis des durch die Einheit zur Erfassung eines schrägen Abstands zwischen Fahrzeugen (54) erfassten schrägen Abstands zwischen Fahrzeugen steuert.

11. Das sich neigende Fahrzeug (1) gemäß einem der Ansprüche 1 bis 10, bei dem die aktive Fahrassistenzvorrichtung (20) eine Spurinformationserfassungseinheit (59) umfasst, die dazu konfiguriert ist, auf die Spur (100) bezogene Spurinformationen zu erfassen, und
die aktive Fahrassistenzsteuereinheit (60) dazu konfiguriert ist, den Fahrer aktiv zu unterstützen, indem sie die Beschleunigungssteuerung (22) auf der Basis der durch die Spurinformationserfassungseinheit (59) erfassten Spurinformationen und des durch die Einheit zur Erfassung eines schrägen Abstands zwischen Fahrzeugen (54) erfassten schrägen Abstands zwischen Fahrzeugen steuert.

12. Das sich neigende Fahrzeug (1) gemäß Anspruch 11, bei dem die Spurinformationserfassungseinheit (59) dazu konfiguriert ist, zumindest eine von Gruppen von Informationen zu erfassen, wobei die Gruppen von Informationen Folgende sind:
eine Breite (W) der Spur (100) in der Links-Rechts-Richtung der Spur (100) oder der Fahrzeug-Links-Rechts-Richtung des sich neigenden Fahrzeugs (1);
eine Richtung eines Fahrzeugflusses einer Spur (100), die sich links von der Spur (100), auf der das sich neigende Fahrzeug (1) fährt, befindet; und
eine Fahrzeugfahrtrichtung einer Spur (100), die sich rechts von der Spur (100), auf der das sich neigende Fahrzeug (1) fährt, befindet, und
die aktive Fahrassistenzsteuereinheit (60) dazu konfiguriert ist, den Fahrer aktiv zu unterstützen, indem sie die Beschleunigungssteuerung (22) auf der Basis zumindest einer der durch die Spurinformationserfassungseinheit (59) erfassten Gruppen von Informationen und des durch die Einheit zur Erfassung eines schrägen Abstands zwischen Fahrzeugen (54) erfassten schrägen Abstands zwischen Fahrzeugen steuert.

13. Das sich neigende Fahrzeug (1) gemäß einem der Ansprüche 2, 3 und 5, bei dem
die aktive Fahrassistenzvorrichtung (20) eine Einheit zur Erfassung eines Abstands zwischen Nachbarspur-Fahrzeugen (58) umfasst, die dazu konfiguriert ist, einen Abstand zwischen Nachbarspur-Fahrzeugen (D3) zu erfassen, der der Abstand zwischen dem sich neigenden Fahrzeug (1) und einem Nachbarspurfahrzeug (105) ist, das in einer Spur (101) fährt, die zu der Spur (100), in der das sich neigende Fahrzeug (1) fährt, benachbart ist, und in einer Position fährt, die in der Fahrzeug-Vorne-Hinten-Richtung des sich neigenden Fahrzeugs (1) vor dem sich neigenden Fahrzeug (1) liegt, und
die aktive Fahrassistenzsteuereinheit (60) dazu konfiguriert ist, den Fahrer aktiv zu unterstützen, indem sie die Beschleunigungssteuerung (22) gemäß dem durch die Einheit zur Erfassung eines Abstands zwischen Nachbarspur-Fahrzeugen (58) erfassten Abstand zwischen Nachbarspur-Fahrzeugen (D3) und dem durch die Einheit zur Erfassung eines schrägen Abstands zwischen Fahrzeugen (54) erfassten Schräg-Vorne-Abstand zwischen Fahrzeugen (D1) steuert.

14. Das sich neigende Fahrzeug (1) gemäß einem der Ansprüche 2, 3, 5 und 13, bei dem die aktive Fahrassistenzsteuereinheit (60) dazu konfiguriert ist, den Fahrer aktiv zu unterstützen, indem sie die Beschleunigungssteuerung (22) auf der Basis des durch die Einheit zur Erfassung eines schrägen Abstands zwischen Fahrzeugen (54) erfassten Schräg-Vorne-Abstands zwischen Fahrzeugen (D1) steuert, so dass der Schräg-Vorne-Abstand zwischen Fahrzeugen (D1) auf einem vorbestimmten Sollabstand gehalten wird.

15. Das sich neigende Fahrzeug (1) gemäß Anspruch 3 oder 5, bei dem die aktive Fahrassistenzsteuereinheit (60) dazu konfiguriert ist, den Fahrer aktiv zu unterstützen, indem sie die Beschleunigungssteuerung (22) auf der Basis des durch die Einheit zur Erfassung eines schrägen Abstands zwischen Fahrzeugen (54) erfassten Schräg-Vorne-Abstands zwischen Fahrzeugen (D1) und des durch die Einheit zur Erfassung eines Vorwärtsabstands zwischen Fahrzeugen (56) erfassten Vorwärtsabstands zwischen Fahrzeugen (D2) steuert, so dass der Schräg-Vorne-Abstand zwischen Fahrzeugen (D1) auf einem vorbestimmten Sollabstand gehalten wird und der Vorwärtsabstand zwischen Fahrzeugen (D2) gleich einem oder länger als ein vorbestimmter Grenzabstand ist.

## Revendications

1. Véhicule à inclinaison (1), comprenant:
un châssis de carrosserie de véhicule (4) qui s'incline vers la droite dans une direction gauche-droite du véhicule lorsqu'il vire à droite, et s'incline vers la gauche dans la direction gauche-droite du véhicule lorsqu'il vire à gauche;
un siège (10) supporté par le châssis de carrosserie de véhicule (4);
une unité de roue avant (2) qui comporte au moins une roue avant, est supportée par le châssis de carrosserie de véhicule (4) et est prévue au moins partiellement en avant du siège (10) dans une direction avant-arrière du véhicule;
une unité de roue arrière (3) qui comporte au moins une roue arrière, est supportée par le châssis de carrosserie de véhicule (4) et est prévue au moins partiellement en arrière du siège (10) dans la direction avant-arrière du véhicule; et
un dispositif d'assistance à la conduite active (20) configuré pour assister activement un conducteur,
le dispositif d'assistance à la conduite active (20) comportant:
un régulateur d'accélération (22) configuré pour réguler l'accélération dans une direction de déplacement en régulant la rotation d'au moins l'une parmi l'unité de roue avant (2) ou l'unité de roue arrière (3);
dans lequel le dispositif d'assistance à la conduite active comporte:
une unité de détection de distance oblique entre véhicules (54) qui est configurée pour détecter une distance oblique entre véhicules (D0, D4) qui est la distance entre le véhicule à inclinaison (1) et un véhicule obliquement voisin (102) qui (a) roule sur une voie (100) sur laquelle roule le véhicule à inclinaison (1), (b) est éloigné du véhicule à inclinaison (1) dans la direction gauche-droite du véhicule à inclinaison (1), et (c) est disposé de sorte que, dans la direction avant-arrière du véhicule à inclinaison (1), soit une extrémité avant du véhicule obliquement voisin (102) se situe en avant d'une extrémité avant du véhicule à inclinaison (1) et une extrémité arrière du véhicule obliquement voisin (102) se situe en avant d'une extrémité arrière du véhicule à inclinaison (1), soit l'extrémité avant du véhicule obliquement voisin (102) se situe en arrière de l'extrémité avant du véhicule à inclinaison (1) et l'extrémité arrière du véhicule obliquement voisin (102) se situe en arrière de l'extrémité arrière du véhicule à inclinaison (1); et
une unité de commande d'assistance à la conduite active (60) configurée pour assister activement le conducteur en commandant le régulateur d'accélération (22) selon la distance oblique entre véhicules (D0, D4) détectée par l'unité de détection de distance oblique entre véhicules (54) tout en aménageant un mouvement brusque dans une direction de déplacement de manière à être inférieure à une valeur maximale de mouvement brusque pouvant être généré par le régulateur d'accélération (22) et à être supérieure à une valeur minimale de mouvement brusque pouvant être généré par le régulateur d'accélération (22), l'unité de commande d'assistance à la conduite active (60) étant configurée pour assister activement le conducteur en commandant le régulateur d'accélération (22) de sorte que, lorsque le régulateur d'accélération (22) est commandé de sorte que la vitesse dans la direction de déplacement soit modifiée selon la distance oblique entre véhicules (D0, D4) détectée par l'unité de détection de distance oblique entre véhicules (54), le rapport entre la vitesse et le temps écoulé ne soit pas linéaire à un stade précoce du changement de vitesse.

2. Véhicule à inclinaison (1) selon la revendication 1, dans lequel
l'unité de détection de distance oblique entre véhicules (54) est configurée pour détecter une distance obliquement en avant entre véhicules (D1) qui est la distance entre le véhicule à inclinaison (1) et un véhicule voisin obliquement en avant (103) qui (a) roule sur la voie (100) sur laquelle roule le véhicule à inclinaison (1), (b) est éloigné du véhicule à inclinaison (1) dans la direction gauche-droite du véhicule à inclinaison (1), et (c-1) est disposé de sorte que, dans la direction avant-arrière du véhicule à inclinaison (1), une extrémité avant du véhicule voisin obliquement en avant (103) se situe en avant de l'extrémité avant du véhicule à inclinaison (1) et une extrémité arrière du véhicule voisin obliquement en avant (103) se situe en avant de l'extrémité arrière du véhicule à inclinaison (1), et
l'unité de commande d'assistance à la conduite active (60) est configurée pour assister activement le conducteur en commandant le régulateur d'accélération (22) selon la distance obliquement en avant entre véhicules (D1) détectée par l'unité de détection de distance oblique entre véhicules (54).

3. Véhicule à inclinaison (1) selon la revendication 2, dans lequel
le dispositif d'assistance à la conduite active (20) comporte une unité de détection de distance en avant entre véhicules (56) qui est configurée pour détecter une distance en avant entre véhicules (D2) qui est la distance entre le véhicule à inclinaison (1) et un véhicule précédent (104) qui (d) roule sur la voie (100) sur laquelle roule le véhicule à inclinaison (1), (e) présente une extrémité arrière qui est en avant de l'extrémité arrière du véhicule voisin obliquement en avant (103) dans la direction avant-arrière du véhicule à inclinaison (1), et (f) est au moins partiellement en chevauchement avec le véhicule à inclinaison (1), vu dans la direction avant-arrière du véhicule à inclinaison (1), et
l'unité de commande d'assistance à la conduite active (60) est configurée pour assister activement le conducteur en commandant le régulateur d'accélération (22) selon la distance en avant entre véhicules (D2) détectée par l'unité de détection de distance en avant entre véhicules (56) et la distance obliquement en avant entre véhicules (D1) détectée par l'unité de détection de distance oblique entre véhicules (54).

4. Véhicule à inclinaison (1) selon l'une quelconque des revendications 1 à 3, dans lequel le dispositif d'assistance à la conduite active (20) comporte une unité de détection d'informations de véhicule obliquement voisin (55) configurée pour détecter la largeur du véhicule obliquement voisin (102) dans une direction gauche-droite de la voie (100), la direction gauche-droite du véhicule à inclinaison (1), ou la direction gauche-droite du véhicule obliquement voisin (102), et
l'unité de commande d'assistance à la conduite active (60) est configurée pour assister activement le conducteur en commandant le régulateur d'accélération (22) sur base de la largeur du véhicule obliquement voisin (102) dans la direction gauche-droite de la voie (100) ou la direction gauche-droite du véhicule à inclinaison (1) qui est détectée par l'unité de détection d'informations de véhicule obliquement voisin (55), et par ailleurs sur base de la distance oblique entre véhicules (D0, D4) détectée par l'unité de détection de distance oblique entre véhicules (54).

5. Véhicule à inclinaison (1) selon la revendication 3, dans lequel le dispositif d'assistance à la conduite active (20) comporte
une unité de détection d'informations sur le véhicule précédent (57) qui est configurée pour détecter la largeur (w2) du véhicule précédent (104) dans une direction gauche-droite de la voie (100) ou dans la direction gauche-droite du véhicule à inclinaison (1), et
l'unité de commande d'assistance à la conduite active (60) est configurée pour assister activement le conducteur en commandant le régulateur d'accélération (22) sur base de la largeur (w2) du véhicule précédent (104) dans la direction gauche-droite de la voie (100) ou la direction gauche-droite du véhicule à inclinaison (1) qui est détectée par l'unité de détection d'informations sur le véhicule précédent (57), de la distance en avant entre véhicules (D2) détectée par l'unité de détection de distance en avant entre véhicules (56), et la distance obliquement en avant entre véhicules (D1) détectée par l'unité de détection de distance oblique entre véhicules (54).

6. Véhicule à inclinaison (1) selon l'une quelconque des revendications 1 à 5, dans lequel
le dispositif d'assistance à la conduite active (20) comporte une unité de détection d'informations relatives à la vitesse (36, 37, 38, 39) configurée pour détecter au moins un parmi les ensembles d'informations, les ensembles d'informations étant:
une vitesse du véhicule à inclinaison (1) dans la direction de déplacement;
une accélération du véhicule à inclinaison (1) dans la direction de déplacement;
une vitesse du véhicule à inclinaison (1) dans la direction avant-arrière du véhicule;
une accélération du véhicule à inclinaison (1) dans la direction avant-arrière du véhicule;
une vitesse du véhicule à inclinaison (1) dans la direction gauche-droite du véhicule; et
une accélération du véhicule à inclinaison (1) dans la direction gauche-droite du véhicule, et
l'unité de commande d'assistance à la conduite active (60) est configurée pour assister activement le conducteur en commandant le régulateur d'accélération (22) sur base d'au moins l'un des ensembles d'informations détectés par l'unité de détection d'informations relatives à la vitesse (36, 37, 38, 39) du véhicule à inclinaison (1) et de la distance oblique entre véhicules (D0, D4) détectée par l'unité de détection de distance oblique entre véhicules (54).

7. Véhicule à inclinaison (1) selon l'une quelconque des revendications 1 à 6, dans lequel le dispositif d'assistance à la conduite active (20) comporte une unité de détection d'inclinaison (40) qui est configurée pour détecter au moins un des ensembles d'informations, les ensembles d'informations étant un angle d'inclinaison, une vitesse angulaire d'inclinaison et une accélération angulaire d'inclinaison de l'inclinaison du châssis de carrosserie de véhicule (4) du véhicule à inclinaison (1) dans la direction gauche-droite du véhicule, et
l'unité de commande d'assistance à la conduite active (60) est configurée pour assister activement le conducteur en commandant le régulateur d'accélération (22) sur base d'au moins une parmi l'ensemble des informations qui sont l'angle d'inclinaison, la vitesse angulaire d'inclinaison et l'accélération angulaire d'inclinaison du châssis de carrosserie de véhicule (4) du véhicule à inclinaison (1) détectée par l'unité de détection d'inclinaison (40), et par ailleurs sur base de la distance oblique entre véhicules détectée par l'unité de détection de distance oblique entre véhicules (54).

8. Véhicule à inclinaison (1) selon l'une quelconque des revendications 1 à 7, dans lequel le dispositif d'assistance à la conduite active (20) comporte une unité de détection d'informations de véhicule obliquement voisin (55) configurée pour détecter au moins un des ensembles d'informations, les ensembles d'informations étant:
une vitesse du véhicule obliquement voisin (102) dans la direction avant-arrière du véhicule à inclinaison (1) ou dans une direction de déplacement du véhicule à inclinaison (1);
une vitesse relative du véhicule obliquement voisin (102) par rapport au véhicule à inclinaison (1) dans la direction avant-arrière du véhicule à inclinaison (1) ou dans la direction de déplacement du véhicule à inclinaison (1);
une accélération du véhicule obliquement voisin (102) dans la direction avant-arrière du véhicule à inclinaison (1) ou dans une direction de déplacement du véhicule à inclinaison (1);
une accélération relative du véhicule obliquement voisin (102) par rapport au véhicule à inclinaison (1) dans la direction avant-arrière du véhicule à inclinaison (1) ou dans la direction de déplacement du véhicule à inclinaison (1);
une vitesse du véhicule obliquement voisin (102) dans la direction gauche-droite du véhicule à inclinaison (1) ou dans une direction orthogonale à la direction de déplacement du véhicule à inclinaison (1);
une vitesse relative du véhicule obliquement voisin (102) par rapport au véhicule à inclinaison (1) dans la direction gauche-droite du véhicule à inclinaison (1) ou dans la direction orthogonale à la direction de déplacement du véhicule à inclinaison (1);
une accélération du véhicule obliquement voisin (102) dans la direction gauche-droite du véhicule à inclinaison (1) ou dans la direction orthogonale à la direction de déplacement du véhicule à inclinaison (1);
une accélération relative du véhicule obliquement voisin (102) par rapport au véhicule à inclinaison (1) dans la direction gauche-droite du véhicule à inclinaison (1) ou dans la direction orthogonale à la direction de déplacement du véhicule à inclinaison (1);
un angle d'inclinaison dans une direction de haut en bas par rapport au véhicule obliquement voisin (102);
une vitesse angulaire d'inclinaison de l'inclinaison par rapport à la direction de haut en bas du véhicule obliquement voisin (102); et
une accélération angulaire d'inclinaison de l'inclinaison par rapport à la direction de haut en bas du véhicule obliquement voisin (102), et
l'unité de commande d'assistance à la conduite active (60) est configurée pour assister activement le conducteur en commandant le régulateur d'accélération (22) sur base de l'au moins un ensemble d'informations détecté par l'unité de détection d'informations sur le véhicule obliquement voisin (55) et de la distance oblique entre véhicules détectée par l'unité de détection de distance oblique entre véhicules (54).

9. Véhicule à inclinaison (1) selon l'une quelconque des revendications 1 à 8, dans lequel le dispositif d'assistance à la conduite active (20) comporte une unité d'acquisition d'informations de position gauche-droite sur la voie (52) configurée pour obtenir des informations d'une position du véhicule à inclinaison (1) sur la voie (100) dans la direction gauche-droite de la voie (100), et
l'unité de commande d'assistance à la conduite active (60) est configurée pour assister activement le conducteur en commandant le régulateur d'accélération (22) sur base des informations sur la position du véhicule à inclinaison (1) sur la voie (100) dans la direction gauche-droite de la voie (100) qui est obtenue par l'unité d'acquisition d'informations de position gauche-droite sur la voie (52), et par ailleurs sur base de la distance oblique entre véhicules détectée par l'unité de détection de distance oblique entre véhicules (54).

10. Véhicule à inclinaison (1) selon l'une quelconque des revendications 1 à 9, dans lequel le dispositif d'assistance à la conduite active (20) comporte une unité de détection d'informations de véhicule obliquement voisin (55) configurée pour détecter une position du véhicule obliquement voisin (102) sur la voie (100) dans la direction gauche-droite de la voie (100), et
l'unité de commande d'assistance à la conduite active (60) est configurée pour assister activement le conducteur en commandant le régulateur d'accélération (22) sur base de la position du véhicule obliquement voisin (102) sur la voie (100) sur laquelle roule le véhicule obliquement voisin (102) dans la direction gauche-droite de la voie (100), la position étant détectée par l'unité de détection d'informations de véhicule obliquement voisin (55), et par ailleurs sur base de la distance oblique entre véhicules détectée par l'unité de détection de distance oblique entre véhicules (54).

11. Véhicule à inclinaison (1) selon l'une quelconque des revendications 1 à 10, dans lequel le dispositif d'assistance à la conduite active (20) comporte une unité de détection d'informations de voie (59) configurée pour détecter les informations de voie relatives à la voie (100), et
l'unité de commande d'assistance à la conduite active (60) est configurée pour assister activement le conducteur en commandant le régulateur d'accélération (22) sur base des informations de voie détectées par l'unité de détection d'informations de voie (59) et de la distance oblique entre véhicules détectée par l'unité de détection de distance oblique entre véhicules (54).

12. Véhicule à inclinaison (1) selon la revendication 11, dans lequel l'unité de détection d'informations de voie (59) est configurée pour détecter au moins un des ensembles d'informations, les ensembles d'informations étant:
une largeur (W) de la voie (100) dans la direction gauche-droite de la voie (100) ou dans la direction gauche-droite du véhicule à inclinaison (1);
une direction de circulation de véhicule d'une voie (100) qui est à gauche de la voie (100) sur laquelle roule le véhicule à inclinaison (1); et
une direction de déplacement de véhicule d'une voie (100) qui se trouve à droite de la voie (100) sur laquelle roule le véhicule à inclinaison (1), et
l'unité de commande d'assistance à la conduite active (60) est configurée pour assister activement le conducteur en commandant le régulateur d'accélération (22) sur base d'au moins un des ensembles d'informations détectés par l'unité de détection d'informations de voie (59) et de la distance oblique entre véhicules détectée par l'unité de détection de distance oblique entre véhicules (54).

13. Véhicule à inclinaison (1) selon l'une quelconque des revendications 2, 3 et 5, dans lequel
le dispositif d'assistance à la conduite active (20) comporte une unité de détection de distance entre véhicules de voie voisine (58) qui est configurée pour détecter une distance entre véhicules de voie voisine (D3) qui est la distance entre le véhicule à inclinaison (1) et un véhicule de voie voisine (105) qui roule sur une voie (101) voisine de la voie (100) sur laquelle roule le véhicule à inclinaison (1), et roule à une position en avant du véhicule à inclinaison (1) dans la direction avant-arrière du véhicule à inclinaison (1), et
l'unité de commande d'assistance à la conduite active (60) est configurée pour assister activement le conducteur en commandant le régulateur d'accélération (22) selon la distance entre véhicules de voie voisine (D3) détectée par l'unité de détection de distance entre véhicules de voie voisine (58) et la distance obliquement en avant entre véhicules (D1) détectée par l'unité de détection de distance oblique entre véhicules (54).

14. Véhicule à inclinaison (1) selon l'une quelconque des revendications 2, 3, 5 et 13, dans lequel l'unité de commande d'assistance à la conduite active (60) est configurée pour assister activement le conducteur en commandant le régulateur d'accélération (22) sur base de la distance obliquement en avant entre véhicules (D1) détectée par l'unité de détection de distance oblique entre véhicules (54) de sorte que la distance obliquement en avant entre véhicules (D1) soit maintenue à une distance cible prédéterminée.

15. Véhicule à inclinaison (1) selon la revendication 3 ou 5, dans lequel l'unité de commande d'assistance à la conduite active (60) est configurée pour assister activement le conducteur en commandant le régulateur d'accélération (22) sur base de la distance obliquement en avant entre véhicules (D1) détectée par l'unité de détection de distance oblique entre véhicules (54) et de la distance en avant entre véhicules (D2) détectée par l'unité de détection de distance en avant entre véhicules (56) de sorte que la distance obliquement en avant entre véhicules (D1) soit maintenue à une distance cible prédéterminée et que la distance en avant entre véhicules (D2) soit égale ou supérieure à une distance limite prédéterminée.
